# EUROPEAN PATENT APPLICATION

(11) **EP 4 745 761 A1**
(43) Date of publication of application: **20.05.2026**
(21) Application number: 25212032.4
(22) Date of filing: 29.10.2025
(51) Int. Cl.: G06F 8/35, G06F 8/38, G06F 16/2452, G06F 16/3329, G06F 40/56

(54) **DECLARATIVE APPLICATION PROGRAMMING INTERFACE FOR TRANSLATING FORM LANGUAGE TO FUNCTIONAL LANGUAGE**

(30) Priority: 15.11.2024 US 202463721045 P; 24.02.2025 US 202519061734
(71) Applicant: Microsoft Technology Licensing, LLC, Redmond, WA 98052 (US)
(72) Inventor: Szyperski, Clemens A., Redmond, WA, 98052 (US); Panwar, Abhilash, Redmond, WA, 98052 (US); Sheu, John Te-Jui, Redmond, WA, 98052 (US); Zhao, Jianyu, Redmond, WA, 98052 (US)
(74) Representative: Grünecker Patent- und Rechtsanwälte PartG mbB

(57) **Abstract**

Techniques are directed to translating form language to functional language. In an aspect, a template instance is determined, the template instance comprising a grammar-based definition defining a portion of the template instance and an association between the portion of the template instance and a function of a service. A form question is provided to a client computing device, the form question corresponding to the grammar-based definition. A response is received from the client computing device. The response comprises a form language response and a form context corresponding to the grammar-based definition. The first natural language response is determined, based on the form context, to be translated in accordance with the association between the portion of the template instance and the function. The form language response is translated into a query expression, and execution of the query expression is caused.

## Description

### CROSS-REFERENCE TO RELATED APPLICATIONS

This application is claims benefit of and priority to U.S. Provisional Patent Application No. 63/721,045, filed on November 16, 2024, the entirety of which is incorporated by reference herein.

### BACKGROUND

Development applications enable developers to write computer programs and models. Using a development application, a developer writes program code in a functional language to develop the program or model. To do so, the developer must have knowledge of the functional language as well as knowledge regarding the data store with which the program or model interacts. For instance, a functional language can have a specific syntax or other limitation the program code is to follow in order to execute properly.

### SUMMARY

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter.

Embodiments described herein provide a declarative application programming interface (API) for translating form language into functional language. In an aspect, a template instance comprising a grammar-based definition defining a first portion of the template instance is provided. A first form question is caused to be presented in a user interface ("UI") of a client computing device. The first form question corresponds to the grammar-based definition. A first response is received from the client computing device. The first response comprises a first form response and a first form context. The first form context describes a relationship between the first form response and the first form question. The first form response is translated based at least on the first form context and the first portion of the template instance, resulting in a first query expression. The first query expression is caused to execute.

In an aspect, to determine the template instance, a plurality of template options are presented in the UI. A selection of a template option corresponding to the template instance is received from the client computing device.

In a further aspect, to determine the template instance, a request to generate a query expression is received from an application executing on the client computing device. The template instance is determined based at least on an application type of the application.

In a still further aspect, the first form question specifies a constraint based on the grammar-based definition. The first form question causes the UI to enforce the constraint on the first form response.

In a yet further aspect, the template comprises one or more steps, at least one of which comprises a first substep and a second substep. To translate the first form response, a first argument of the first substep and a second argument of the second substep are determined based at least on the first form response. A filled version of the first step is generated based on replacing placeholders in the template with the first and second arguments. The filled version of the template is translated based at least on a mapping specification that maps code patterns to the substeps, resulting in the first query expression.

Further features and advantages of the embodiments, as well as the structure and operation of various embodiments, are described in detail below with reference to the accompanying drawings. It is noted that the claimed subject matter is not limited to the specific embodiments described herein. Such embodiments are presented herein for illustrative purposes only. Additional embodiments will be apparent to persons skilled in the relevant art(s) based on the teachings contained herein.

### BRIEF DESCRIPTION OF THE DRAWINGS/FIGURES

The accompanying drawings, which are incorporated herein and form a part of the specification, illustrate embodiments and, together with the description, further serve to explain the principles of the embodiments and to enable a person skilled in the pertinent art to make and use the embodiments.
FIG. 1 shows a block diagram of system for providing a declarative API for translating form language into functional language, in accordance with an embodiment.
FIG. 2 shows a block diagram of the activator of FIG. 1, in accordance with an embodiment.
FIG. 3A shows a flowchart of a process for causing an action to execute based at least on a translation of form language into functional language, in accordance with an embodiment.
FIG. 3B shows a flowchart of a process for determining a template instance, in accordance with an embodiment.
FIG. 3C shows a flowchart of a process for determining a template instance, in accordance with another embodiment.
FIG. 4 shows a flowchart of a process for utilizing a query engine, in accordance with an embodiment.
FIG. 5 shows a flowchart of a process for monitoring a condition, in accordance with an embodiment.
FIG. 6 shows a flowchart of a process for translating a form response, in accordance with an embodiment.
FIG. 7 shows a flowchart of a process for translating multiple form responses, in accordance with an embodiment.
FIG. 8 shows a flowchart of a process for generating a second form based on a first form response, in accordance with an embodiment.
FIG. 9 shows a flowchart of a process for translating multiple responses into a single functional expression, in accordance with an embodiment.
FIG. 10 shows a flowchart of a process for translating multiple responses into respective functional expressions, in accordance with an embodiment.
FIG. 11A shows a flowchart of a process for translating based at least on a template, in accordance with an embodiment.
FIG. 11B shows an example recursive translation, in accordance with an embodiment.
FIG. 12 shows an example flowchart of a process for enforcing a constraint on a first form question, in accordance with an embodiment.
FIG. 13 shows an example UI, in accordance with an embodiment.
FIG. 14 shows an example UI, in accordance with another embodiment.
FIG. 15 shows an example UI, in accordance with another embodiment.
FIG. 16 shows a block diagram of an example computer system in which embodiments may be implemented.
The subject matter of the present application will now be described with reference to the accompanying drawings. In the drawings, like reference numbers indicate identical or functionally similar elements. Additionally, the left-most digit(s) of a reference number identifies the drawing in which the reference number first appears.

### DETAILED DESCRIPTION

### I. Introduction

The following detailed description discloses numerous example embodiments. The scope of the present patent application is not limited to the disclosed embodiments, but also encompasses combinations of the disclosed embodiments, as well as modifications to the disclosed embodiments. It is noted that any section/subsection headings provided herein are not intended to be limiting. Embodiments are described throughout this document, and any type of embodiment may be included under any section/subsection. Furthermore, embodiments disclosed in any section/subsection may be combined with any other embodiments described in the same section/subsection and/or a different section/subsection in any manner.

### II. Example Embodiments of Declarative Application Programming Interface

A development application may be utilized to write a computer program or model in a functional language. A functional language is a form of computer language where the program code is constructed of functions that take arguments (including other functions) as input and generate results. Examples of functional language include, but are not limited to, expressions of an expression graph, a query expression, programming code, and/or other language for causing a computing device to perform one or more functions. Using a development application to develop programs in this manner requires knowledge of the functional language (e.g., available functions, query syntax, available arguments, rules for execution, etc.) being used as well as knowledge of the configuration of the data store (e.g., database, data files, storage device, and/or the like) with which the program or model interacts. A lack of knowledge in these aspects can introduce roadblocks during development. For instance, in an implementation where an external application (e.g., an application programming interface (API) client service) acts as the developer by interfacing with the development application to develop the program or model, the external application would need to be able to identify functions of the functional language and adhere to syntax or other rules of the functional language in order to develop an operational program or model. Insufficient knowledge of the functional language can lead to errors in program/model development and/or function. Further still, insufficient knowledge in an underlining data store the program or model is to utilize can lead to incomplete data (e.g., due to missing data files or objects), erroneous data (e.g., due to referencing the wrong data file or object), syntax errors (e.g., due to not knowing the syntax of the underlying data store or object), and/or other errors in accessing and/or utilizing data.

Some techniques of such programming/modeling implement functional abstraction layers to aid in development. A functional abstraction layer comprises one or more APIs that implement functions while presenting a simplified interface. However, this functional abstraction layer requires the developer (user and/or external application) to be aware of the APIs available or to otherwise know how to pull a list of available APIs, which can increase network traffic and expend compute resources. Furthermore, the developer needs to know the arguments to pass to the API or will have to expend further compute resources to obtain this information.

Embodiments of the present disclosure are directed to activator systems that translate declarative language into functional language in a manner that overcomes these and other limitations of existing techniques. For instance, the activator system leverages a grammar-based framework that specifies grammar-based definitions defining templates corresponding to functions of a functional language. In this context, "grammar-based" refers to the structure and semantics of the functional language. For example, a grammar-based definition defines expressions and their variables (e.g., arguments of the expressions, types of the expressions, and/or other parameters) in a structure that conforms to the structure and semantics of the functional language. A grammar-based definition can define which keywords, operators, formats, and/or other rules are suitable for constructing a valid expression in the functional language. As described elsewhere herein, a grammar-based definition of the grammar-based framework can map variables to form questions or acceptable form language for determining values of the variables. A grammar-based definition can separate portions of an expression or function of the functional language into steps, substeps, and/or other components. An activator can traverse the portions with values of their respective variables to generate an expression in the functional language. The activator system causes a form question corresponding to a grammar-based definition of the grammar-based framework to be presented in an interface. The form question enables a user or service to provide form language responses without requiring the form language to be in a complete functional language. The activator system translates the form language into functional language based on a context of the form language (also referred to herein as a "form context") and utilizes the functional language in development of computer programs and/or models. In this manner, the activator system removes the requirement of the developer to know the syntax of the functional language used in development of the program, thereby simplifying the interface for the developing user or application. Furthermore, the activator system is able to diversify the types of applications or models that can be developed without requiring the developing user or application to learn a new syntax.

As stated above, an activator system or an activator presents forms via an interface (e.g., a user interface of a computing device associated with a user or to an external application through a communication interface between the external service and the activator system). A form is a structured or semi-structured response format a user or external service can interact with in order to input or otherwise provide responses to a development application. Examples of forms include but are not limited to a question prompt with an interactable object for providing a response (e.g., a free-form textbox, a dropdown menu, a set of multiple-choice selectable options, and/or the like), a set of question prompts with respective interactable objects for providing respective responses, and/or the like. Forms enable external services or developer users to provide the activator system with information related to the program to be developed without requiring the users or external services to have (e.g., complete) knowledge of the functional language of the program. Furthermore, as the activator generates a form question based on a grammar-based framework, the activator is able to track responses to the form questions and map them to templates associated with the grammar-based framework. By tracking and mapping in this manner, the activator is able to leverage the grammar-based framework in translating responses to the forms into functional language.

The activator receives responses to forms or questions of a form in "form language." The format of the form language can depend on the interface the form was presented in (e.g., selections of in a user interface or responses generated by an application). Examples of form languages include, but are not limited to, natural languages (e.g., typed language, natural language corresponding to a selection made in a user interface (UI), and/or the like), partial functional languages (e.g., a portion or snippet of code included with other natural language, a function selected from a list of functions, a mixture of typed natural language and functional language, and/or the like), numeric information (e.g., typed numbers or numbers corresponding to a selection made in a UI), a rule related to a question prompt (e.g., a snippet of code generated or selected in response to a question prompt, a rule selected from a list of rules, and/or the like), other types of responses in a form, form context, and/or the like.

In order to translate form language into functional language, the activator leverages the context of the one or more questions the form language was provided in response to (also referred to as "form context" herein). Form context is information that describes the circumstances that form the setting of a question and its corresponding response. Examples of form context include, but are not limited to, a type of question prompt of a form question (e.g., a free form question, a question to select from a dropdown menu, a question to select from among one or more options from among two or more multiple choices, a question to check one or more boxes, a series of questions, and/or the like), a second form question that a first form question is dependent on, a type of model activity associated with the question, an argument of functional language associated with the question, a template or portion thereof associated with the question, a model to be modified by a template corresponding to the question or form, and/or any other type of context associated with a response as described elsewhere herein. In an embodiment, the activator utilizes the form context and the grammar-based framework in order to translate form language to functional language. In this case, a user or service is able to provide natural language or another type of form language response without requiring knowledge of syntax or semantics needed for the functional language the form language is to be translated to. By utilizing form context in translation of form language to functional language, the activator reduces the probability of syntax errors related to the structure of the functional language. By reducing errors, the activator further reduces compute resources expended in debugging code errors. Furthermore, the activator leverages a structured framework to allow the user or service to utilize functions of the functional language even if the user or service do not possess knowledge of the functions or syntax of the functions.

In a further embodiment, the activator utilizes one or more templates to translate form language to functional language. For instance, an example implementation of an activator fills in fillable portions of an instance of a template based on received responses to form questions. In some embodiments, a template definition is provided by a provider (e.g., a separate provider than the service provider that provides the activator). In an embodiment, a template defines record-by-record triggers over an event. Another example template is used to define temporal triggers over attributes. In an embodiment, finer factoring is utilized to guide factored documentation and API surfaces. In some embodiments, a template comprises a translation scheme that defines how a filled template is translated into a next lower layer of concepts (e.g., engine layer functions and expression graphs). Some templates prefill/specialize an existing template. In some embodiments, concepts are exposed using a domain specific language (DSL). By leveraging these templates, the activator provides a robust framework for translating form language to functional language, further reducing probability of coding errors. Templates also improve the extensibility of the activator, as a template provider can generate templates specific to a database or programming language without requiring updates or changes to the activator's functionality. Still further, the use of templates reduce (or eliminate) the impact of changes or updates to a database or programming language on the operation of the activator.

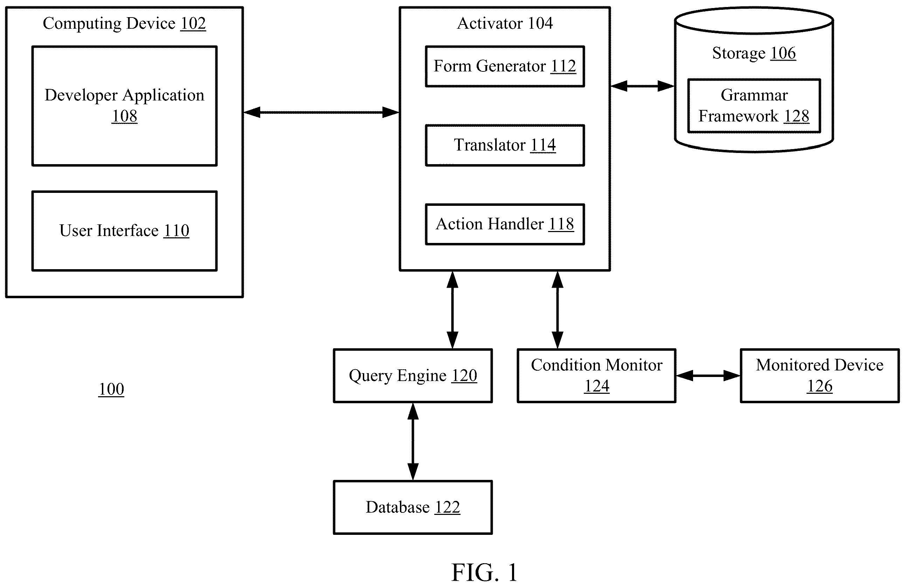

Embodiments can be configured in various ways for providing (e.g., declarative) APIs for translating form language into functional language. For example, FIG. 1 shows a block diagram of system 100 for providing a declarative API for translating form language into functional language, in accordance with an embodiment. As shown in FIG. 1, system 100 comprises a computing device 102, an activator 104, a storage 106, a query engine 120, a database 122, a condition monitor 124, and a monitored device 126. In an embodiment, computing device 102, activator 104, storage 106, query engine 120, database 122, condition monitor 124, and/or monitored device 126 are communicatively coupled by one or more networks. Examples of such networks include, but are not limited to, local area networks (LANs), wide area networks (WANs), enterprise networks, the Internet, etc. In examples, the network comprises one or more wired and/or wireless portions. The features of system 100 and its components are described in detail as follows.

Database 122 is configured to store data. Examples of database 122 include, but are not limited to, unstructured databases (e.g., binary large object (blob) storages), structured databases (e.g., SQL databases), and semi-structured databases. In implementations, database 122 includes any amount of data organized in various ways (e.g., in a table (comprising one or more columns and/or rows), in a cluster of data (e.g., a cluster of tables), in a file, and/or the like). In accordance with an embodiment, database 122 is implemented as a network-based storage (e.g., a cloud-based storage (e.g., cloud-based data lake storage, cloud-based file system, cloud-based database, and/or the like), an enterprise-based storage (e.g., an enterprise file system, an enterprise database, and/or the like), and/or another type of network-based storage). In this implementation, database 122 can be stored by one or more servers in a network-server infrastructure.

Storage 106 stores data used by, generated by, and/or obtained from computing device 102, activator 104, query engine 120, database 122, condition monitor 124, and/or monitored device 126, and/or components thereof and/or services executing thereon. For instance, as shown in FIG. 1, storage 106 stores a grammar framework 128. In embodiments, grammar framework 128 specifies grammar definitions for use in generating a form question and/or translating a form response into functional language. In an embodiment, grammar framework 128 comprises one or more templates that are utilized in translating operations. For instance, in an example implementation, grammar framework 128 comprises a definition of a template corresponding to a function of a functional language. Depending on the implementation, the definition can specify a portion of the template that maps to an argument of the function, a portion of the template that modifies the function, a portion of the template that identifies the function, and/or the like. As shown in FIG. 1, storage 106 is external to computing device 102, activator 104, query engine 120, database 122, condition monitor 124, and monitored device 126. Alternatively, all or a portion of storage 106 is internal to computing device 102, activator 104, query engine 120, database 122, condition monitor 124, and/or monitored device 126. In accordance with an embodiment, storage 106 is a remote storage accessible over a network (e.g., a web storage, a blob storage, a networked file system, a cloud storage, etc.).

In examples, computing device 102 is any type of stationary or mobile processing device, including, but not limited to, a desktop computer, a server, a mobile or handheld device (e.g., a tablet, a personal data assistant (PDA), a smart phone, a laptop, etc.), an Internet-of-Things (IoT) device, etc. In accordance with an embodiment, computing device 102 is associated with a user (e.g., an individual user, a group of users, an organization, a family user, a customer user, an employee user, an admin user (e.g., a service team user, a developer user, a management user, etc.), etc.). Computing device 102 is configured to execute a developer application 108 and a user interface 110 ("UI 110" herein). In accordance with an embodiment, developer application 108 enables a user to interface with activator 104, storage 106, query engine 120, database 122, condition monitor 124, and/or monitored device 126. In an embodiment, developer application 108 is an application suitable for developing a computer program or model. In an embodiment, developer application 108 manages one or more notebooks or computer programs under development. In an embodiment, developer application 108 utilizes one or more application programming interface (API) of activator 104 in the development of a computer program or model. UI 110 is any type of UI for displaying information and/or receiving input from a user interacting with computing device 102. Examples of UI 110 include, but are not limited to, graphic UIs (GUIs), command-line interfaces, voice UIs, menu driven interfaces, form based interfaces, natural language interfaces, and/or any other type of interface suitable for handling interaction between a user and computing device 102.

Activator 104 is a computer-implemented component and/or service that facilitates translation of form language responses into functional language. In an embodiment, activator 104 is implemented as a service executed by a computing device (e.g., a computer, a server (e.g., of a cloud computing network, of an enterprise network, of a private network, and/or the like). In another embodiment, activator 104 is implemented as a system-on-chip (SoC). While activator 104 is shown as separate from computing device 102, in an embodiment, computing device 102 executes programming instructions to perform one or more operations of activator 104. As shown in FIG. 1, activator 104 comprises a form generator 112, a translator 114, and an action handler 118, each of which are implemented as sub-services and/or subcomponents thereof. Form generator 112 generates a form question to be provided to developer application 108. In an embodiment, form generator 112 generates the form question based on grammar framework 128. Depending on the implementation, the form question comprises one or more question prompts. In embodiments, developer application 108 responds to one or more of the question prompts automatically or causes the question prompt to be presented in UI 110. In an embodiment, form generator 112 is configured to manage a template instance. In embodiments, a template instance is an instance of a template that activator 104 is utilizing to generate functional language. In an embodiment, form generator 112 generates the template instance based at least on the definition of the template in grammar framework 128. In some embodiments, the template instance includes an identifier or other indication of the definition such that other components can identify the definition or template to refer to when receiving the template instance or responses thereto. In some embodiments, the template instance is determined based on a selection received from computing device 102 (e.g., based on user interaction with UI 110 to select the template, based on a function of developer application 108, and/or the like). In another embodiment, the template instance is determined based on a type of or other information regarding developer application 108.

Translator 114 translates responses received from computing device 102 into functional language. For instance, translator 114 translates form language included in a response from developer application 108 into functional language based on grammar framework 128. Examples of form language include, but are not limited to, natural language (e.g., typed language, natural language corresponding to a selection made in UI 110, and/or the like), partial functional language, numeric information (e.g., typed numbers or numbers corresponding to a selection made in UI 110), form context, rule(s) related to a question prompt, and/or the like, and/or a combination thereof. Examples of functional language include, but are not limited to, expressions of an expression graph, a query expression, programming code, and/or other language for causing a computing device to perform one or more functions. In accordance with an embodiment, translator 114 utilizes grammar framework 128 to translate the form language to a functional language based on the definition utilized by form generator 112 to generate the form question.

Action handler 118 performs one or more actions based on functional language generated by translator 114. In an embodiment, action handler 118 performs the action. Alternatively, action handler 118 causes another component and/or service to perform an action. For instance, in an embodiment, action handler 118 causes query engine 120 to perform an action (e.g., with respect to database 122). In another embodiment, action handler 118 causes condition monitor 124 to perform an action (e.g., with respect to monitored device 126). In an embodiment, action handler 118 causes computing device 102 to perform an action. Depending on the implementation, an action can be a single action, a set of actions, or a sequence of actions (e.g., an action, a response to the action, a subsequent action, etc.). Examples of actions include, but are not limited to, monitoring a condition of a device or service in order to detect if the condition satisfies a criterion, generating a log of a condition of a device or service, executing a query, executing multiple queries, generating a file, storing a result or a file, transmitting an e-mail, transmitting a message, analyzing business intelligence data, analyzing other data analytics, managing services and/or devices of a (e.g., cloud or other network-based) computing system, generating an alert, and/or other actions described elsewhere herein.

Query engine 120 is configured to execute one or more queries against a database (e.g., database 122) to generate a corresponding query result. In some embodiments, query engine 120 implements a query optimization technique. In FIG. 1, query engine 120 is shown as a separate engine (e.g., executed or implemented by a computing device, e.g., a server). Alternatively, query engine 120 is integrated in activator 104 (e.g., as a subservice or subcomponent thereof). In FIG. 1, query engine 120 is shown as executing a query against database 122, however, embodiments described herein are not so limited. For instance, in an embodiment, query engine 120 can execute queries against multiple databases.

Condition monitor 124 is configured to monitor devices and/or services. For instance, in an embodiment, condition monitor 124 monitors one or more characteristics of a device or service. Example device characteristics include, but are not limited to, device temperature, device location, device processing speed, network the device is connected to, rate of change in device location, humidity of ambient air in proximity to the device, a user account assigned to the device, whether or not the device is powered on, device usage, components of the device, services executed by the device, physical traits of the device, data stored on the device, and/or any other type of characteristic of a device. Example server characteristics include, but are not limited to, a version number of the service, a service provider associated with the service, a user account the service is operating on behalf of, a region the service is assigned to, a device that is executing the service, a characteristic of the device that is executing the service, an access policy of the service, a permission granted to the service, a job in progress or completed by the service, and/or any other type of characteristic of the service. In embodiments, condition monitor 124 continuously or periodically monitors characteristics of devices or services. Alternatively, condition monitor 124 obtains current and/or historic values of characteristics of devices or services. In embodiments, condition monitor 124 stores obtained or otherwise monitored characteristics in a storage (e.g., a storage of condition monitor 124, a storage of activator 104, storage 106, and/or the like). In an embodiment, condition monitor 124 provides obtained or otherwise monitored values of characteristics to activator 104 and/or computing device 102. In an embodiment, condition monitor 124 is caused to monitor or otherwise obtained values in response to or otherwise based at least on an action received from action handler 118.

Monitored device 126 is any type of device for which characteristics can be monitored. Examples of monitored devices include, but are not limited to, computing devices, hardware, sensors (e.g., image sensors, temperature sensors, humidity sensors, global position systems, accelerometers, motion sensors, and/or the like), cameras, vehicles (e.g., trains, boats, planes, automobiles, and/or the like), buildings (e.g., datacenters, office buildings, and/or the like), components of a device, and/or other devices.

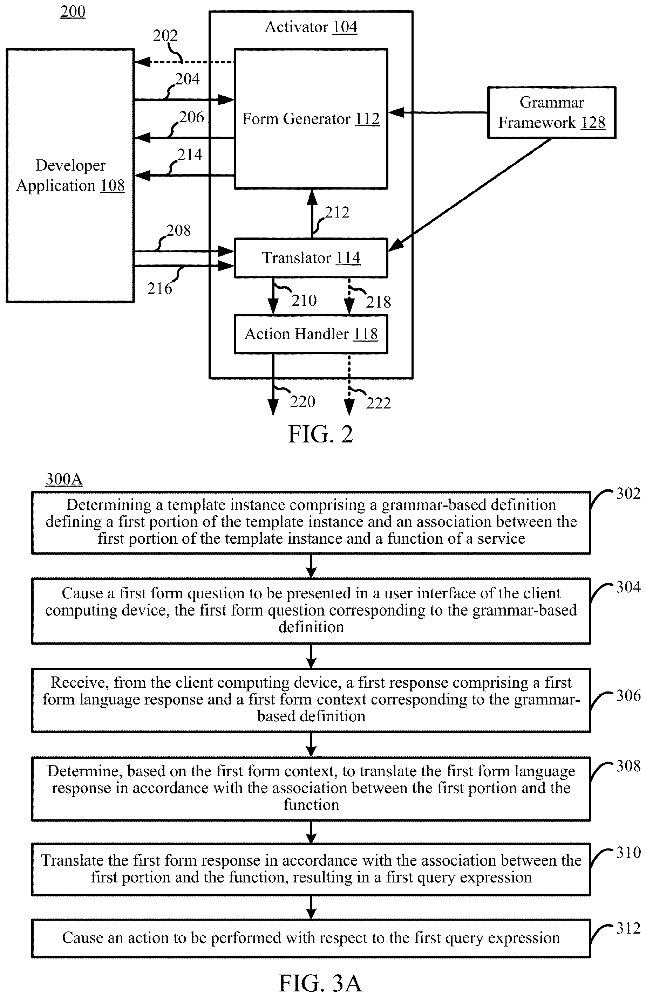

Embodiments of activator 104 operate and are configured in various ways. For instance, FIG. 2 shows a block diagram of a system 200 comprising activator 104 (comprising form generator 112, translator 114, and action handler 118) of FIG. 1, in accordance with an embodiment. As shown in FIG. 2, system 200 also comprises developer application 108 and grammar framework 128, as described with respect to FIG. 1. To better understand the operation of activator 104, FIG. 2 is described with respect to FIG. 3A. FIG.

3A shows a flowchart 300A of a process for causing an action to execute based at least on a translation of form language into functional language, in accordance with an embodiment. Activator 104 of FIG. 2 operates according to flowchart 300A, in an embodiment. Note that not all steps of flowchart 300A need be performed in all embodiments. Further structural and operational embodiments will be apparent to persons skilled in the relevant art(s) based on the following descriptions of FIGS. 2 and 3A.

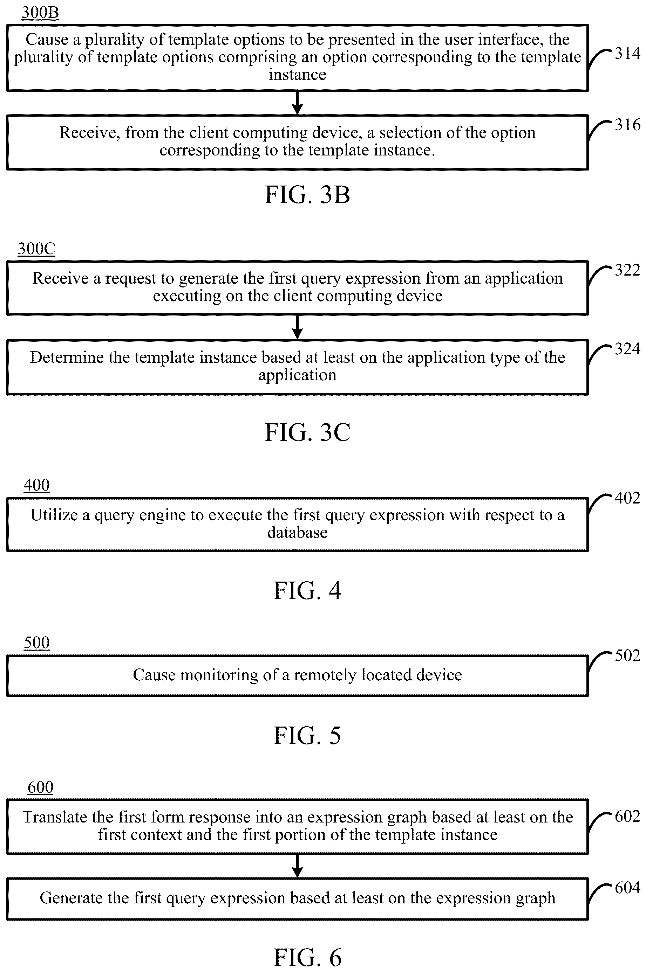

Flowchart 300A begins with step 302. In step 302, a template instance is determined, the template instance comprising a grammar-based definition defining a first portion of the template instance and an association between the first portion of the template instance and a function of a service. For example, form generator 112 of FIG. 2 determines a template instance comprising a grammar-based definition (e.g., a grammar-based definition of grammar framework 128) defining a first portion of the template instance. In an embodiment, the grammar-based definition further defines an association between the template instance (or portion thereof) and a function of a service (e.g., query engine 120, condition monitor 140, a model generator, and/or the like). In this example, the definition can include code or other functional language the template instance (or portion thereof) is mapped to such that variables of the template instance correspond to arguments of the functional language, identifiers of the functional language, and/or other parameters of the functional language. In an embodiment, the template instance comprises multiple "sub templates" where each sub template is a template for a constructor, a step, a substep, or a picker, as described elsewhere herein. Alternatively, the template instance specifies a single type of template (e.g., a constructor template, a step template, a substep template, a picker template, and/or the like). In an embodiment further described with respect to FIG. 3B, a selection of the template is received from developer application 108. In another embodiment further described with respect to FIG. 3C, form generator 112 determines the template based at least on a type of developer application 108, information provided from developer application 108 (e.g., when establishing a connection, when a library comprising activator 104 is downloaded, and/or the like).

In an embodiment, form generator 112 generates or otherwise maintains the template instance responsive to its determination. In an embodiment, the template instance comprises one or more constructors, as described elsewhere herein, wherein at least one constructor comprises the first portion of the template instance. In an embodiment, a constructor comprises a sequence of steps, wherein a first step in the sequence of steps comprises the first portion of the template instance. In an embodiment, the sequence of steps comprises a second step that accepts an output of the first step as an argument thereof. In an embodiment, the first and/or second step comprise a one or more substeps. In an embodiment, the one or more substeps of a step are unordered. In an embodiment, a substep comprises a record structure comprising a kind tag and a set of key/value pairs. In an embodiment, the record structure is referred to as a "picker."

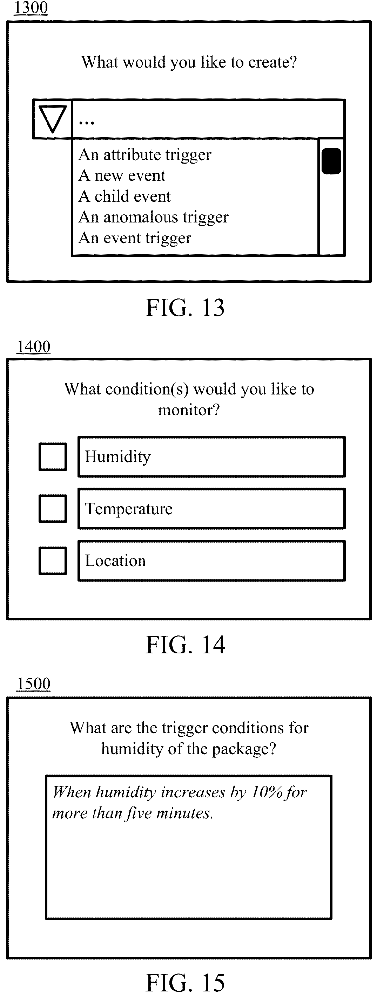

In step 304, a first form question is caused to be presented in a UI of the client computing device, the first form question corresponding to the grammar-based definition. For example, form generator 112 causes a first form question 206 to be presented in UI 110 by translating first form question 206 ("question 206" herein) to developer application 108, causing developer application 108 to render question 206 in UI 110. Examples of a form question presented in a UI are described with respect to FIGS. 13-15, as well as elsewhere herein. Depending on the implementation, form generator 112 causes one or more form questions to be displayed in UI 110. In some embodiments, form generator 112 causes developer application 108 to respond to form question 206 without displaying the question in UI 110 (e.g., automatically based on rules, thresholds, or criteria).

In embodiments, form generator 112 generates form question 206 based on grammar framework 128. For instance, form generator 112 in an embodiment determines information required for the template indicated in information 204 received from developer application 108. For example, suppose a grammar-based definition within the template corresponds to a selection of a data type or an argument to be passed in a function. In this example, form generator 112 generates form question 206 corresponding to the required information (e.g., a form question requesting a selection of a data type, a form question requesting information to be translated into an argument for passing in a function, and/or the like). For example, in an embodiment, form generator 112 generates form question 206 as a declarative question requesting input corresponding to an argument of the first portion of the template instance.

In step 306, a first response comprising a first form language response and a first form context corresponding to the grammar-based definition is received from the client computing device. For example, translator 114 of FIG. 2 receives a first response 208 from developer application 108. In an embodiment, first response 208 is generated based on user interaction in UI 110. In another embodiment, (some or all) of first response 208 is generated automatically by developer application 108 (e.g., without user interaction in UI 110). In embodiments, form context provides information relating the form language response to grammar framework 128 or other information suitable for translating the form language response to functional language. Examples of form context include, but are not limited to, a type of question prompt of the first form question (e.g., a free form question, a selection from a dropdown menu, a multiple choice question, a checkbox question, a series of questions, and/or the like), a second form question the first form question is dependent on, a type of model activity associated with the first form question, an argument of the first portion of the template instance, a constructor type of a constructor of the first portion of the template instance, a model to be modified by an output of a filled version of the determined template (e.g., a model to be modified by a query or query expression), and/or any other type of context associated with the response.

In step 308, a determination to translate the first form language response in accordance with the association between the first portion and the function is made based on the first form context. For example, translator 114 of FIG. 2 in an embodiment determines, based on the first form context included in first response 208, to translate the first form language response included in first response 208 in accordance with the association between the first portion and the function defined by the grammar-based definition the first form context corresponds to. In an embodiment, translator 114 determines the translation to be performed based on an identifier of the grammar-based definition included in the form context. In another embodiment, the form context specifies the function the form language response corresponds to (e.g., based on the template utilized to generate the first form question).

In step 310, the first form language response is translated in accordance with the association between the first portion of the template instance and the function of the service, resulting in a first query expression. For example, translator 114 of FIG. 2 in an embodiment translates the form language response included in first response 208 in accordance with an association between a portion of the determined template form question 206 corresponded to and a function of a service (e.g., query engine 120, condition monitor 124, and/or another service) that is to execute or otherwise receive a query expression, resulting in a query expression 210. In an embodiment, translator 114 utilizes grammar framework 128 to translate text of the form language response into code or expressions. For instance, in an embodiment, grammar framework 128 defines code and/or expressions for causing the function of the service to be performed (e.g., API calls, function calls, code functions, parameters, and/or the like). In an embodiment, translator 114 identifies text that semantically relates to a portion of the template instance to be translated. For instance, suppose a form language response comprises text stating "No more than five minutes" and the form context indicates the question the form language response was to related to humidity of a package, an ability trigger being generated by activator 104, and a request for a boundary on how long humidity of a package is allowed to be over a threshold. In this example, based at least on the form language response and the form context, translator 114 utilizes grammar framework 128 to update the template instance to include an expression that detects if humidity of a package is above a threshold for more than five minutes and, if so, flag a trigger. By leveraging grammar framework 128 and form context in order to translate the form language response included in first response 208, translator 114 translates a completed template (or portion thereof) into a valid expression (e.g., an expression that adheres to the time-series algebra of activator 104). In this manner, translator 114 reduces the probability of syntax errors and (in some implementations) removes a user or client service's need to know a particular syntax of the underlying model or engine.

In step 312, an action is caused to be performed with respect to the first query expression. For example, action handler 118 receives query expression 210 and causes an action 220 to be performed with respect thereto. Examples of action 220 include, but are not limited to, executing query expression 210 against a database (e.g., utilizing query engine 120 of FIG. 1), causing a monitoring device or service (e.g., condition monitor 124 of FIG. 1) to monitor a device (e.g., monitored device 126 of FIG. 1) based on query expression 210 (e.g., as a constant or repeating query), provide query expression 210 to client computing device 102, and/or perform another type of action with respect to query expression 210.

In embodiments, form generator 112 determines a template instance in various ways. For example, in accordance with an embodiment, form generator 112 determines a template instance based on a selection thereof received from developer application 108. Form generator 112 operates in various ways to receive the selection of the template instance, in embodiments. For instance, FIG. 3B shows a flowchart 300B of a process for determining a template instance, in accordance with an embodiment. Form generator 112 of FIG. 2 operates according to flowchart 300B, in an embodiment. In an embodiment, one or more steps of flowchart 300B are further examples of step 302 of flowchart 300A of FIG. 3A. Note that not all steps of flowchart 300B need be performed in all embodiments. Further structural and operational embodiments will be apparent to persons skilled in the relevant art(s) based on the following description of FIG. 3B with respect to FIG. 2.

Flowchart 300B begins with step 314. In step 314, a plurality of template options are caused to be presented in a UI, the plurality of template options comprising an option corresponding to the template instance. For example, form generator 112 of FIG. 2 in an embodiment provides a prompt 202 to developer application 108, causing a plurality of template options to be presented in template options to be presented in UI 110. For instance, in an embodiment, prompt 202 comprises instructions to select a template from among the template options. In an implementation, the instructions are presented as a form question. By causing the plurality of template options to be presented in UI 110, this embodiment of form generator 112 enables a user or developer application 108 to selectively determine which template to utilize, reducing the computational resources expended by form generator 112 that would be expended in automatically determining a template to use.

In step 316, a selection of the option corresponding to the template instance is received from the client computing device. For example, in an embodiment, form generator 112 of FIG. 2 receives information 204 from developer application 108 responsive to having provided prompt 202 to developer application 108. In this embodiment, information 204 indicates (or comprises an indication of) a template selected by developer application 108 or based at least on user interaction with UI 110 of FIG. 1. In embodiments, the selection comprises a selection from a dropdown menu, a selection from a checkbox or radial button selection, a free-form textbox response, and/or the like.

As described herein, form generator 112 determines a template instance in various ways. For example, in accordance with another embodiment, form generator 112 determines a template instance based on information or data regarding developer application 108 (e.g., a type of developer application 108, a restriction of developer application 108, a setting of developer application 108, a user account of developer application 108, and/or the like). Form generator 112 operates in various ways to determine the template instance based on such information or data, in embodiments. FIG. 3C shows a flowchart 300C of a process for determining a template instance, in accordance with another embodiment. Form generator 112 of FIG. 2 operates according to flowchart 300C, in an embodiment. In an embodiment, one or more steps of flowchart 300B are further examples of step 302 of flowchart 300A of FIG. 3A. Note that not all steps of flowchart 300C need be performed in all embodiments. Further structural and operational embodiments will be apparent to persons skilled in the relevant art(s) based on the following description of FIG. 3C with respect to FIG. 2.

Flowchart 300C begins with step 322. In step 322, a request to generate the first query expression is received from an application executing on the client computing device. For example, suppose information 204 is a request to generate a query expression, to generate a query comprising a query expression, to generate a query plan comprising the query, to perform a task including execution of the query expression, and/or the like. In this example, form generator 112 receives information 204 from developer application 108 executing on client computing device 102. In an embodiment, information 204 is a request to initiate a session between developer application 108 and activator 104. In an alternative embodiment, information 204 is subsequent to a session already having been established between developer application 108 and activator 104. In an embodiment, information 204 comprises application information comprising one or more of an identifier of developer application 108, a type of application of developer application 108, a setting of developer application 108, a restriction of application 108, and/or other information or data associated with developer application 108 and/or a capability of developer application 108.

In step 324, the template instance is determined based at least on the application type of the application. For example, form generator 112 of FIG. 2, in an embodiment, determines a template instance based at least on application information included within information 204. In an example, the application information comprises an application type of developer application 108. In this example, form generator 112 automatically determines the type of template instance to utilize to generate form questions (e.g., without requiring a user or client-side automated selection of a template from a selection of templates), thus reducing communication messages and compute resources expended.

As described with respect to step 312 of flowchart 300A of FIG. 3A, in some embodiments action handler 118 executes a query expression against a database. Action handler 118 operates in various ways to execute a query expression, in embodiments. For instance, FIG. 4 shows a flowchart 400 of a process for utilizing a query engine, in accordance with an embodiment. Activator 104 of FIG. 2 operates according to flowchart 400, in an embodiment. Note that flowchart 400 need not be performed in all embodiments. Further structural and operational embodiments will be apparent to persons skilled in the relevant art(s) based on the following description of FIG. 4.

Flowchart 400 begins with step 402, which is a further embodiment of step 312 of flowchart 300A of FIG. 3A, in an embodiment. In step 402, a query engine is utilized to execute the first query expression with respect to a database. For example, action handler 118 of FIG. 2 in an embodiment utilizes query engine 120 of FIG. 1 to execute query expression 210 against database 122. In an embodiment, action handler 118 receives a response from query engine 120 comprising a result of the execution. In an embodiment, action handler 118 causes the result to be displayed in UI 110 of client computing device 120, provides the result in an e-mail of a user-account, stores the result in a storage (e.g., storage 106), and/or the like.

As described with respect to step 312 of flowchart 300A of FIG. 3A, in some embodiments action handler 118 causes a condition to be monitored based on a query expression. Action handler 118 operates in various ways to monitor a condition, in embodiments. For example, FIG. 5 shows a flowchart 500 of a process for monitoring a condition, in accordance with an embodiment. Activator 104 of FIG. 2 operates according to flowchart 500, in an embodiment. Note that not all steps of flowchart 500 need be performed in all embodiments. In an embodiment, one or more steps of flowchart 500 are further embodiments of step 312 of flowchart 300A of FIG. 3A. Further structural and operational embodiments will be apparent to persons skilled in the relevant art(s) based on the following description of FIG. 5.

Flowchart 500 begins with step 502. In step 502, monitoring of a remotely located device is caused. For example, action handler 118 of FIG. 2 causes condition monitor 124 of FIG. 1 to monitor remotely located monitored device 126. In an embodiment, condition monitor 124 is caused to detect a change in a condition of monitored device 126 satisfying a criterion (e.g., a humidity of a package of monitored device 126 exceeding a threshold for a predetermined time). In another embodiment, condition monitor 124 is caused to generate a log or otherwise report a value of the condition over time (e.g., in predetermined intervals, for a predetermined amount of time, until requested to stop, and/or the like). In an embodiment, action handler 118 receives a response from condition monitor 124 indicating a detected change satisfies the criterion or comprising the log. In this example, action handler 118 stores information included in the response in a storage, provides the information to computing device 120 (e.g., for display in UI 110), provides the information in a message or e-mail to a user account, and/or the like. In an embodiment, action handler 118 causes a remedial action to be performed based on the detection. Thus, in an embodiment, activator 104 provides a framework to facilitate translation of form language to function language to monitor remotely located devices. This allows the requesting service (e.g., developer application 108) to monitor a variety of types of remotely located devices without requiring the requesting service to know the syntax or semantics of the functional language utilized to monitor the remotely located device. In this manner, types of monitoring devices or APIs can be updated or changed without requiring updates to developer application 108, thereby reducing compute resources expended in maintaining developer application 108 and reducing the likelihood of errors in developer application 108 transmitting requests to a monitoring device or API of the remotely located device.

Embodiments of translator 114 translate a response to a form question in various ways, in embodiments. For example, FIG. 6 shows a flowchart 600 of a process for translating a form response, in accordance with an embodiment. Activator 104 of FIG. 2 operates according to flowchart 600, in an embodiment. Note that not all steps of flowchart 600 need be performed in all embodiments. In an embodiment, one or more steps of flowchart 600 are further examples of step 310 of flowchart 300A of FIG. 3A. Further structural and operational embodiments will be apparent to persons skilled in the relevant art(s) based on the following description of FIG. 6.

Flowchart 600 begins with step 602. In step 602, the first form language response is translated into an expression graph in accordance with an expression graph format by defining a parameter of the function based at least on a portion of the first form language response corresponding to a variable of a template mapped to the parameter. For example, in an embodiment the grammar-based definition of grammar framework 128 utilized to generate question 206 further defines an expression graph format that specifies a parameter of the function. In this example, the template instance comprising the grammar-based definition comprises a variable mapped to the parameter. Furthermore, in this continued example, translator 114 of FIG. 2 translates the first form language response included in response 208 into an expression graph in accordance with the expression graph format by defining the parameter based at least on a portion of the first form language response corresponding to the variable mapped to the parameter. While this example is described with respect to the expression graph format specifying a parameter, other examples comprise an expression graph format that specifies a type of a function, a number of functions, multiple parameters of one or more functions, a chain of functions, and/or a combination thereof. In a non-limiting example, the grammar-based definition maps variables of the template utilized to generate first form question 206 (e.g., as described with respect to step 304 of flowchart 300A) to expressions of an expression graph format. To translate response 208, translator 114 places form language input of response 208 into corresponding expressions in accordance with the expression graph format. In accordance with an embodiment, the expression graph comprises multiple nodes, where an edge connecting two notes represents a relationship between the nodes. By translating the first form question into an expression graph, such embodiments of translator 114 allow for query expressions to be built dynamically at runtime.

In step 604, the expression graph is traversed to generate the first query expression. For example, translator 114 generates query expression 210 by traversing the expression graph, resulting in query expression 210. While traversing the expression graph, translator 114 identifies types of nodes of the graph, relationships between the nodes (e.g., hierarchies of nodes, dependencies of nodes, co-dependencies of nodes, and/or the like), edges of the graph, an order of operands and operators, and/or other information suitable for generating query expression 210 from the expression graph. In an embodiment, the expression graph comprises nested expressions (e.g., an expression corresponding to a constructor, another expression corresponding to a step of the constructor, another expression corresponding to a substep of the step, another expression corresponding to a picker of the substep, and/or the like). In this example, translator 114 maps the expressions to corresponding portions of the template instance as part of translating the expressions of the graph into query expression 210.

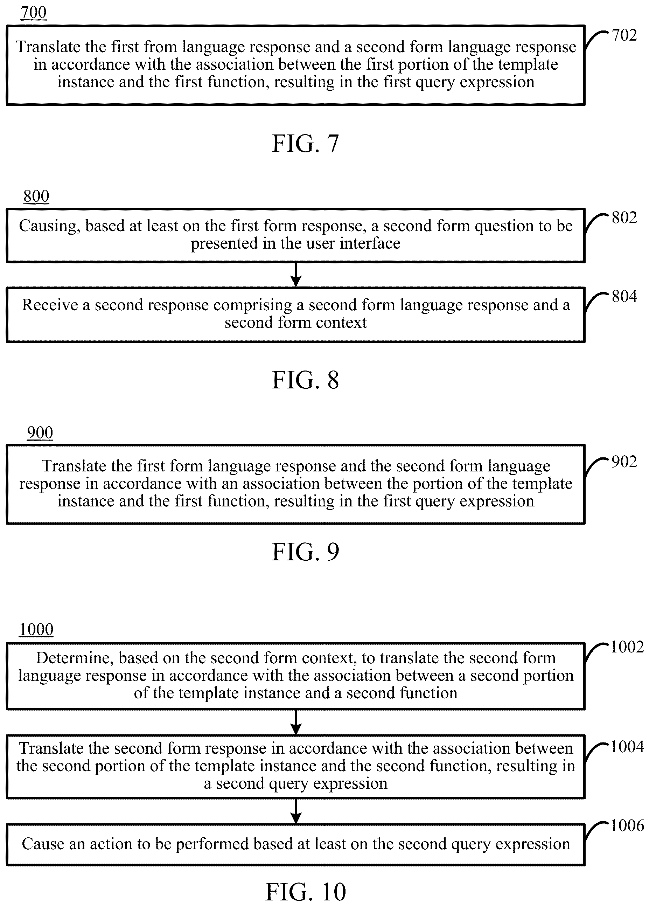

As described herein, translator 114 translates form language responses into a query expression in various ways, in embodiments. For example, FIG. 7 shows a flowchart 700 of a process for translating multiple form responses, in accordance with an embodiment. Activator 104 of FIG. 2 operates according to flowchart 700, in an embodiment. Note that flowchart 700 need not be performed in all embodiments. Further structural and operational embodiments will be apparent to persons skilled in the relevant art(s) based on the following description of FIG. 7.

Flowchart 700 comprises step 702, which is a further example of step 310 of flowchart 300A of FIG. 3A in an embodiment. In step 702, the first query expression is generated by translating the first form language query response and a second form language query response in accordance with the association between the portion of the template instance and the function. For example, suppose first form question 206 comprises a first question prompt and a second question prompt. Further suppose the first question prompt requests an indication of a modeling activity to be used to define data to be modeled and the second question prompt requests a modeling rule that defines a condition to be measured with respect to the data. For instance, in a non-limiting example, the first question prompt requests an attribute of a monitored device to be monitored and the second question prompt requests a threshold criterion the attribute is to satisfy for a trigger to be detected. In this example, questions requesting user input pertaining to the first and second question prompts are caused to be displayed in UI 110 or fulfilled by developer application 108 (e.g., automatically). Furthermore, in this example, first response 208 comprises the first form language response corresponding to the first question prompt and a second form language response corresponding to the second question prompt. In an embodiment, the form context included in first response 208 indicates a context for each of the form language responses. Translator 114 translates the two form language responses into query expression 210 in accordance with the association between the portion of the template instance and the function.

In some embodiments, activator 104 operates to generate multiple forms to complete a template instance. For instance, FIG. 8 shows a flowchart 800 of a process for generating a second form based on a first form response, in accordance with an embodiment. Activator 104 of FIG. 2 operates according to flowchart 800, in an embodiment. Note that not all steps of flowchart 800 need be performed in all embodiments. Further structural and operational embodiments will be apparent to persons skilled in the relevant art(s) based on the following description of FIG. 8.

Flowchart 800 begins with step 802. In step 802, a second form question is caused to be presented in the UI based at least on the first form language response. For example, in an embodiment and as shown in FIG. 2, translator 114 provides information 212 to form generator 112. Depending on the implementation, information 212 comprises the form language response of response 208, form context of response 208, a translation of the form language response into an expression, and/or other information related to form question 206 and the corresponding response received as response 208. Form generator 112, in an embodiment, generates a second form question 214 based at least on information 212. In an embodiment, second form question 214 is a follow-up question of form question 206, a nested question of form question 206, a clarifying question of form question 206, and/or otherwise related to form question 206. For instance, in an embodiment where form question 206 results in the selection of a constructor to be used in the template instance, form question 214 comprises a request for selecting a step of the constructor and/or the like. In an embodiment, second form question 214 corresponds to the same portion of the template instance as first form question 206. In other words, in some embodiments, second form question 214 corresponds to the same grammar-based definition as first form question 206. Alternatively, second form question 214 corresponds to a different portion of the template instance than first form question 206. For instance, in an embodiment, second form question 214 corresponds to a different grammar-based definition than the grammar-based definition that first form question 206 corresponds to. In this alternative, the second grammar-based definition defines a different portion of the template instance and an association between the different portion of the template instance and a different function of the service. In a further alternative embodiment, the second grammar-based definition defines a different portion of the template instance and an association between the different portion of the template instance and a function of a different service. In an embodiment, form generator 112 provides second form question 214 to developer application 108, causing display thereof in UI 110.

In step 804, a second response comprising a second form language response and a second form context is received. For example, translator 114 of FIG. 2 receives a second response 216, which is a response to question 214 in an embodiment. In an embodiment, second response 216 comprises a second form language response and a second form context. Depending on the implementation, the second form context describes a relationship between the second form language response and the same portion of the template instance as the first form language response or a relationship between the second form language response and a different portion of the template instance than the first form language response.

In embodiments, translator 114 operates in various ways to translate the second form language response included in response 216. For example, FIG. 9 shows a flowchart 900 of a process for translating multiple responses into a single functional expression, in accordance with an embodiment. Activator 104 of FIG. 2 operates according to flowchart 900, in an embodiment. Note that flowchart 900 need not be performed in all embodiments. Further structural and operational embodiments will be apparent to persons skilled in the relevant art(s) based on the following description of FIG. 9.

Flowchart 900 comprises with step 902, which is a further embodiment of step 310 of flowchart 300A of FIG. 3A in an embodiment. In step 902, the first form language query response and the second form language query response in accordance with an association between the portion of the template instance and the function, resulting in the first query expression. For example, translator 114 of FIG. 2 in an embodiment generates query expression 210 by translating the first form language response of response 208 and the second form language response of response 216 in accordance with the association between the portion of the template instance and the function the first form context and the second form context indicate. In an embodiment, translator 114 generates query expression 210 utilizing grammar framework 128, e.g., in a similar manner as described with respect to step 310 of FIG. 3A. In an embodiment, translator 114 generates query expression 210 by updating a template based on the first form language response, the first form context, the second form language response, and/or the second form context. In an embodiment, translator 114 generates query expression 210 based on an expression graph generated from the first form language response, the first form context, the second form language response, and/or the second form context.

As described herein, embodiments of translator 114 operate in various ways to translate the second form language response included in response 216. For instance, FIG.

10 shows a flowchart 1000 of a process for translating multiple responses into respective functional expressions, in accordance with an embodiment. Activator 104 of FIG. 2 operates according to flowchart 1000, in an embodiment. Note that not all steps of flowchart 1000 need be performed in all embodiments. Further structural and operational embodiments will be apparent to persons skilled in the relevant art(s) based on the following description of FIG. 10.

Flowchart 1000 begins with step 1002. In step 1002, a determination to translate the second form language response in accordance with the association between a second portion of the template instance and a second function is made based on second form context included in a second response. For example, in an embodiment, suppose second form question 214 corresponds to a different grammar-based definition of grammar framework 128 than the definition that first form question 206 corresponds to. In this example, the different grammar-based definition (also referred to as the "second grammar-based definition" herein) defines a second portion of the template instance and an association between the second portion of the template instance and a second function of the service or a function of a different service. Still further, in this example, the second form context in response 216 corresponds to the second grammar-based definition. Translator 114 in this example determines to translate the second form language response of response 216 in accordance with the association between the second portion of the template instance and the second function based on the second form context. Translator 114 makes this determination in a similar manner as described with respect to step 308 of flowchart 300A of FIG. 3A

In step 1004, the second form language response is translated in accordance with the association between the second portion of the template instance and the second function, resulting in a second query expression. For example, in an embodiment, translator 114 of FIG. 2 translates the second form language response included in response 216 in accordance with the association between the second portion of the template instance and the second function, resulting in a second query expression 218. In embodiments, translator 114 translates the second form language response in a similar manner as described with respect to the first form language response of response 208 being translated into query expression 210. In a further embodiment, translator 114 generates a query plan comprising at least query expressions 210 and 218. In this further example, the query plan comprises instructions regarding the execution of query expression 210 and the execution of query expression 218. For instance, in an embodiment, the query plan specifies an order in which query expressions 210 and 218 are to be executed, a dependency between execution of the expressions, whether or not the query expressions can be pipelined or executed concurrently, and/or other information regarding the execution of the query expressions. By generating a query plan in this manner, translator 114 can determine a chain or series of query expressions based on form language provided by a user or developer application without requiring the user or developer application to utilize specific query syntax of the service that executes queries of the query plan.

In step 1006, an action is caused to be performed based at least on the second query expression. For example, action handler 118 causes an action 222 to be performed based at least on second query expression 218. In embodiments, action 222 comprises one or more actions such as those described with respect to action 220 in step 312 of flowchart 300A of FIG. 3A. In an alternative embodiment, action handler 118 causes action 220 to be performed based on first query expression 210 and second query expression 218. For instance, in an embodiment, action 220 comprises instructions to execute a query plan comprising first query expression 210 and second query expression 218.

Thus, several example techniques for translating form language to functional language have been described with respect to FIGS. 1-10. In an embodiment, activator 104 of FIG. 1 and/or one or more of its functions are provided as a library (e.g., of APIs) that can be imported into a computer program under development or a model under development (e.g., in a notebook application or other type of development application, e.g., developer application 108 of FIG. 1). In an embodiment, importing of the library enables options to be presented in the development application. A user or service can interact with the options (e.g., through user interaction with a UI or through service interaction utilizing an API) to cause a template instance to be selected, a form question to be generated, a response to a form question to be generated, a response to be translated into a query expression, an action to be performed with respect to the query expression, and/or the like.

### III. Example Template Embodiments

Embodiments described herein utilize a variety of templates, e.g., event templates for templating events, attribute templates for templating attributes, trigger templates for templating triggers, and query templates for templating queries. In embodiments, a template is utilized to construct entities. In embodiments, a template comprises one or more: (1) constructors, (2) steps, (3) substeps, and (4) pickers, each of which are described as follows, as well as elsewhere herein.
**(1) Constructors** - A constructor is a type of function called to create an object. In an example, a constructor prepares the new object for use. In some examples, the constructor accepts one or more arguments. In embodiments, a constructor utilizes a sequence of steps to gather (e.g., all) information used to construct a target entity.
**(2) Steps** - A step is part of a constructor used to gather information. In an embodiment, the ordering of steps within a constructor is produced by expansions of grammar. In an implementation, a later step in the ordered steps of a constructor builds on information gathered in one or more earlier steps. In embodiments, a step comprises one or more substeps utilized to gather compound information. The substeps of a step can be ordered or unordered, depending on the implementation. In an embodiment, step definition is agnostic to the order in which a grammar expansion allows for the use of one or more substeps. In an embodiment, a step expansion is able to be semantically validated subsequent to (or based on) completion of the step's information gathering.
**(3) Substeps** - A substep is part of a step. A substep is utilized to gather compound information. A substep defines which picker is to be used to gather a set of information. In an embodiment, a substep provides multiple (e.g., alternative) pickers. In an embodiment, a substep comprises a nested picker.
**(4) Pickers** - A picker is used to gather a set of information. A picker comprises a field defined using a data type. The field is used to hold a reference to an attribute or field (e.g., instead of a constant literal value). In an embodiment, type checking is used to determine if there is a type mismatch or if a likelihood of type mismatch satisfies a threshold criterion (e.g., the likelihood of a type mismatch is equal to or greater than a threshold percentage (e.g., equal to 100%, greater than 95%). In a picker, a choice list (e.g., one of) is understood within the semantics of the picker (e.g., as determined by the picker's kind label). For instance, a choice such as "isGreaterThan" in the context of a "NumberValueCondition" picker can be read as "numberIsGreaterThan". In some examples, pickers do not nest. Alternatively, an auxiliary picker is nested within a regular picker. In embodiments, gathered information is "tagged" using the "kind" of a picker.

In embodiments, attributes in a template can have a definitive data type. In an example, the data type is forced by a chosen computation defining the attribute (e.g., taking the count of something yields a number). In an example, an attribute definition concludes in a type assertion by a user or a service utilizing activator 104 of FIG. 1. An example of a type assertion comprises a provision for lightweight conversion (e.g., a format indication to convert a textual date-time value into a value of data type DateTime).

Some attributes are multi-dimensional attributes. For instance, an example multi-dimensional attribute is a numeric attribute over an event. In some embodiments, multi-dimensional attributes are limited to numeric attributes; however, embodiments described herein need not be so limited. In an example, an aggregation function operates over (e.g., all) multiple data types and produces an output of a single type (e.g., a count aggregate function can count multiple data types and yields a numeric data type). In an embodiment, a measure is a zero-dimensional metric. In a further example, a measure is utilized over attributes in the form of a summarization option (e.g., in a "Basic Computed Attribute" and "Attribute Trigger" template described elsewhere herein). In an embodiment, a measure has a dimension-like shape (e.g., by having an unspecified "time grain" or "agg function"). In this example, the choices are late bound in a model without impacting computation complexity.

In an embodiment, where a template builds on a multi-dimensional attribute, the template collapse the dimensions. In this embodiment, a consuming template allows for a list of "dimension specifications" (e.g., one for each required dimension of a multi-dimensional attribute). In an aspect, the specification of a metric comprises a "time grain" specification and an "agg function" specification. In some aspects, the "time grain" and/or "agg function" specifications are optional. In a further aspect, if the time grain or agg function specification are missing in an underlying attribute, the missing specification is treated as a required dimension. That is, in this non-limiting example, the specification is required to be collapsed at a point of consumption by specifying what was left unspecified. In an embodiment, a template takes a multi-dimensional attribute without collapsing (some or all) dimensions to derive a new multi-dimensional attribute.

In an embodiment, a finite-state-machine (FSM) attribute is used. For instance, a funnel attribute can be utilized as an FSM-style attribute.

In an embodiment, a template supports utilization of simple object identifiers (object IDs) and/or compound object IDs. A simple object ID comprises a single ID part. A compound object ID comprises multiple ID parts. For instance, a template can support an object with an ID attribute that defines an ordered list of ID part names. In an embodiment, the ID attribute can be renamed by a user or a service interfacing with activator 104. In an embodiment, the object has a set of validation rules. The validation rules are utilized to remove instances that would have invalid IDs. In some embodiments, the parts of an object ID are accessible using a dot notation, e.g., <ID Attribute>.<Part Name>. In an embodiment, a split-event property of an object specifies how it is getting split (e.g., a set of column names) and how each of the column names (e.g., that are utilized for splitting) maps to one of the ID parts specified in the ID attribute of the object. A derived event can be utilized to split or concatenate columns to align an event's columns with the requirements of an object's ID attribute. In some embodiments, expressivity of derived events evolves overtime to enable more scenarios.

In some examples, an object is a singleton. For instance, a "World" object is a singleton object that has an empty ID Tuple attribute and no ID part attributes. In an embodiment, the ID of the World object is null. Other objects can also be singletons (e.g., with an empty ID Tuple attribute and no ID part attributes).

In some embodiments, scalar triggers are triggered over attributes (e.g., and not events); however, embodiments described herein are not so limited. In some embodiments, a special scalar attribute is over attributes (e.g., and not events). In this example, a helper attribute is avoided where the helper attribute only serves computing of a scalar attribute by selecting a field in an event, thereby reducing compute resources. In some embodiments, a basic scalar attribute is over attributes and events. In an embodiment, activator 104 (or a service interfacing therewith) can (e.g., automatically) create a supporting attribute. In an embodiment, the supporting attribute is marked as "hidden."

In some embodiments, model entities are provided in an object container, have user metadata (e.g., a display name, a description, a UI (UI) visibility, and/or the like), and have a durable document ID. In examples, a document ID is a reference to a model entity. For entity documents (e.g., template instance documents), a soft delete can be used. An example of a soft delete is a flag in user metadata.

In some embodiments, a World entity is not provided in an object container. Alternatively, in an embodiment, a "reflex item" can be allowed to contain more than one World container.

In some embodiments, a constructed entity has an affinity to another entity. For example, a "derived event" entity is in affinity to the event it is derived from, a "computed attribute" entity is in affinity to its object, etc. In an embodiment, a constructed entity's affinity is utilized in determining where an entity is placed in a hierarchy.

In embodiments, a model entity can be tagged with an origin. The origin is utilized to mark an entity with a Generator and Scenario ID pair. For instance, a model entity introduced by a (e.g., business intelligence) data visualization application (e.g., "Intelligence App") would be tagged {Generator: "Intelligence App", Scenario ID "1234"} where the scenario ID would be the stable ID of the report and visual that was used to generate the model.

Example event templates will now be described. For this example, a source event template, a typed event template, a split event template, a derived event template, a filtered event template, a tagged event template, an object-view event template, and an annotation event template are described; however, other implementations can utilize other event templates. In the following examples, several definition outlines are provided for illustrative purposes. The definition outlines provide an approximate overview of a respective template; however, implementations of the templates may vary.

*Source Event -* A source event template is used to generate an event from a source (e.g., at world-level). The source event template comprises a source event constructor with the "World" affinity. Based on the source, the source event constructor creates an event entity (also referred to as a "source event entity") that exposes (e.g., all) event records from that source (e.g., regardless of event type). In an embodiment, the created event entity is a union over event types emitted by the source. An example definition outline for a source event template is provided as follows in the **Source Event Outline** example.

| **Source Event Outline** | |
|---|---|
| 1: | **Select** |
| 2: | source |

*Typed Event -* A typed event template is used to filter input events by (e.g., one) event type. A typed event template comprises a typed event constructor with an "input event" affinity. Based on an input event (e.g., a source event), the typed event constructor creates an event entity that is filtered by a selected event type. In an example, the selected event type is a source event. For instance, as a non-limiting example, a version of derived events can support forming the union of multiple events, (e.g., potentially) resulting in a mix of output event types. In a further embodiment, a typed event is utilized to select one type. An example definition outline for a typed event template is provided as follows in the **Typed Event Outline** example.

| **Typed Event Outline** | |
|---|---|
| 1: | Select |
| 2: | event |
| 3: | event type |

*Split Event -* A split event template is utilized for splitting an event by ID to bring into an object. The split event template comprises a split event constructor with a "parent object" affinity. In an embodiment, the split event constructor splits an event from an outer object (e.g., including World) for use in an object. The splitting definition maps a split-by field name of the event to identifier parts defined in the object's identifier part attributes. In an embodiment, a field is mapped to each of the object's identifier parts. In an example, when splitting an event into an object that has an empty identifier tuple attribute (e.g., and no identifier part attribute), the event is brought into a singleton object (e.g., a folder). In an example, an event marked as *authoritative* (e.g., as a UI default) contributes to an object's identifier space. In another example, an event marked *auxiliary* does not contribute to an object's identifier space. An example of a definition outline of the split event template is shown as follows in the **Split Event Outline** example.

| **Split Event Outline** | |
|---|---|
| 1: | Select |
| 2: | outer-level event |
| 3: | Map |
| 4: | (field name, ID Part attribute reference)* |
| 5: | Options |
| 6: | authoritative \| auxiliary |

*Derived Event -* A derived event template is utilized for row-by-row transformation. In an embodiment, the derived event template comprises a derived event constructor having a "selected event" affinity. The derived event constructor is used for record-by-records operations on a single event. In an example, references to other entities (e.g., attributes) are not allowed. In an example, a compute expression in a derived event constructor (e.g., only) references fields that have a defined default. In an example, filter conditions in a derived event constructor (e.g., only) reference fields that have a defined default and/or are computed in the derived event constructor. In another example, records that do not have a default for the compute expression and/or the filter condition are dropped. In an example, the derived event constructor renames a field by computing a (e.g., trivial) new field (e.g., <new> := <old>) followed by a drop of the old field. This way renames do not interfere with the flow. An example definition outline of a derived event template is shown as follows in the **Derived Event Outline** example.

| **Derived Event Outline** | |
|---|---|
| 1: | Select |
| 2: | event |
| 3: | (field name, default)+ |
| 4: | (drop invalid field rule)* |
| 5: | scalar condition |
| 6: | Compute |
| 7: | (new field definition)* |
| 8: | new field name |
| 9: | compute expression |
| 10: | Drop \| Keep |
| 11: | (field name)* |

*Filtered Event -* A filtered event template tis used for union over (e.g., all) sources and filtering by per-key/value filters. In an embodiment, a filtered event template comprises a constructor having the "World" affinity. Based on (e.g., all) events and/or sources connected, a filtered event constructor creates an event entity at world-level that is the union of the events and/or sources, filtered according to one or more specified validity rules. An example definition outline of a filtered event template is provided in the following **Filtered Event Outline** example.

| **Filtered Event Outline** | |
|---|---|
| 1: | Select |
| 2: | event |
| 3: | (field name, default) + |
| 4: | (drop invalid field rule)* |
| 5: | scalar condition |

*Tagged Event -* A tagged event template is used for union over (e.g., all) sources and filtered by event type. In an embodiment, a tagged event template comprises a tagged event constructor with the "World" affinity. Based on (e.g., all) events and/or sources connected, a tagged event constructor creates an event entity at world-level that is the union over the events and/or sources. In an example, the created event entity is filtered by one or more selected tags. In a further example, a version constraint is used to require a specific version for a tag. In this further example, records not containing the specific tag are dropped. An example definition outline for the tagged event template is shown below in the **Tagged Event Outline** example.

| **Tagged Event Outline** | |
|---|---|
| 1: | Select |
| 2: | (tag [version constraint])+ |
| 3: | constraint: ignoreVersion \| atLeastVersion \| exactVersion |

*Object-View Event -* An object-view event provides a period state snapshot of an object view. In an embodiment, an object-view event template comprises an object-view event constructor with the "parent object" affinity. The object-view event constructor creates a new event based on periodic snapshots of a (e.g., directly or indirectly) nested object over specified attributes at specified time grain. If the outer object is not World, the created event is aligned with the outer object's identifier specification. An example definition outline of the object-view event template is shown as follows in the **Object-View Event Outline** example.

| **Object-View Event Outline** | |
|---|---|
| 1: | Select |
| 2: | nested object |
| 3: | Project |
| 4: | (attribute)+ |
| 5: | time grain |

*Annotation Event -* An annotation event template retrieves (e.g., one) annotation kind on a model entity. In an embodiment, an annotation event template comprises an annotation event constructor with an "annotated entity" affinity. Examples of annotated entities include, but are not limited to, events, attributes, and triggers. An annotation event constructor looks up an annotation event, selected by name, on an annotated entity. In embodiments, annotation events (e.g., a trigger activation history) are per entity or not per entity. In an example, selecting an annotation event on a selected entity filters the internal event to (e.g., only) show annotations on the selected entity. An example definition outline of the annotation event template is shown as follows in the **Annotation Event Outline** example.

| **Annotation Event Outline** | |
|---|---|
| 1: | Select |
| 2: | annotated entity |
| 3: | name of annotation event |

Example attribute templates will now be described. Attributes are of a definitive data type. In this example, either by the nature of its defining computation or by type assertion, the data type of the value of the attribute's time series is known. If the type can be inferred reliably from the definition of an attribute, the type assertion step is completed automatically. Alternatively, the type assertion step is presented as a choice in a UI. In an embodiment, a type assertion forces the data type of a value. In an embodiment, if a value is not cast to an asserted type (e.g., because it cannot be cast to that type), the value is cast as *null.* For this example, an ID tuple attribute template, an ID part attribute template, a basic event attribute template, a basic computed attribute template, an event-metric attribute template, an object-metric attribute template, a funnel attribute template, a condition attribute template, and a classification attribute template are described; however, other implementations can utilize other attribute templates.

*ID Tuple Attribute* - An ID tuple attribute template defines the structure of an object's ID. An ID tuple attribute comprises an ID tuple attribute constructor having the "parent object" affinity. The ID tuple attribute defines the identifier structure of the owning object as an ordered list of identifier parts. In an implementation, there is one ID tuple attribute per object. In an embodiment, the structure is an ordered list of references to ID part attributes (e.g., where ID part attributes are listed once). In an example where the list is empty, an object container is created as a singleton (e.g., a folder). In an example, the ID tuple attribute is a complex data type attribute (e.g., an array of ID part values). In an embodiment, the ID tuple attribute is automatically generated responsive to (or as part of) creation of a new object in a context of creating an object from an event to be split. In an embodiment, an ID attribute has a fixed name of "ID". In an embodiment, the ID attribute serves an API when listing ID values as ordered tuples. In an embodiment, the ID Tuple attribute returns a (e.g., non-scalar) time series. For instance, in an embodiment the time series returned is of a list data type. In an embodiment, the values of the list are ID parts (e.g., in an order determined by a definition of the ID Tuple attribute). In embodiments, the data types of the values in the list are the types of the corresponding ID part attribute(s). An example definition outline of an ID tuple attribute template is shown as follows in the **ID Tuple Attribute Outline** example.

| **ID Tuple Attribute Outline** | |
|---|---|
| 1: | ID Structure |
| 2: | (ID part attribute reference)* |

*ID Part Attribute* - An ID part attribute template provides access to parts of an object ID. The ID part attribute template comprises an ID part attribute constructor with the "parent object" affinity. The ID part attribute constructor provides access to an ID part. A set of optional validation rules can be specified to rule out invalid instances. In an embodiment, the validation rules operate over already type-cast values (e.g. and can rely on the asserted type). In an embodiment, ID part attributes are listed once in an ID tuple attribute. An ID part attribute of an object has a display name that can be changed by the user, in an embodiment. An example definition outline of the ID part attribute template is shown as follows in the **ID Part Attribute** example.

| **ID Part Attribute Outline** | |
|---|---|
| 1: | Type Assertion |
| 2: | Number \| Text \| Logical \| DateTime \| TimeSpan \| Validation |
| 3: | (drop invalid ID rule)* |
| 4: | scalar condition |

*Basic Event Attribute* - A basic event attribute template derives event row-by-row from an event. The basic event attribute template comprises a basic event attribute constructor with the "selected event" affinity. A basic event attribute constructor computes over a set of selected fields of an event. In an embodiment, a record in an event is selected and validated in isolation (e.g., isolation by providing field defaults for fields accessed by validation rules). For a record passing validation, a field is selected and a basic computation is performed over that field. The result type of the chosen expression form determines the data type of the attribute. An example definition outline of the basic event attribute template is shown as follows in the **Basic Event Attribute Outline** example.

| **Basic Event Attribute Outline** | |
|---|---|
| 1: | Select |
| 2: | event |
| 3: | field name |
| 4: | [ default ] |
| 5: | //(field name, default)+ |
| 6: | //(drop invalid field rule)* |
| 7: | // scalar expression |
| 8: | [summary] |
| 9: | type assertion |

*Basic Computed Attribute -* A basic compound attribute template computes an attribute over other attributes. The basic compound attribute template comprises a basic compound attribute constructor with the "initially selected attribute" affinity. The basic computed attribute constructor computes over one or more selected attributes. The result type of the chosen expression form determines the data type of the attribute. An example definition outline of the basic computed attribute template is shown as follows in the **Basic Computed Attribute Outline** example.

| **Basic Computed Attribute Outline** | |
|---|---|
| 1: | Select |
| 2: | Attribute |
| 3: | Compute |
| 4: | scalar expression |
| 5: | [summary] |
| 6: | type assertion |

*Event-Metric Attribute* - An event-metric attribute template provides a multi-dimensional attribute over an event (e.g., row-by-row). The event-metric attribute template comprises an event-metric attribute constructor with the "selected event" affinity. The event-metric attribute constructor auto-summarizes a dimension using an aggregate function (e.g., when not otherwise specified upon query). In an implementation, if time grain or the aggregate function are not specified, they are used as dimensions when querying over the metric. In an embodiment, defaults are defined for selected fact fields, thereby enabling a fact filter to work record-by-record. An example definition outline of the event-metric attribute template is shown as follows in the **Event-Metric Attribute Outline** example.

| **Event-Metric Attribute Outline** | |
|---|---|
| 1: | Select Fact |
| 2: | event |
| 3: | (field name, default)* |
| 4: | (filter condition)* |
| 5: | Aggregate |
| 6: | [time grain] |
| 7: | [agg function] |
| 8: | [fact field name] |
| 9: | (Select Dimension)* |
| 10: | (fields name, default) |
| 11: | optional \| required |

*Object-Metric Attribute* - An object-metric attribute template provides a multi-dimensional attribute over periodic object-view snapshots. The object-metric attribute template comprises an object-metric attribute constructor with the "parent object" affinity. The object-metric attribute constructor creates a multi-dimensional attribute based on periodic snapshots of a (e.g., directly or indirectly) nested object over specified attributes at specified time grain. In an embodiment, a (e.g., optional) dimension is auto-summarized using the aggregate function when not specified otherwise upon query. In an example, if time grain or the aggregate function are not specified, they are utilized as dimensions when querying over the metric. An example of a definition outline of an object-metric attribute template is shown as follows in the **Object-Metric Attribute Outline** example.

| **Object-Metric Attribute Outline** | |
|---|---|
| 1: | Select |
| 2: | nested object |
| 3: | (filter condition)* |
| 4: | Aggregate |
| 5: | attribute |
| 6: | [time grain] |
| 7: | [agg function] |
| 8: | (Select Dimension)* |
| 9: | attribute |
| 10: | optional \| required |

*Funnel Attribute -* A funnel attribute template provides a state-machine attribute to model a funnel. The funnel attribute template comprises a funnel attribute constructor with the "parent object" affinity. The funnel attribute constructor derives a state from observations over an event or an attribute. In examples, a transition detector references an attribute. In an implementation, a primary source for the funnel attribute is arbitrary. In another implementation, the select step of the funnel attribute is omitted. An example of a definition outline of a funnel attribute template is shown as follows in the **Funnel Attribute Outline** example.

| **Funnel Attribute Outline** | |
|---|---|
| 1: | [Select] |
| 2: | attribute |
| 3: | Initial State |
| 4: | label: Text |
| 5: | (Follow State)+ |
| 6: | label: Text |
| 7: | transition detector |
| 8: | timeout: TimeSpan |

*Condition Attribute -* A condition attribute template provides a disjunctive normal form condition over other attributes. The condition attribute template comprises a condition attribute constructor with the "parent object" affinity. In an embodiment, each disjunctive condition step of a condition attribute constructor can contain one or more conjunctive conditions as substeps. In an implementation, a conjunctive condition is a predicate over the primary source or (e.g., any of) another one or more attributes. In an example, a predicate is a logical condition over other attributes. An example definition outline of a condition attribute template is shown as follows in the **Condition Attribute Outline** example.

| **Condition Attribute Outline** | |
|---|---|
| 1: | (DisjCondition)+ |
| 2: | (ConjConditions)+ |
| 3: | predicate |

*Classification Attribute -* A classification attribute template classifies an object state (and/or other attributes) into enumeration ("enum") values. The classification attribute template comprises a classification attribute constructor with the "selected object" affinity. A classification attribute comprises a classifying expression that maps an object state (e.g., based on other attributes) into an enumeration of values. In an example, the mapping rules are evaluated in a specified order, stopping with the first rule's predicate that evaluates as *true.* In an example, if no rules apply, the classification value is *null.* An example definition outline for a classification attribute template is shown as follows in the **Classification Attribute Outline** example.

| **Classification Attribute Outline** | |
|---|---|
| 1: | (Mapping Rule)+ |
| 2: | conjunctive condition, classification value |

Example trigger templates will now be described. Triggers produce events as outputs. The event records are a composition of system and user-provided (e.g., enrichment) fields, in an embodiment. An Act step in a trigger collects information on what enrichment data should be added. In an embodiment, the types of picker fields in a trigger template are the data types of what is needed, not the source of the data. The data can be a user provided constant (e.g., from interaction with a UI or an API) or it can be a reference to an attribute or event field accessible in the context of the picker. For this example, an attribute trigger template, an attribute anomaly trigger template, and an event trigger template are described; however, other implementations can utilize other trigger templates.

*Attribute Trigger -* An attribute trigger template is used for a trigger over an attribute (e.g., a scalar trigger). In an embodiment, an attribute trigger template comprises an attribute trigger constructor with the "selected attribute" affinity. The attribute trigger constructor triggers over an attribute. In an aspect, the attribute trigger supports no-heartbeat detection (e.g., detecting a lack of a heartbeat signal within a predetermined amount of time). An example definition outline of an attribute trigger template is shown as follows in the **Attribute Trigger Outline** example.

| **Attribute Trigger Outline** | |
|---|---|
| 1: | Select |
| 2: | attribute |
| 3: | (filter expression)* |
| 4: | Scalar condition |
| 5: | [summary] |
| 6: | Detect |
| 7: | state detector |
| 8: | \| change detector |
| 9: | \| no-heartbeat detector |
| 10: | (Dimension Filter)* |
| 11: | attribute |
| 12: | filter expression |
| 13: | scalar condition |
| 14: | Act |

*Anomaly Attribute Trigger -* An anomaly attribute trigger template is used for an anomaly-detecting trigger over an attribute. An anomaly attribute trigger template comprises an anomaly attribute trigger constructor with the "selected attribute" affinity. This constructor detects anomalies in an attribute. While anomaly attribute trigger is shown as its own template in this example, in an alternative implementation, the anomaly attribute trigger is a choice in the Detect step of the Attribute Trigger. An example definition outline of an anomaly attribute trigger template is shown in the **Anomaly Attribute Trigger Outline** example.

| **Anomaly Attribute Trigger Outline** | |
|---|---|
| 1: | Select |
| 2: | attribute |
| 3: | (compute expression)* |
| 4: | scalar compute |
| 5: | (filter expression)* |
| 6: | scalar condition |
| 7: | [summary] |
| 8: | Detect |
| 9: | anomaly detector |
| 10: | seasonality period |
| 11: | sensitivity |
| 12: | (Dimension Filter)* |
| 13: | attribute |
| 14: | filter expression |
| 15: | scalar condition |
| 16: | Act |

*Event Trigger -* An event trigger template is used for a trigger over an event (e.g., row-by-row). In an embodiment, an event trigger template comprises an event trigger constructor with the "selected event" affinity. In an embodiment, fields used in the *Detect* step of the event trigger constructor are listed in the *Select* step and assigned a default value. In an embodiment, the default values are filled in automatically. Alternatively, default values are provided based on user input or user settings. In an embodiment, a filter or detector expression references attributes (e.g., but not other events). An example definition outline of an event trigger template is shown in the following **Event Trigger Outline** example.

| **Event Trigger Outline** | |
|---|---|
| 1: | Select |
| 2: | event |
| 3: | (field name, default)* |
| 4: | (filter condition)* |
| 5: | Detect |
| 6: | event detector |
| 7: | (field condition)+ |
| 8: | \|no-heartbeat detector |
| 9: | (Dimension Filter)* |
| 10: | scalarAttributeOr |
| 11: | filler expression |
| 12: | Act |

An example query template will now be described. In an embodiment, a query template supports the definition of a query such that it can be saved as part of an exploration experience (e.g., an operation for determining a potential future query). In an embodiment, a query template supports an interactive query as part of a data API. The following example provides one non-limiting example of a query template; however, in some implementations, other types of query template can be utilized.

*Query -* A query template is used for an interactive query. In some embodiments, the query template comprises one or more modifier options. In an embodiment, the query template comprises a query constructor with the "World" affinity. In an example, a query constructor comprises a reference to a step and/or aspect of an entity's definition. For instance, as a non-limiting example, a trigger template's *Detect* step is a separate "output" from its *Act* step. In an embodiment, a query template is utilized as part of an exploration experience operation. In an example, a query template is used to define a data query API. In an alternative example, a data query API is used without being defined by a query template. In an embodiment, the query targets a single model entity (e.g., an event, an attribute, a trigger, an object, and/or the like). In an embodiment, World can be targeted. In an embodiment, the query is over a specified time range and/or a specified object population. For non-object entities, in an embodiment, the population selection refers to the immediately enclosing object of that entity, e.g., to the ID space as defined by the object's ID tuple and authoritative Split Events. For singleton objects (e.g., empty ID Tuples), the population selection is disabled, in an implementation. In an embodiment, the **inline** construct of a query template allows for inline definitions of entities in a query. This is reflected in the query API as a separate document referenced from the primary query document, in an example. An example definition outline for a query template is shown as follows in the **Query Outline** example.

| **Query Outline** | |
|---|---|
| 1: | Query |
| 2: | select time range |
| 3: | select population |
| 4: | absolute time range |
| 5: | \| most recent duration |
| 6: | entity to query |
| 7: | entity reference |
| 8: | (step-in-definition reference)* |
| 9: | \| inline entity definition |

Thus, several example templates and their definition outlines have been described. In embodiments, template definitions comprise one or more grammar elements. Some grammar elements are shared across several templates. Examples of grammar elements include, but are not limited to, a "scalar condition" element, a "scalar expression" element, a "summary" element, a "state condition" element, and an "act" element. Example definitions of some of the grammar elements and their definition outlines are provided as follows.

*Scalar Condition -* A condition over a chosen attribute or event field, depending on usage context. In examples, the secondary values picked in a conduction (e.g., the threshold for a numeric comparison) are constants, peer fields (e.g., when comparing a field), or an attribute. In an embodiment, a "bright line" is determined through static analysis over a template instance (or an expression graph generated from a template instance). This analysis enables engine optimization or improvement without interfering with natural expressivity (e.g., the ability of a query language to extract certain information from a database). An example definition outline of a scalar condition element is shown in the following **Scalar Condition Outline.**

| **Scalar Condition Outline** | |
|---|---|
| 1: | scalar condition |
| 2: | number value conditions |
| 3: | numberIsEqualTo \| numberIsNotEqualTo \| numberIsGreaterThan \| numberIsGreaterOrEqualTo \| numberIsLessThan \| numberIsLessOrEqualTo |
| 4: | threshold |
| 5: | \| number range condition |
| 6: | numberIsInRange \| numberIsOutsideRange |
| 7: | lowNumber |
| 8: | includeLow |
| 9: | highNumber |
| 10: | includeHigh |
| 11: | \| number enum condition |
| 12: | numberIsInList \| numberIsNotInList |
| 13: | listOfNumbers |
| 14: | \| text value condition |
| 15: | textIsEqualTo \| textIsNotEqualTo \| textIsGreaterThan \| textIsGreaterOrEqualTo \| textIsLessThan \| textIsLessOrEqualTo |
| 16: | value |
| 17: | caseSensitive |
| 18: | \| text length condition |
| 19: | textHasLengthGreaterThan \| textHasLengthLessThan \| |
| | textHasLengthEqualTo \| textHasLengthGreaterOrEqualTo \| |
| | textHasLengthLessOrEqualTo \| textHasLengthNotEqualTo |
| 20: | length |
| 22: | \| text enum condition |
| 23: | textIsInList \| textIsNotInList |
| 24: | listOfTexts |
| 25: | caseSensitive |

*Scalar Expression* - In an embodiment, a scalar expression is an expression over a chosen attribute or event field. An example definition outline of a scalar expression is provided as follows.

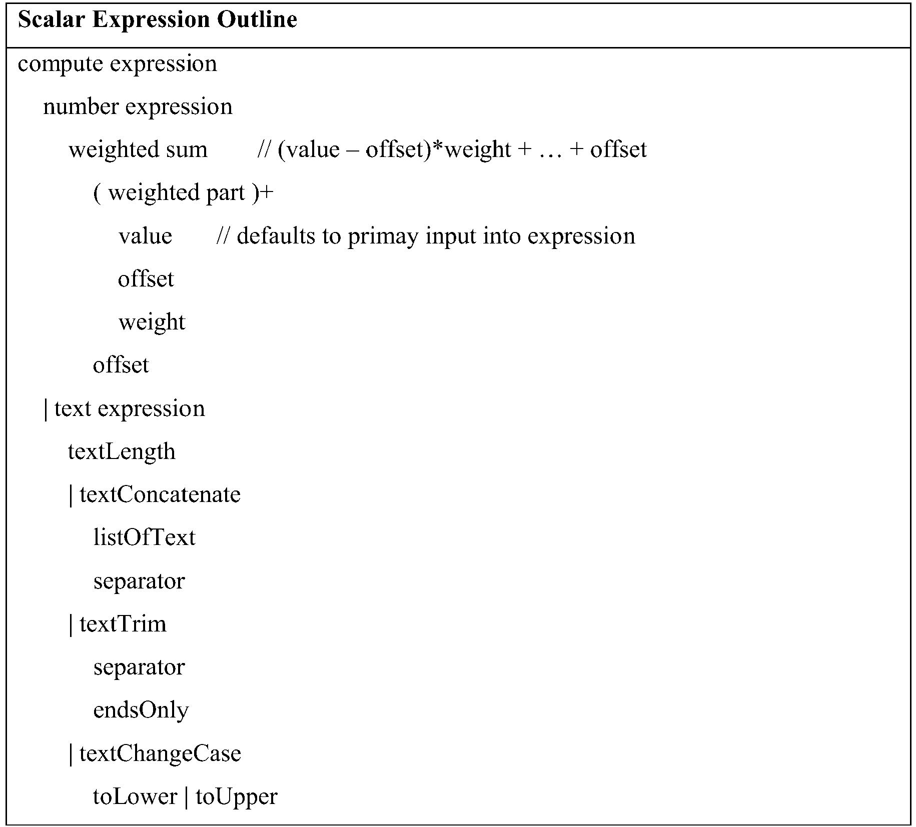

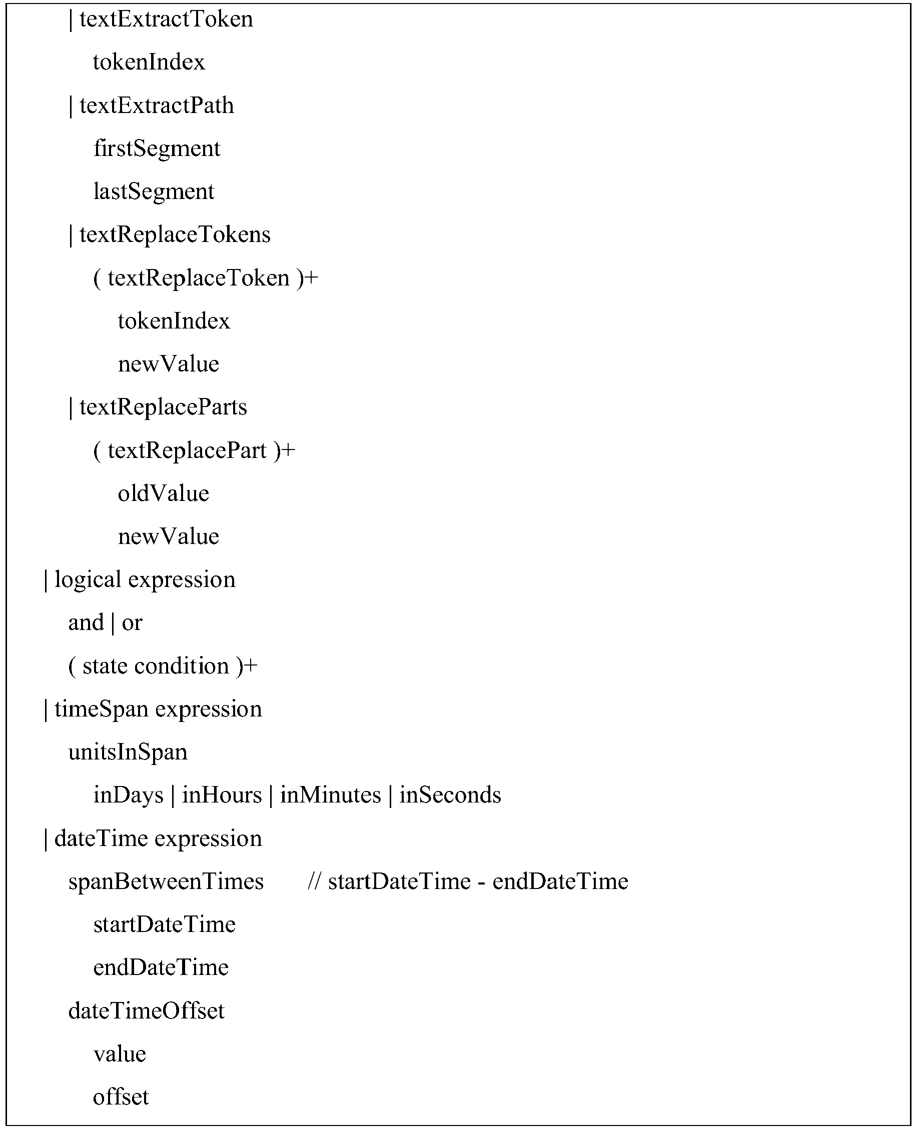

*Summary -* In an embodiment, a summary provides a number or scalar summary. An example definition outline of a summary is provided as follows.

| **Summary Outline** | |
|---|---|
| 1: | summary |
| 2: | number summary \| scalar summary |

*State Condition* - In an embodiment, a state condition provides the condition of a state. An example definition outline of a state condition is provided as follows.

| **State Condition Outline** | |
|---|---|
| 1: | state condition |
| 2: | scalar condition |
| 3: | \| logical condition |
| 4: | logicalEquals \| logicalNotEquals |
| 5: | value |

*Act* - In an embodiment, the act expression calls a binding substep, as described elsewhere herein. Example binding substeps (described further elsewhere herein) include, but are not limited to, an "EmailBinding" substep related to e-mail, a "MessagingAppBinding" substep related to a messaging application, a "WorkflowAndProcessAutomationPlatformBinding" substep related to a workflow and process automation platform service, an "IDPSelectionServiceBinding" substep related to an identity provider selection service, an "AnalyticsPlatformItemBinding" substep related to an analytics platform service, and/or other substeps related to other services for which binding can be performed.

| **Act Outline** | |
|---|---|
| 1: | Act |
| 2: | EmailBinding |
| 3: | \| MessagingAppBinding |
| 4: | \| WorkflowAndProcessAutomationPlatformBinding |
| 5: | \| IDPSelectionServiceBinding |
| 6: | \| AnalyticsPlatformItemBinding |

As described herein, entity constructors utilize steps to gather information to construct a target entity. Several example constructors have been shown in the foregoing definition outlines for templates. Further example template definitions for entity constructors are shown in the following **Table 1.**

**Table 1**

| **Entity Constructor** | **Template Definition** |
|---|---|
| Source Event | **event** SourceEvent := |
| | SourceEventStep. |
| Typed Event | **event** TypedEvent := |
| | TypedEventStep. |
| Tagged Event | **event** TaggedEvent := |
| | TaggedEventStep. |
| Filtered Event | **event** FilteredEvent := |
| | FilteredEventStep. |
| Derived Event | **event** DerivedEvent := |
| | FieldsIsDefaultsStep |
| | (AddComputedFieldStep)* |
| | DropFieldsStep. |
| Split Event | **event** SplitEvent := |
| | SplitEventStep. |
| Identity Tuple Attribute | **attribute** IdentityTupleAttribute := |
| | IdStructureStep. |
| Identity Part Attribute | **attribute** IdentityPartAttribute := |
| | IdPartStep. |
| Basic Event Attribute | **attribute** BasicEventAttribute := |
| | EventSelectStep |
| | EventComputeStep. |
| Basic Computed Attribute | **attribute** BasicComputedAttribute := |
| | AttributeComputeStep. |
| Attribute Trigger | **trigger** AttributeTrigger := |
| | ScalarSelectStep |
| | ScalarDetectStep |
| | (DimensionalFilterStep)* |
| | ActStep. |
| Attribute Anomaly Trigger | **trigger** AttributeAnomalyTrigger := |
| | AttributeSelectStep |
| | AnomalyDetectStep |
| | ActStep. |
| Event Trigger | **trigger** EventTrigger := |
| | FieldsDefaultsStep |
| | (EventDetectStep)+ |
| | (DimensionalFilterStep)* |
| | ActStep. |
| Query | **query** Query := |
| | QueryStep. |

As stated above, and as shown in **Table XYZ,** an entity constructor comprises one or more steps. Example definitions of steps are provided as follows:
***ID Structure Step*** - An example template definition of this step is as follows:

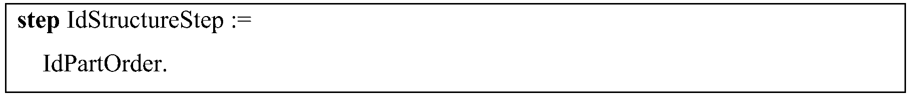

***ID Part Step* -** An example template definition of this step is as follows:

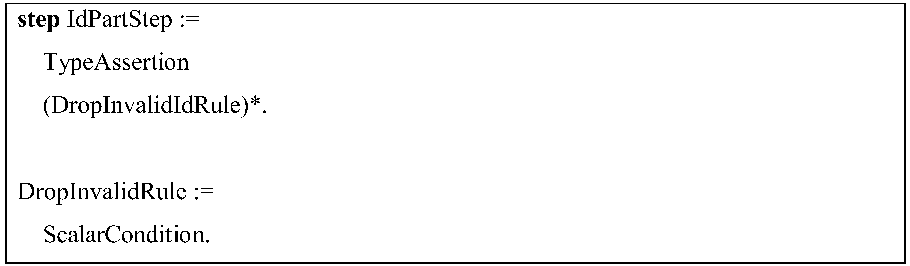

***Source Event Step* -** An example template definition of this step is as follows:

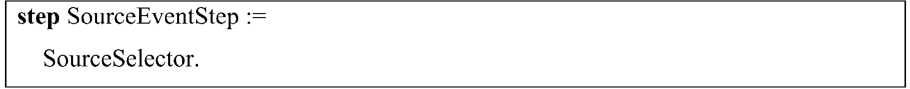

***Typed Event Step* -** An example template definition of this step is as follows:

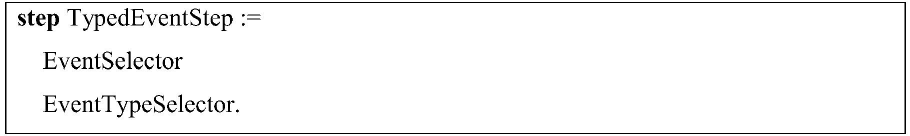

***Tagged Event Step*** - An example template definition of this step is as follows:

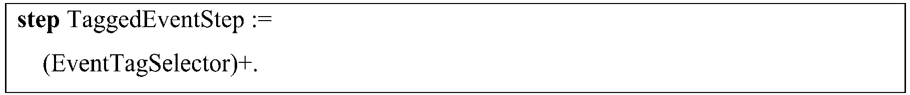

***Filtered Event Step*** - An example template definition of this step is as follows:

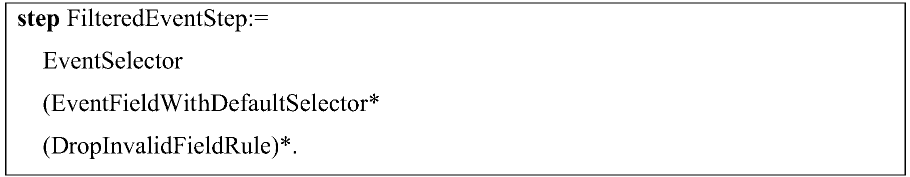

***Split Event Step*** - An example template definition of this step is as follows:

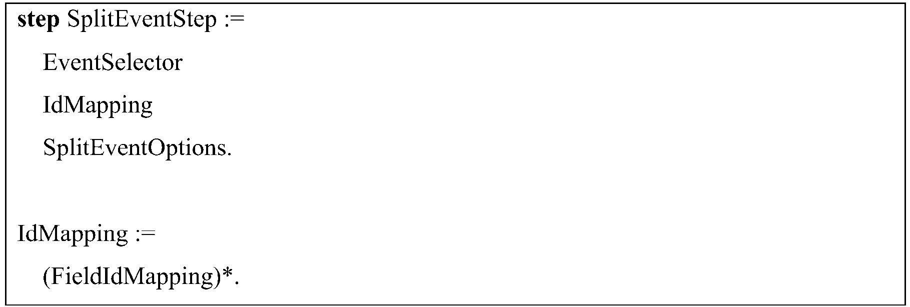

***Fields Defaults Step* -** An example template definition of this step is as follows:

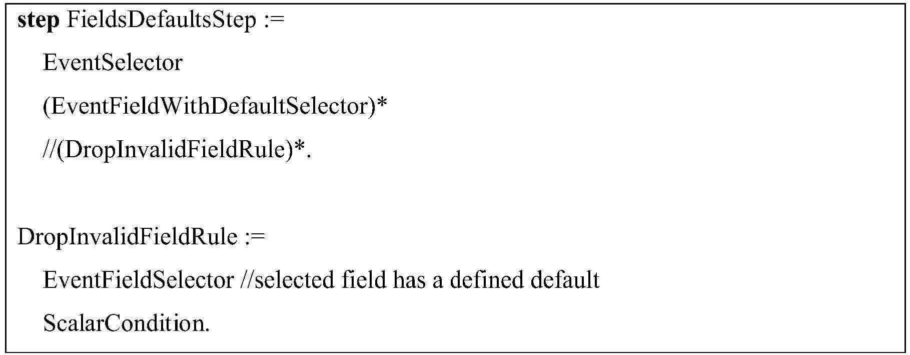

***Add Computed Field Step* -** An example template definition of this step is as follows:

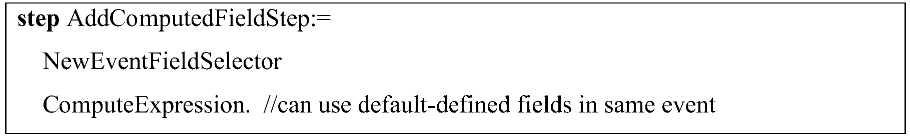

***Drop Fields Step*** - An example template definition of this step is as follows:

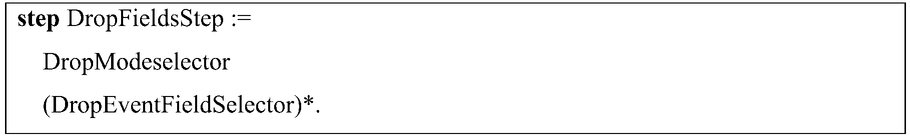

***Event Select Step*** - An example template definition of this step is as follows:

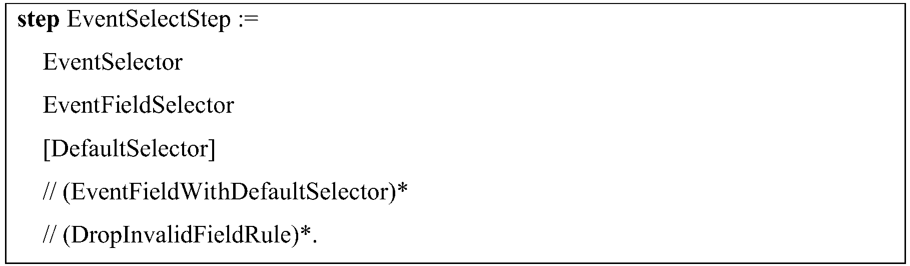

***Event Compute Step* -** An example template definition of this step is as follows:

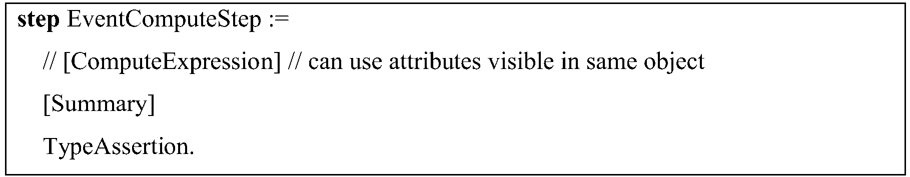

***Attribute Compute Step* -** An example template definition of this step is as follows:

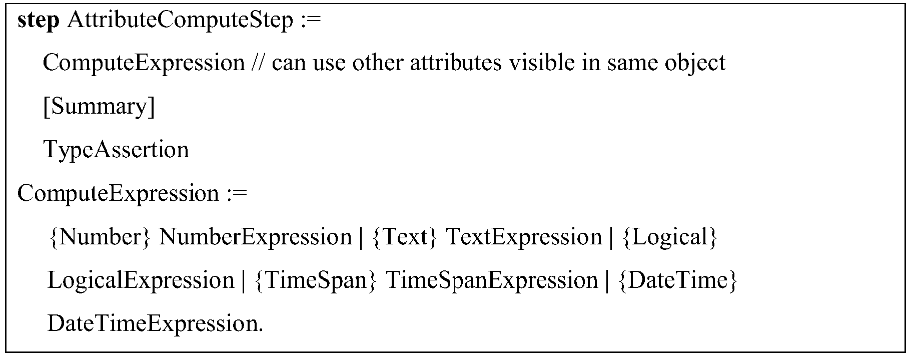

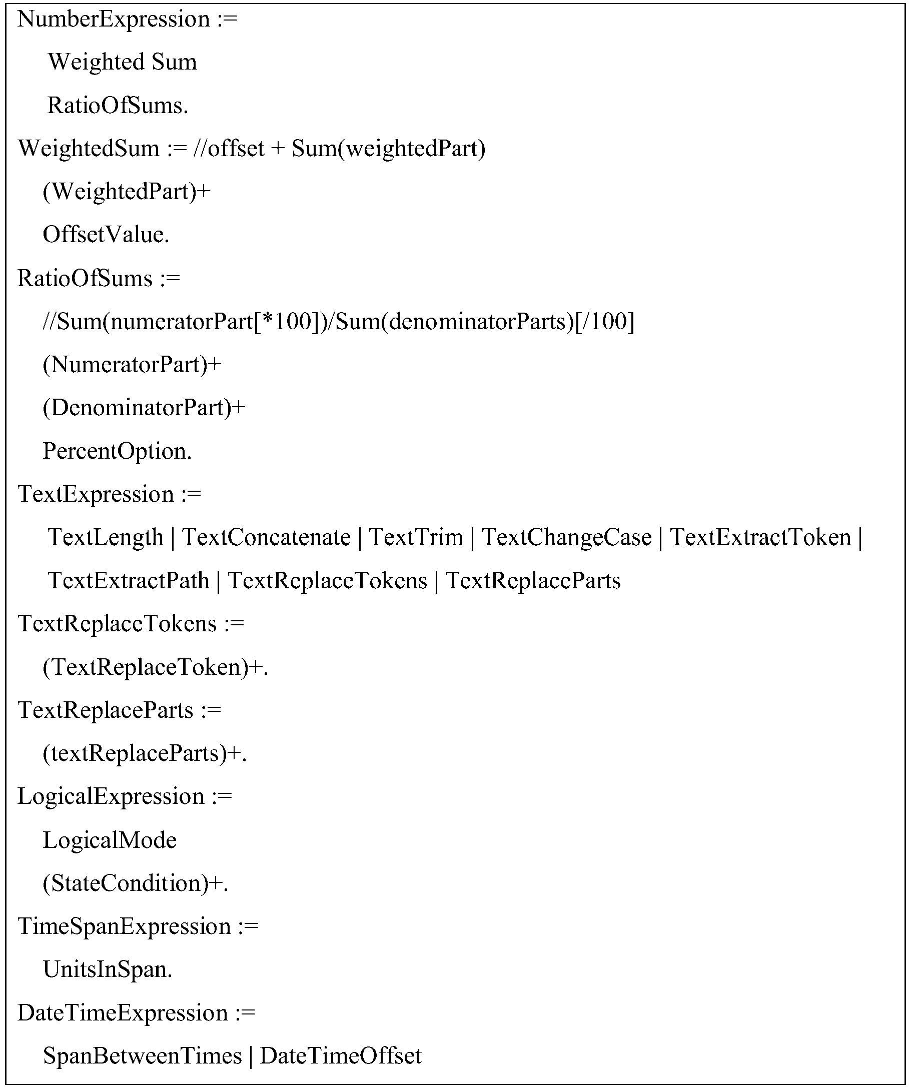

***Scalar Select Step*** - An example template definition of this step is as follows:

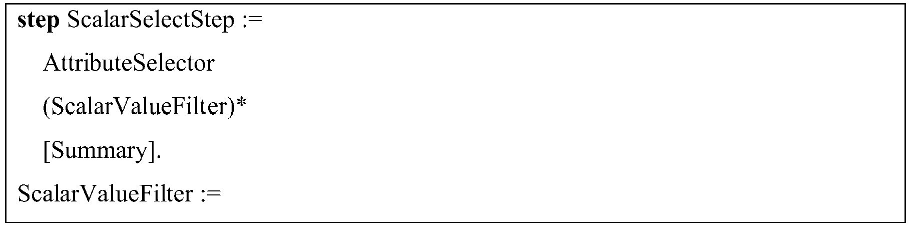

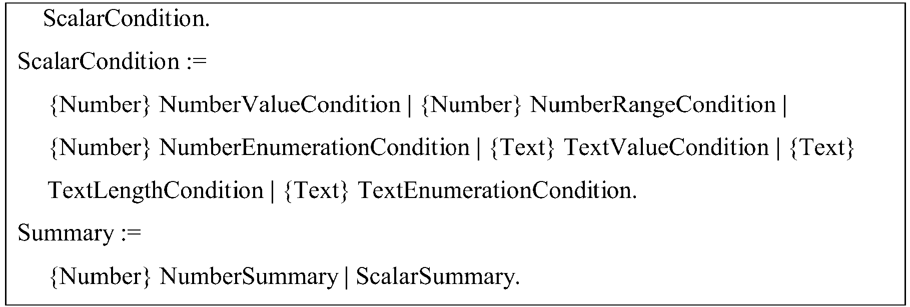

***Scalar Detect Step*** - An example template definition of this step is as follows:

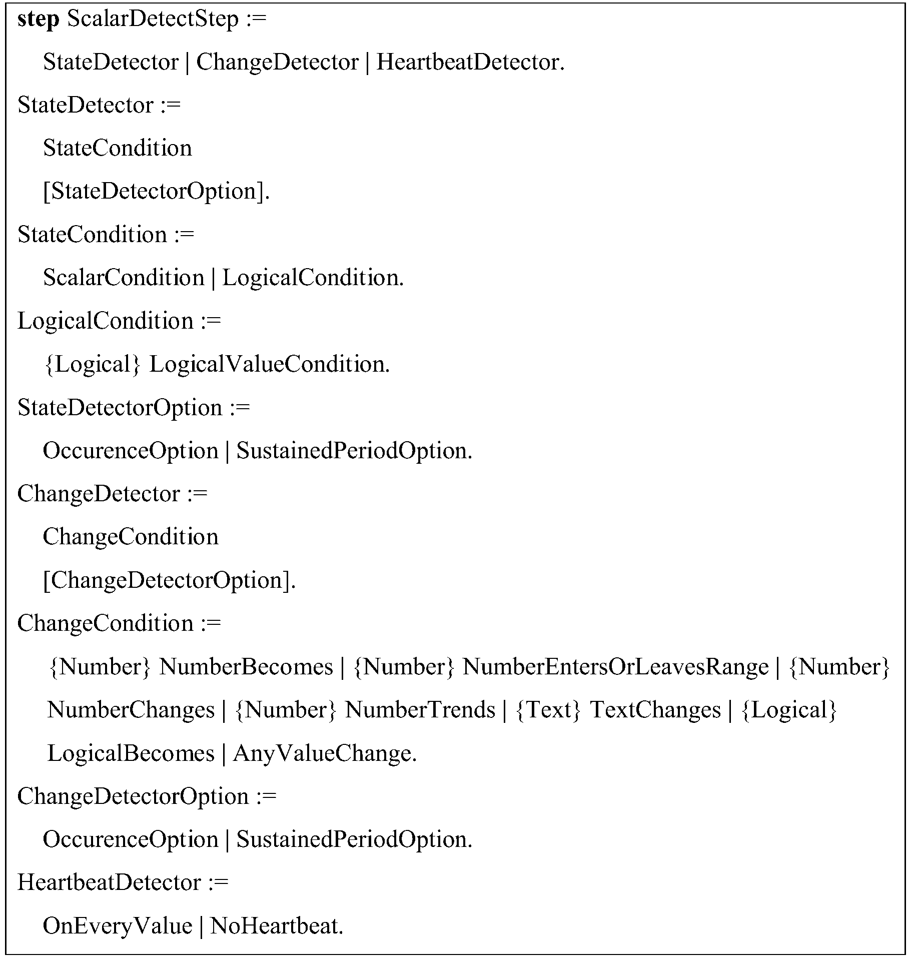

***Event Detect Step*** - An example template definition of this step is as follows:

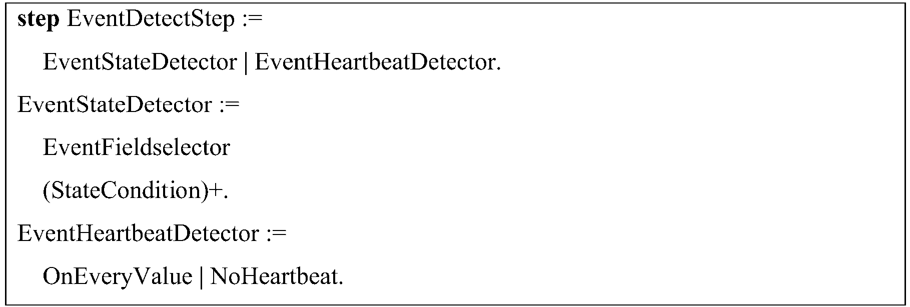

***Attribute Select Step*** - An example template definition of this step is as follows:

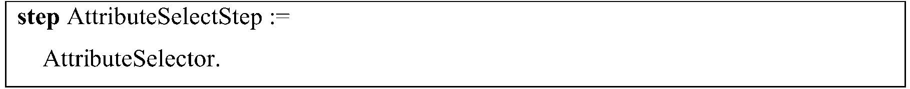

***Anomaly Detect Step*** - An example template definition of this step is as follows:

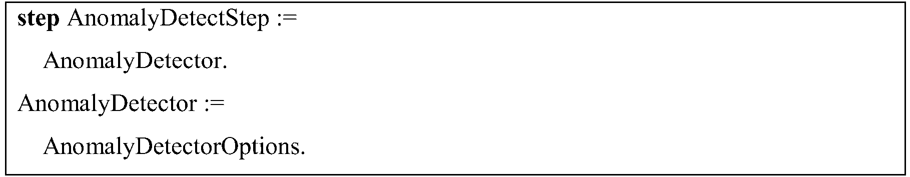

***Dimensional Filter Step*** - An example template definition of this step is as follows:

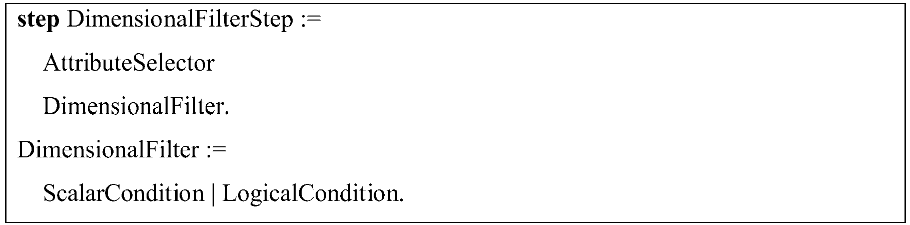

***Act Step*** - An example template definition of this step is as follows:

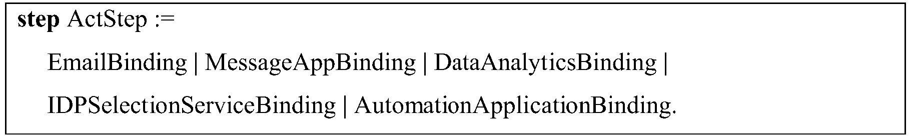

***Select Time Range Step* -** An example template definition of this step is as follows:

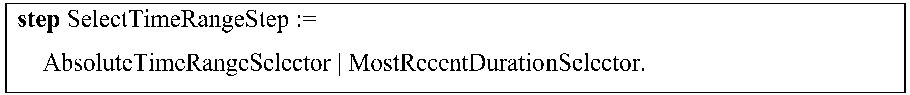

***Select Population Step* -** An example template definition of this step is as follows:

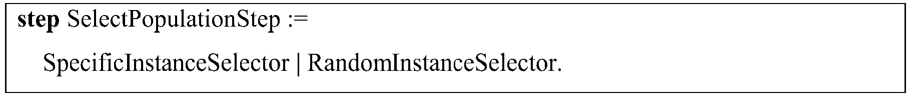

***Select Model Entity Step*** - An example template definition of this step is as follows:

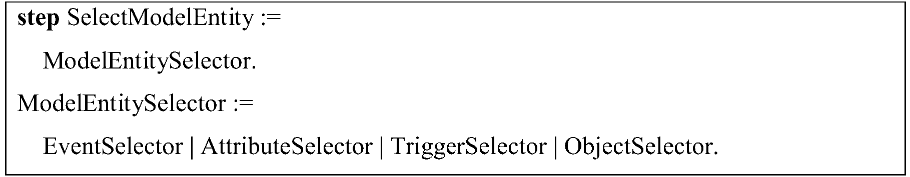

***Query Step*** - An example template definition of this step is as follows:

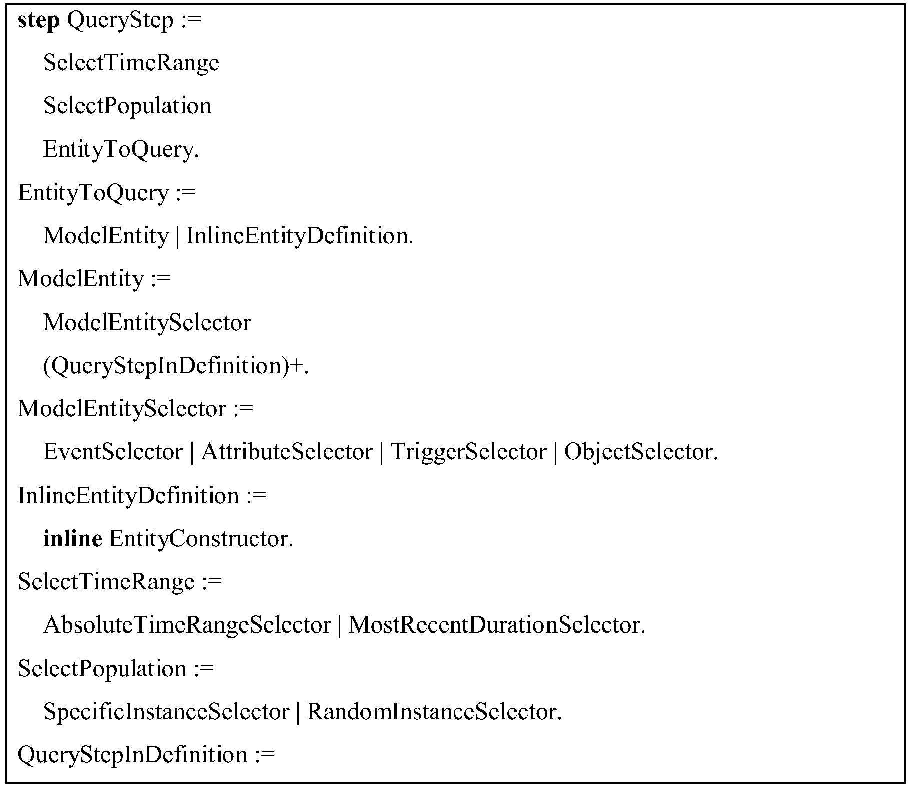

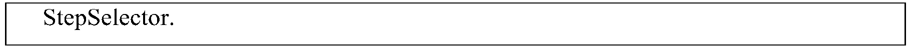

As described herein, a step can comprise one or more substeps. A substep defines which picker or pickers are to be used to gather a set of information. Example substeps and their definition outlines are shown as follows.

***ID Part Order Substep*** - An example template definition of this substep is as follows:

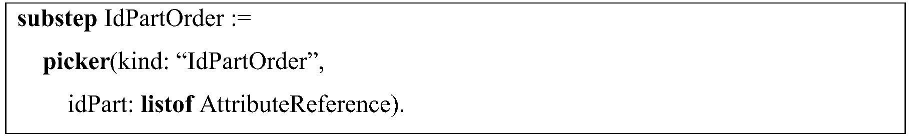

***Field ID Mapping Substep* -** An example template definition of this substep is as follows:

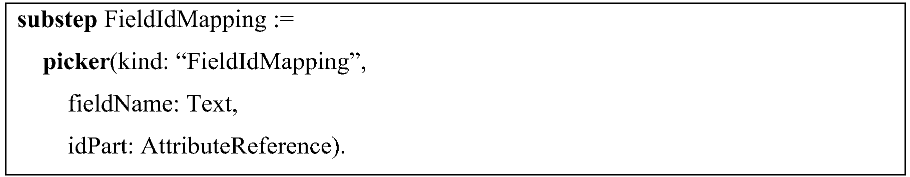

***Source Selector Substep*** - An example template definition of this substep is as follows:

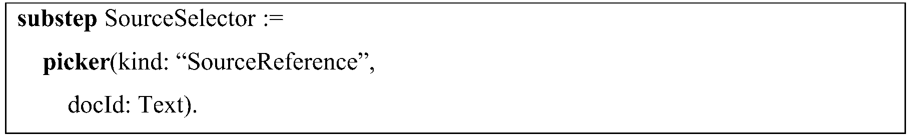

***Event Selector Substep*** - An example template definition of this substep is as follows:

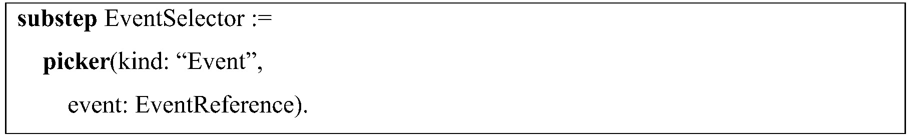

***Attribute Selector Substep*** - An example template definition of this substep is as follows:

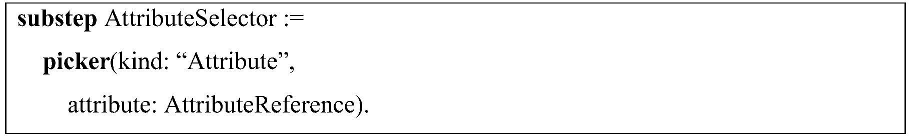

***Trigger Selector Substep*** - An example template definition of this substep is as follows:

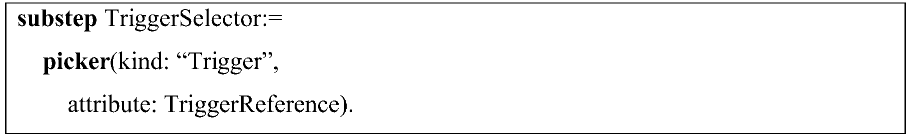

***Object Selector Substep*** - An example template definition of this substep is as follows:

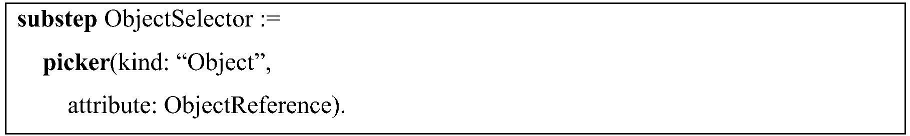

***Event Type Selector Substep*** - An example template definition of this substep is as follows:

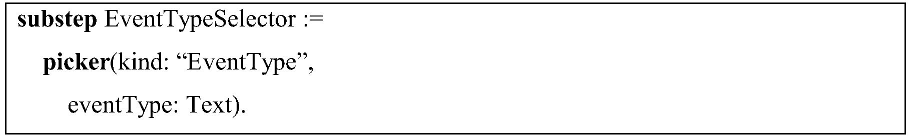

***Event Tag Selector Substep*** - An example template definition of this substep is as follows:

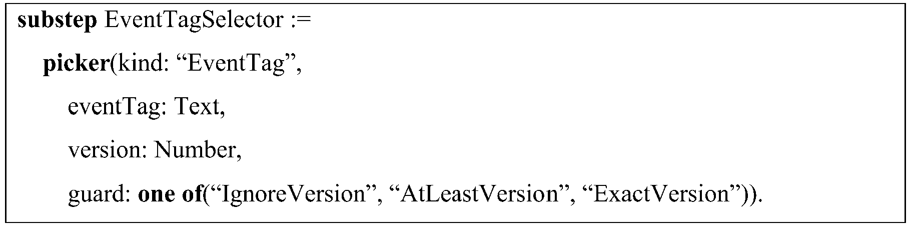

***Split Event Options Substep*** - An example template definition of this substep is as follows:

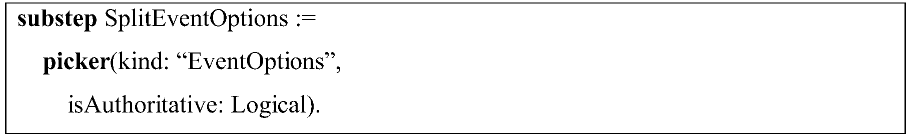

***Event Field Selector Substep* -** An example template definition of this substep is as follows:

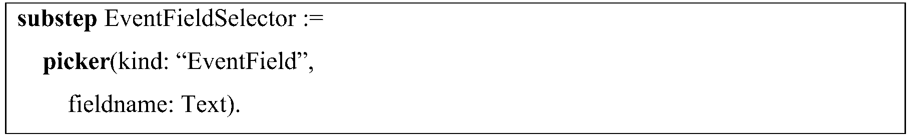

***Event Field with Default Selector Substep*** - An example template definition of this substep is as follows:

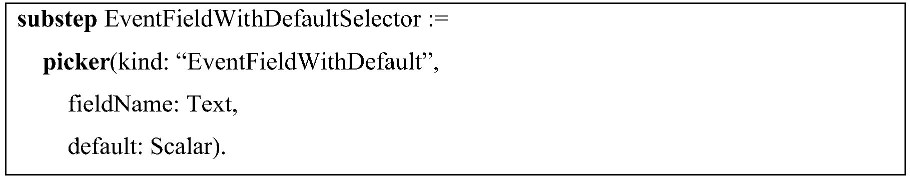

***Default Selector Substep* -** An example template definition of this substep is as follows:

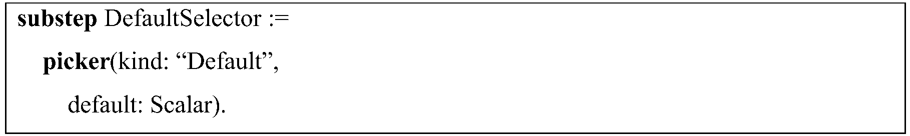

***New Event Field Selector Substep*** - An example template definition of this substep is as follows:

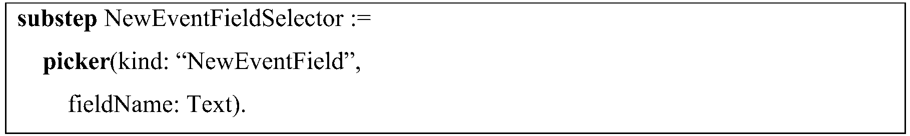

***Drop Mode Selector Substep*** - An example template definition of this substep is as follows:

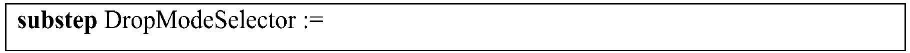

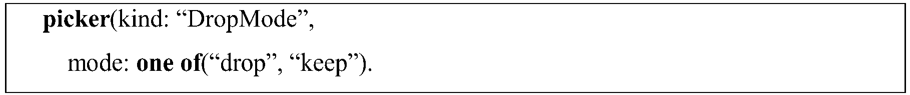

***Drop Event Field Selector Substep*** - An example template definition of this substep is as follows:

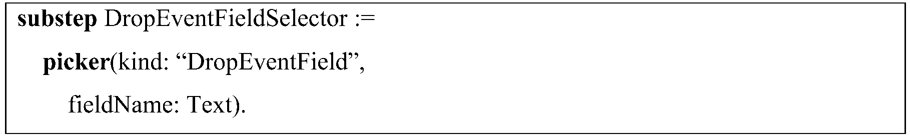

***Type Assertion Substep*** - An example template definition of this substep is as follows:

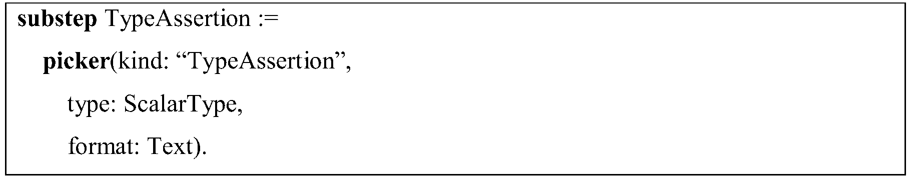

***Offset Value Substep*** - An example template definition of this substep is as follows:

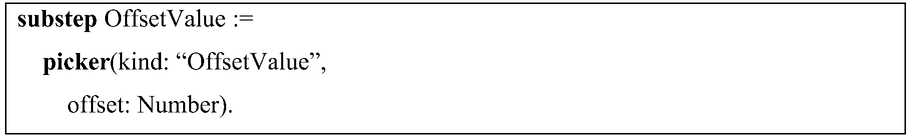

***Weighted Part Substep*** - An example template definition of this substep is as follows:

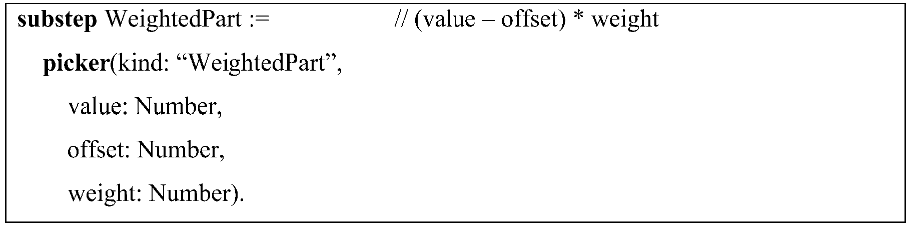

***Text Length Substep* -** An example template definition of this substep is as follows:

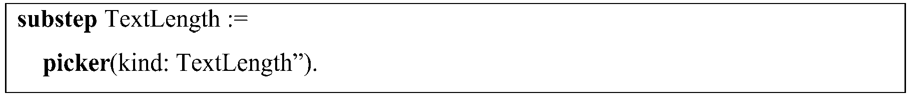

***Text Concatenate Substep*** - An example template definition of this substep is as follows:

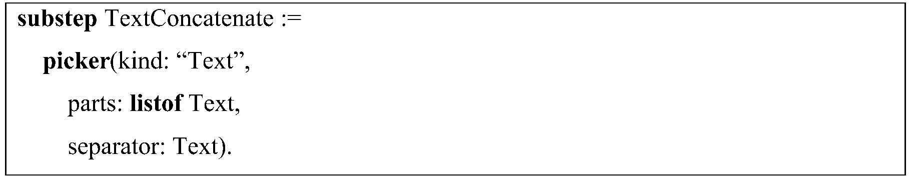

***Text Trim Substep*** - An example template definition of this substep is as follows:

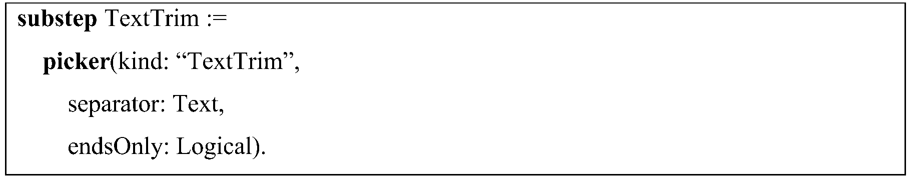

***Text Change Case Substep*** - An example template definition of this substep is as follows:

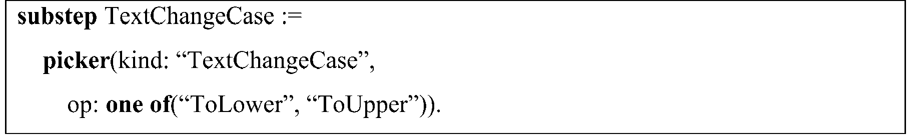

***Text Extract Token Substep*** - An example template definition of this substep is as follows:

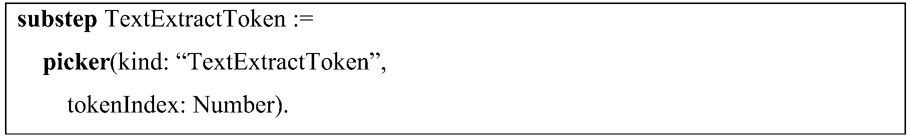

***Text Extract Path Substep* -** An example template definition of this substep is as follows:

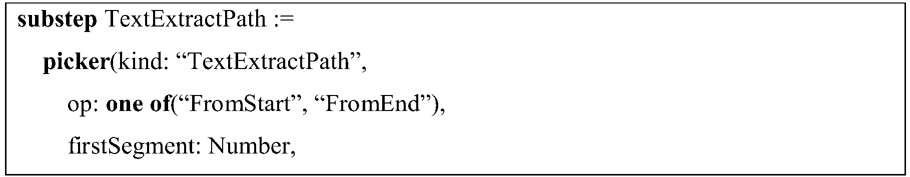

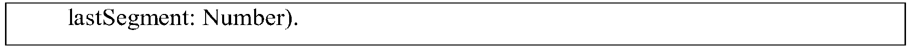

***Text Replace Token Substep*** - An example template definition of this substep is as follows:

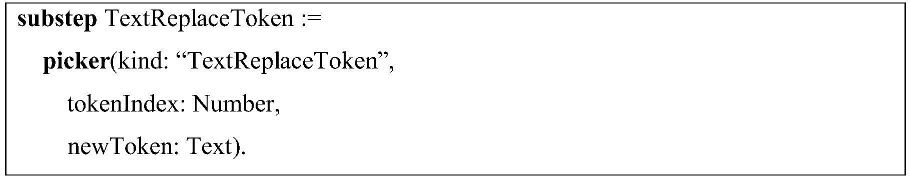

***Text Replace Part Substep*** - An example template definition of this substep is as follows:

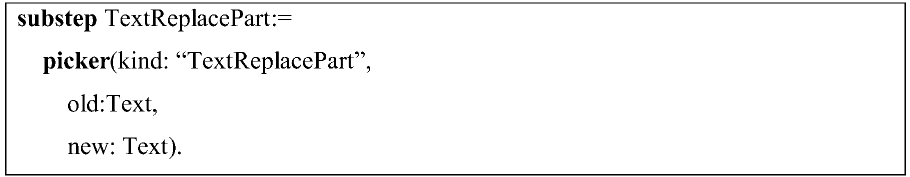

***Span Between Times Substep*** - An example template definition of this substep is as follows:

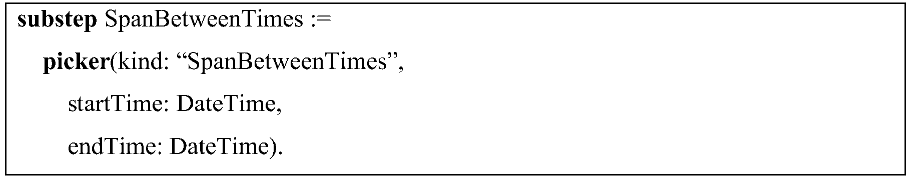

***Date Time Offset Substep*** - An example template definition of this substep is as follows:

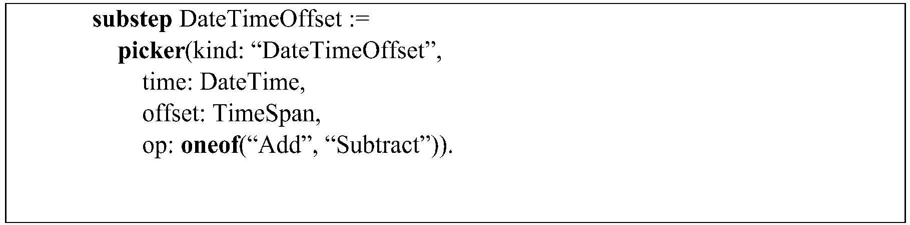

***Units in Span Substep*** - An example template definition of this substep is as follows:

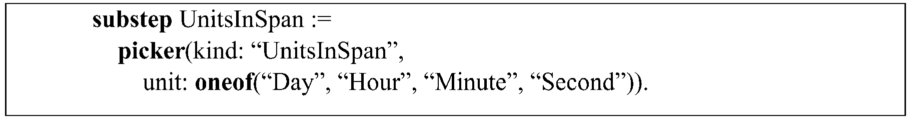

***Number Value Condition Substep*** - An example template definition of this substep is as follows:

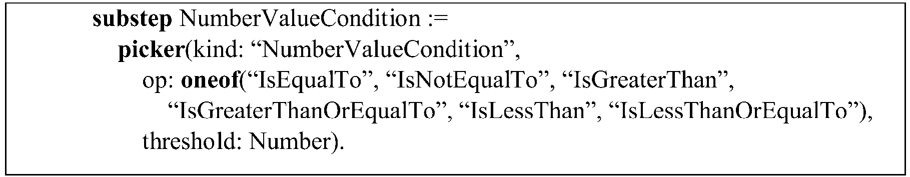

***Number Range Condition Substep*** - An example template definition of this substep is as follows:

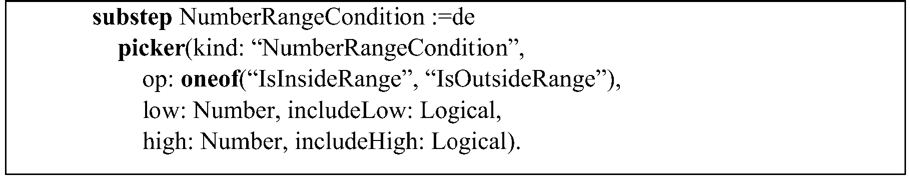

***Number Enumeration Condition Substep* -** An example template definition of this substep is as follows:

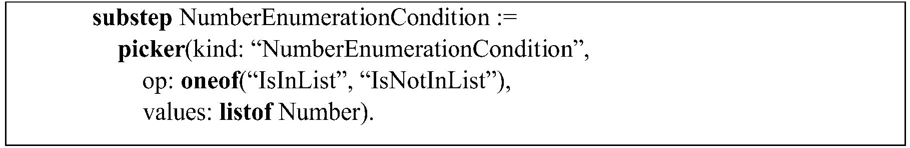

***Number Becomes Substep* -** An example template definition of this substep is as follows:

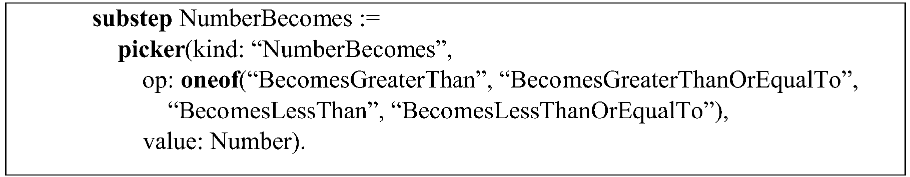

***Number Enters or Leaves Range Substep*** - An example template definition of this substep is as follows:

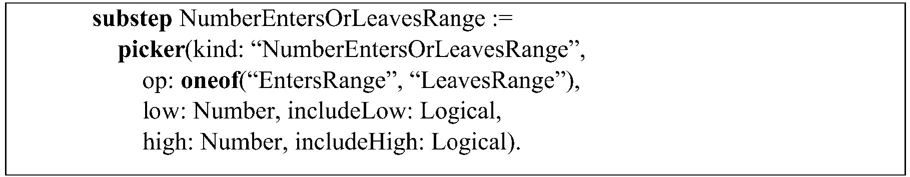

***Number Changes Substep*** - An example template definition of this substep is as follows:

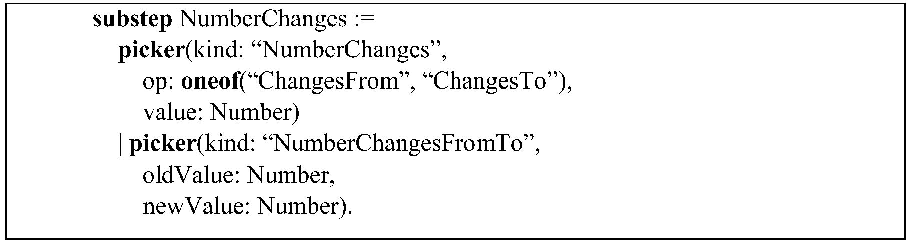

***Number Trends Substep*** - An example template definition of this substep is as follows:

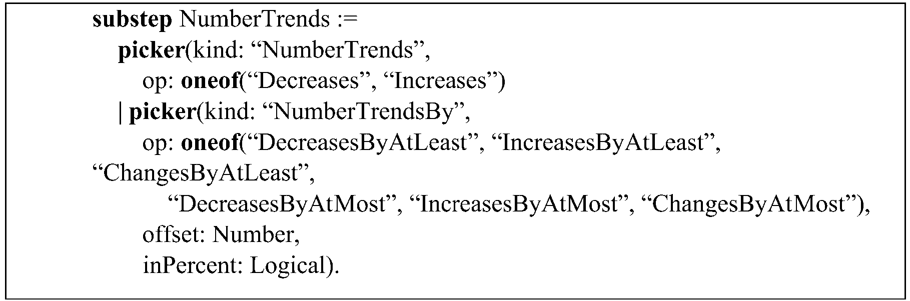

***Text Value Condition Substep* -** An example template definition of this substep is as follows:

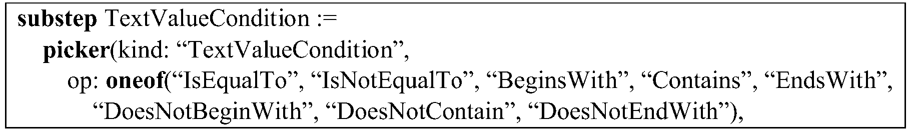

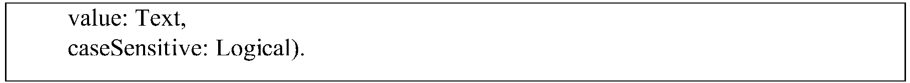

***Text Length Condition Substep*** - An example template definition of this substep is as follows:

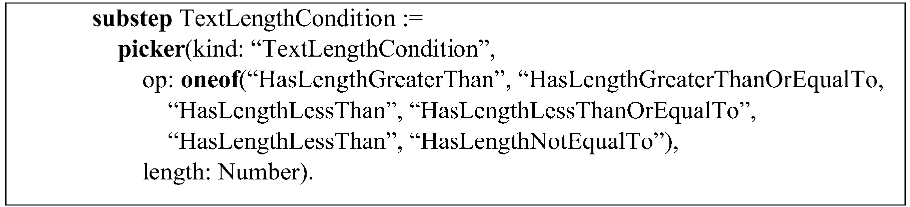

***Text Enumeration Condition Substep*** - An example template definition of this substep is as follows:

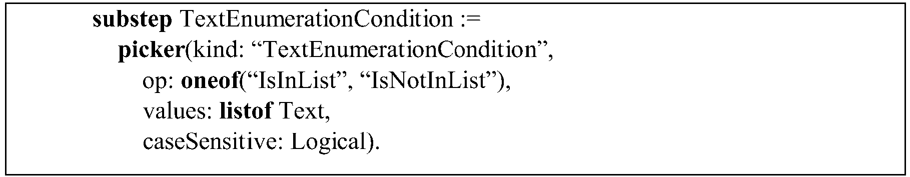

***Text Changes Substep* -** An example template definition of this substep is as follows:

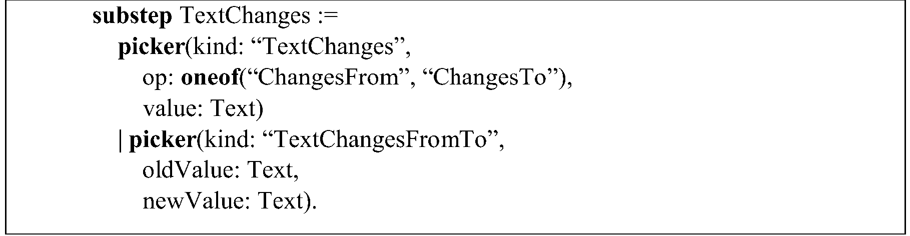

***Logical Mode Substep*** - An example template definition of this substep is as follows:

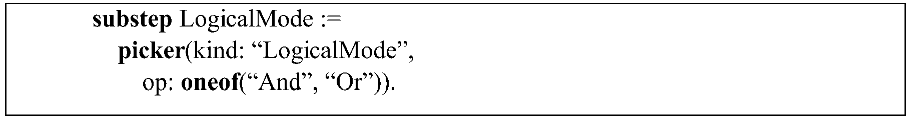

***Logical Value Condition Substep*** - An example template definition of this substep is as follows:

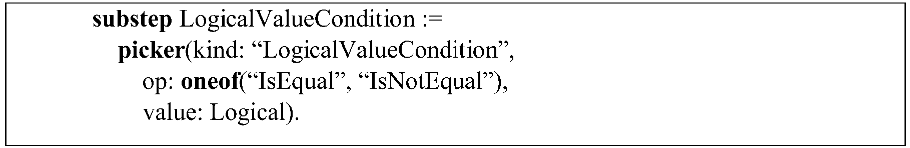

***Logical Becomes Substep*** - An example template definition of this substep is as follows:

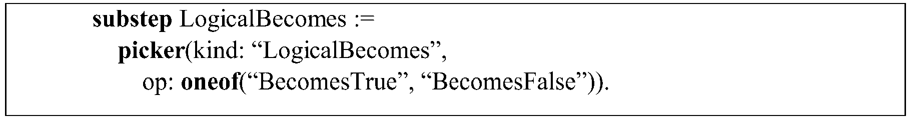

***Any Value Change Substep*** - An example template definition of this substep is as follows:

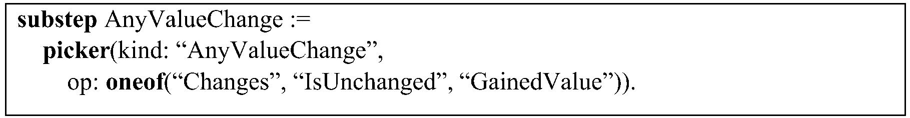

***Number Summary Substep* -** An example template definition of this substep is as follows:

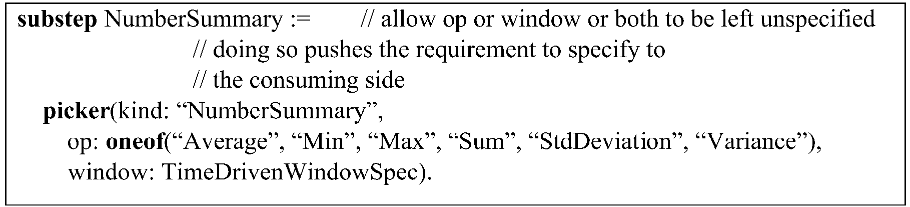

***Scalar Summary Substep* -** An example template definition of this substep is as follows:

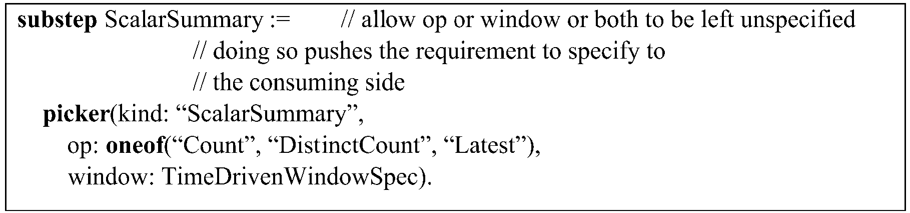

***Record Summary Substep* -** An example template definition of this substep is as follows:

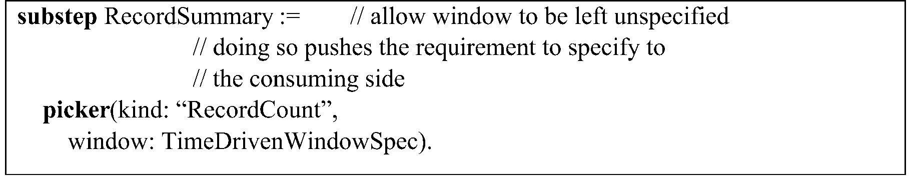

***No Heartbeat Substep*** - An example template definition of this substep is as follows:

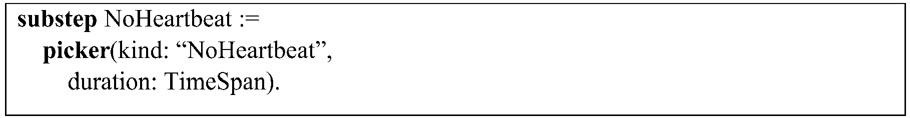

***On Every Value Substep*** - An example template definition of this substep is as follows:

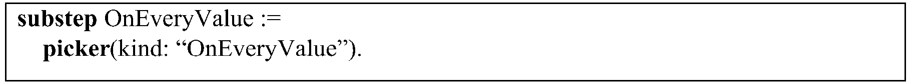

***Occurrence Option Substep*** - An example template definition of this substep is as follows:

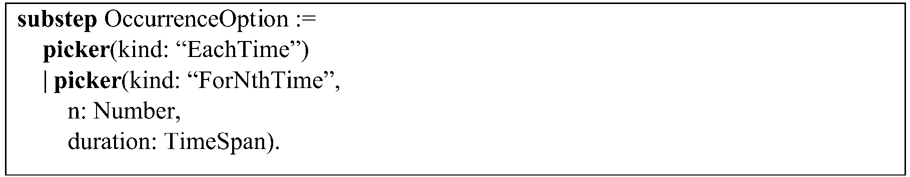

In the foregoing, the occurrence option "each time" is an example of a "constant picker." A constant picker provides a choice among pickers. In some examples, some of the choices (e.g., the "each time") requires no further user input.

***Sustained Period Option Substep*** - An example template definition of this substep is as follows:

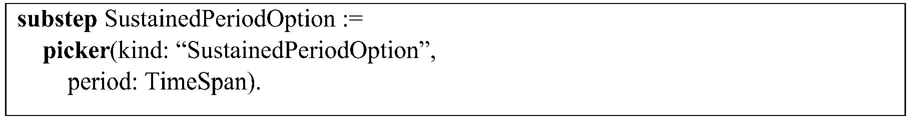

***Anomaly Detector Options Substep*** - An example template definition of this substep is as follows:

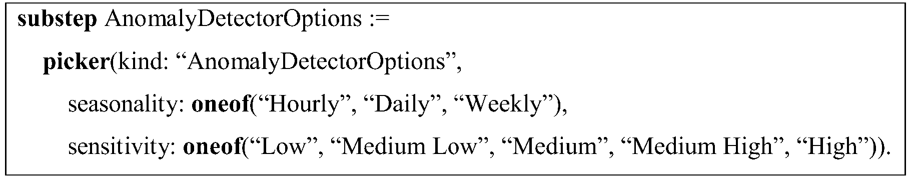

***E-mail Binding Substep* -** An example template definition of this substep is as follows:

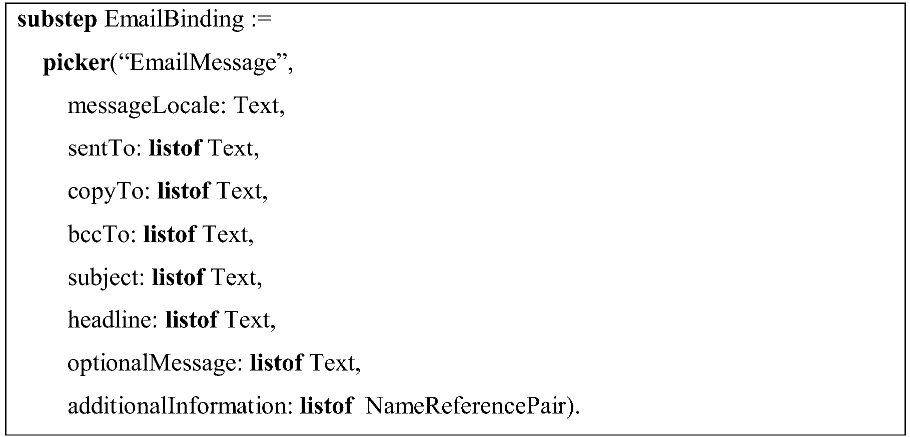

***Messaging Application Binding Substep*** - An example template definition of this substep is as follows:

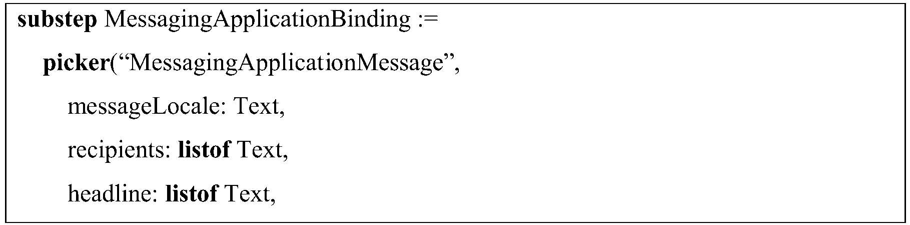

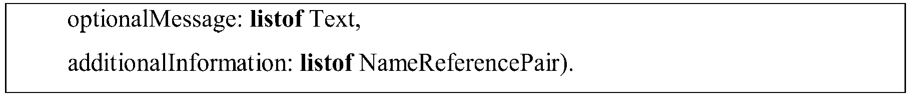

***Workflow and Process Automation Platform Binding Substep*** - An example template definition of this substep is as follows:

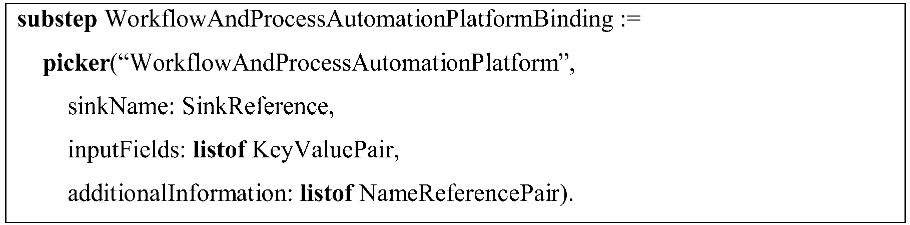

***Identity Provider Selection Service Incident Binding Substep*** - An example template definition of this substep is as follows:

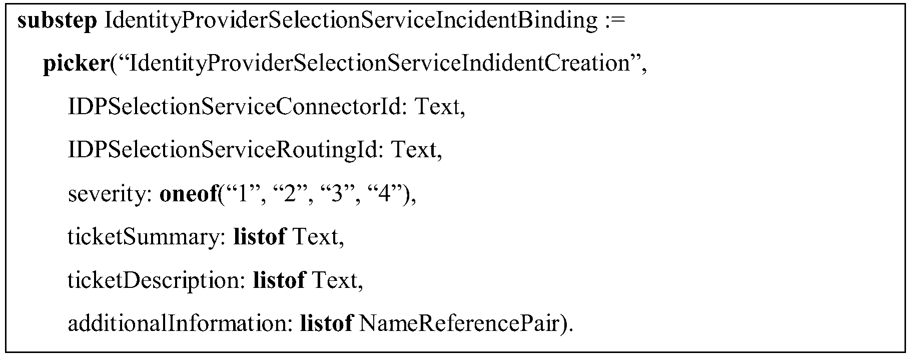

***Analytics Platform Item Binding Substep* -** An example template definition of this substep is as follows:

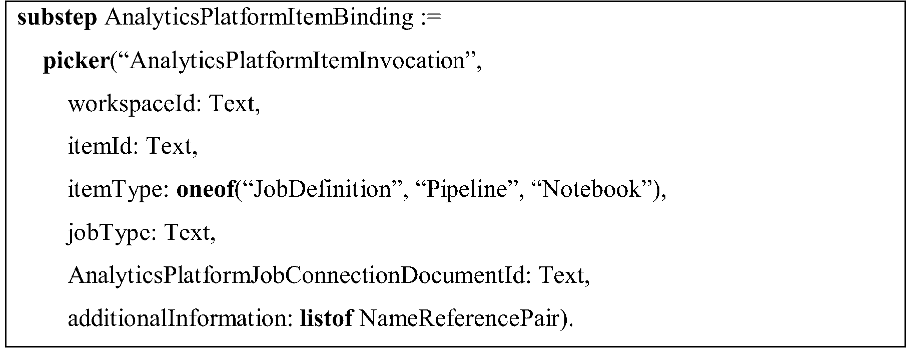

***Specific Instance Selector Substep*** - An example template definition of this substep is as follows:

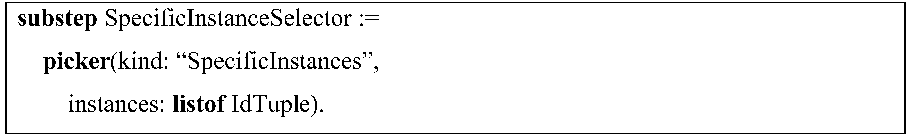

***Random Instance Selector Substep* -** An example template definition of this substep is as follows:

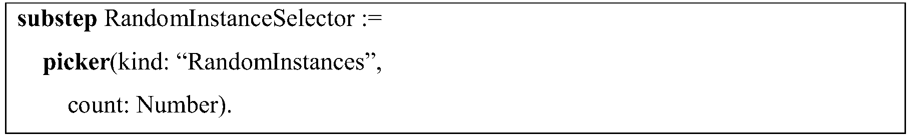

***Event Selector Substep*** - An example template definition of this substep is as follows:

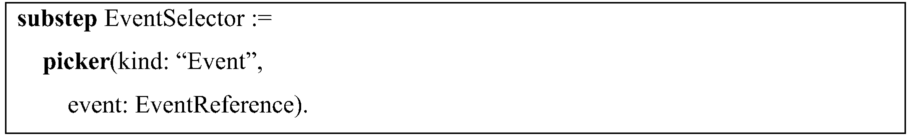

***Attribute Selector Substep*** - An example template definition of this substep is as follows:

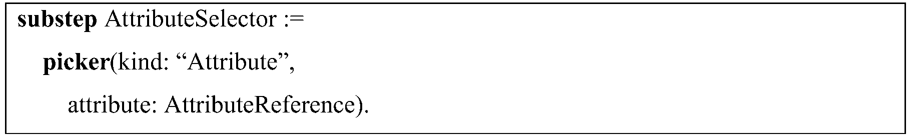

***Trigger Selector Substep*** - An example template definition of this substep is as follows:

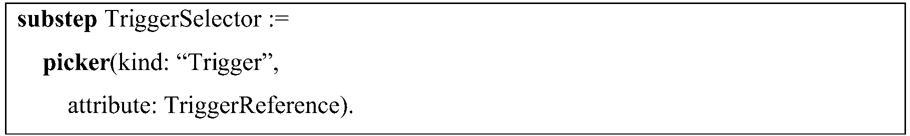

***Object Selector Substep*** - An example template definition of this substep is as follows:

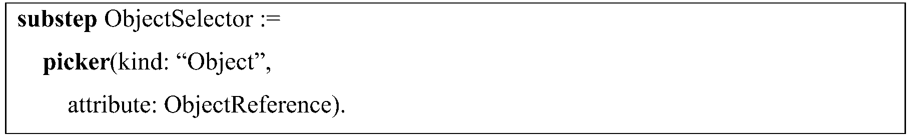

***Step Selector Substep*** - An example template definition of this substep is as follows:

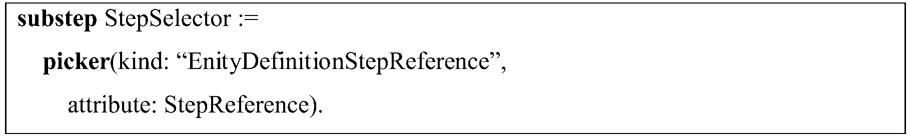

As described elsewhere herein, some pickers are nested within another picker. For instance, an auxiliary picker defines a constituent structure that fills in auxiliary types. In an aspect, an auxiliary picker comprises a single level of a nested picker, however, embodiments described herein are not so limited. Example template definitions of example auxiliary pickers are shown as follows.

***Attribute Reference Picker** -* An example template definition of this picker is as follows:

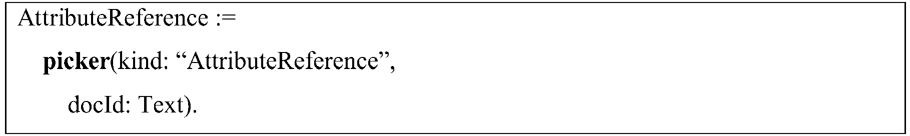

***Event Reference Picker** -* An example template definition of this picker is as follows:

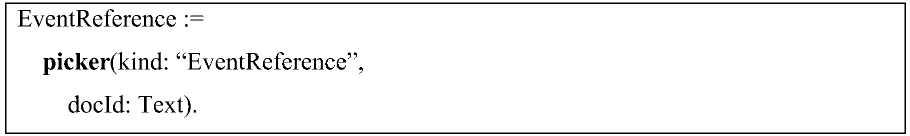

***Object Reference Picker** -* An example template definition of this picker is as follows:

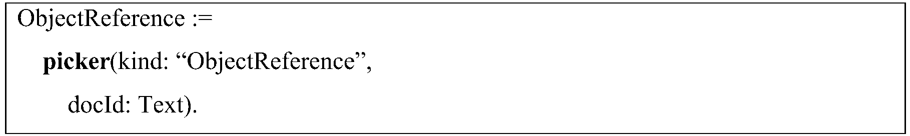

***Step Reference Picker** -* An example template definition of this picker is as follows:

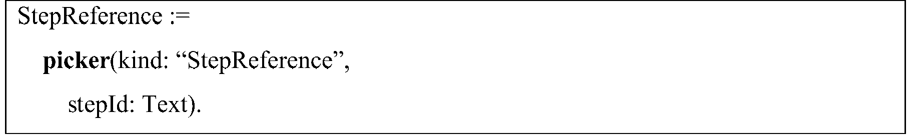

***Sink Reference Picker -*** An example template definition of this picker is as follows:

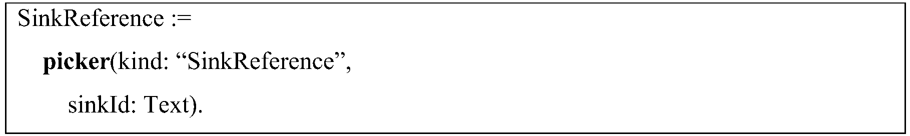

***Time Driven Window Spec Picker** -* An example template definition of this picker is as follows:

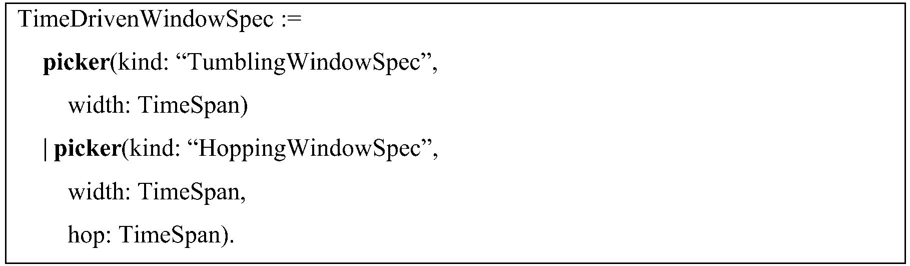

***Scalar Type Picker*** - An example template definition of this picker is as follows:

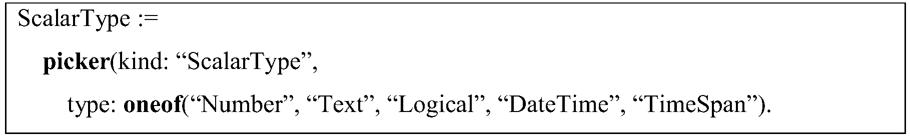

***Key Value Pair Picker** -* An example template definition of this picker is as follows:

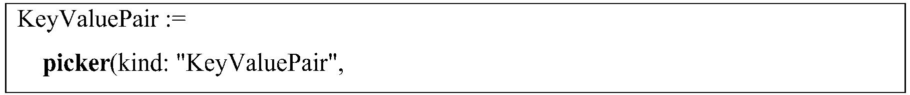

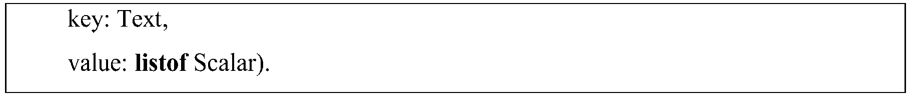

***Name Reference Pair Picker** -* An example template definition of this picker is as follows:

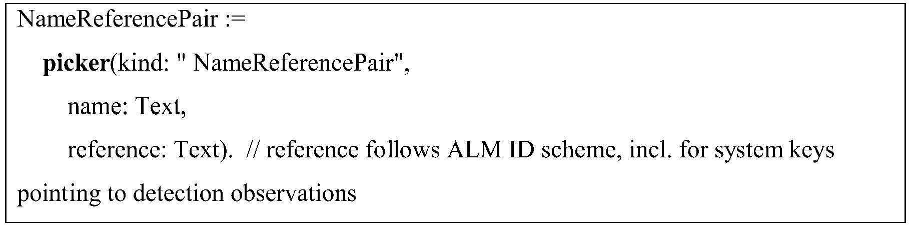

In some embodiments, the types of picker fields are the data types of what is needed, not the source of the data. Data can be user provided, API provided, application provided, or it can be a reference to an attribute or event field accessible in the context of the picker. For instance, consider the Email Binding picker described herein. It collects information in the form of lists of Text constants/references. For example, the "Headline" is ultimately the result of concatenating the provided list of constant Text values or references to Text values, allowing an e-mail's headline to contain embedded enrichment information. In this example, enrichment values are provided in the type "Text" for email protocols. In an embodiment, other typed values are converted to Text upstream (e.g., by the UI or by activator 104 of FIG. 1). For instance, in an embodiment, a formatting requirement rule is used to ensure that user input received in a UI is of an acceptable type. With continued reference to the example described with respect to the Email Binding picker, an example for a Headline specification could be as follows:
["Warning: The truck", FieldReference(TypedEvent("TruckTelemetry"), "TruckID"), "is overheating"]

The headline of an email sent under this specification could be as follows:
"Warning: The truck T41G3 is overheating."

Thus, several examples of templates, constructors, steps, substeps, and pickers have been described.

### IV. Example Filled Template Embodiments

Several example templates have been described herein. In an embodiment, a valid expansion of a grammatical definition of a template leads to a valid nested form structure. The nested form structure is utilized to gather information for constructing a template's respective conceptual entity. The form structure filled with the gathered information is a declaration of what to construct.

Consider the following **Filled Attribute Trigger Template,** representative of a filled-in Attribute Trigger template.

| **Filled Attribute Trigger Template** | |
|---|---|
| 1: | trigger Attribute Trigger |
| 2: | step ScalarSelectStep: |
| 3: | substep AttributeSelector: |
| 4: | {kind: "Attribute", attribute: "Package/Humidity"} |
| 5: | step ScalarDetectStep: |
| 6: | substep NumberTrends: |
| 7: | {kind: "NumberTrendsBy", op: "IncreasesBy", offset: 10, inPercent: true} |
| 8: | substep OccurenceOption: |
| 9: | {kind: "ForNthTime", n:3, duration: 5min} |
| 10: | step DimensionalFilterStep: |
| 11: | substep AttributeSelector: |
| 12: | {kind: "Attribute", attribute: "Package/Classification"} |
| 13: | substep TextValue: |
| 14: | {kind: "TextValue", op: "IsNotEqualTo", value: "Insensitive"} |
| 15: | step DimensionalFilterStep: |
| 16: | substep AttributeSelector: |
| 17: | {kind: "Attribute", attribute: "Package/Shipper"} |
| 18: | substep TextValue: |
| 19: | {kind: "TextValue", op: "BeginsWith", value: "Trusted"} |
| 20: | step ActStep: |
| 21: | substep EmailBinding: |
| 22: | {kind: "EmailMessage", SentTo: "{Package/Shipper/Contact}", Subject: ["Package ", "{Package/ID}" , " is repeatedly becoming too humid"\| |

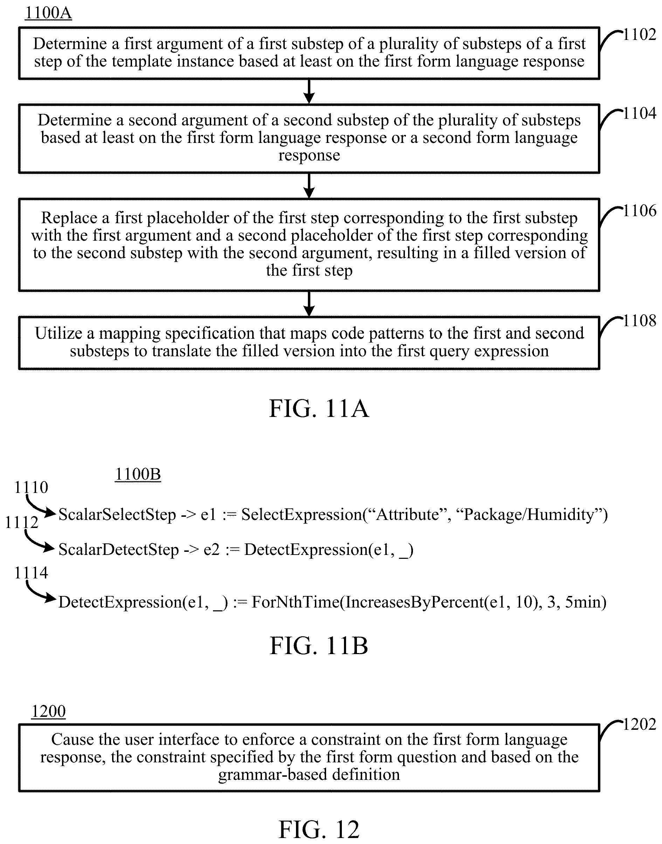

In the foregoing **Filled Attribute Trigger Template,** nested levels of constructor, steps, and substeps are shown. In an embodiment, activator 104 of FIG. 1 operates to guide a UI or application as described elsewhere herein utilizing grammar definitions along paths of choices. For instance, activator 104 causes a form question to be presented in UI 110 requesting selection of a constructor template. Activator 104 receives a response indicating selection of the "Attribute Trigger Template". In another embodiment, activator 104 guides an API client (e.g., an interactive client service) by presenting form questions to the client and receiving responses to the questions from the client. In this embodiment, activator 104 provides an extensible interface between the client and query engine 120 (or a model) without requiring the client to know the functional language of query engine 120 (or the model), thereby reducing compute resources expended by the client or in development of the client. To better understand the operation of activator 104 with respect to **Filled Attribute Trigger Template** and the foregoing non-limiting example, FIG. 11A is described. FIG. 11A shows a flowchart 1100A of a process for translating based at least on a template, in accordance with an embodiment. Activator 104 of FIG. 2 operates according to flowchart 1100A, in an embodiment. Note that not all steps of flowchart 1100A need be performed in all embodiments. Further structural and operational embodiments will be apparent to persons skilled in the relevant art(s) based on the following description of FIG. 11A.

Prior to step 1102 of flowchart 1100A, activator 104 performs steps similar to those described with respect to steps 304 and 306 of flowchart 300A of FIG. 3A. For instance, activator 104 generates a form, a series of form questions, or a first form question and causes the generated form and/or question(s) to be presented in UI 110. In embodiments, a form question can be skipped or repeated. In some embodiments, e.g., in a similar manner as described with respect to step 304 of flowchart 300A, activator 104 causes display of a first form question. Activator 104 receives a response to the first form question in a similar manner as described with respect to step 306 of flowchart 300A. In a non-limiting example described with respect to **Filled Attribute Trigger Template,** the first form question causes UI 110 to display a prompt for selection of a step of the Attribute Trigger construct. In this example, suppose the received first response comprises a selection corresponding to the "ScalarDetectStep" in line 5 of **Filled Attribute Trigger Template.** In an embodiment, activator 104 operates according to flowchart 1100A to generate additional questions and complete **Filled Attribute Trigger Template.**

As shown in FIG. 11A, flowchart 1100A begins with step 1102. In step 1102, a first argument of a first substep is determined based at least on the first form language response. For instance, suppose the first question (or a subsequent question) further comprised a form question that caused UI 110 to display a prompt for selection of a trend the ScalarDetectStep was to detect with respect to the attribute selected in the ScalarSelectStep. In an aspect, this question is included in the first form question. Alternatively, it is provided to computing device 102 subsequent to activator 104 receiving the selection of the ScalarDetectStep. In some embodiments, the receipt comprises a series of questions and responses. For instance, subsequent to receiving the selection of the ScalarDetectStep, activator 104 generates a second form question causing UI 110 to display a prompt for a selection of a substep. Activator 104 receives the selection of the substep (e.g., corresponding to the "NumberTrends" substep in line 6 of **Filled Attribute Trigger Template**). Responsive to receiving a response to the second form question, activator 104 generates a third form question causing UI 110 to display a prompt related to the picker of the substep (e.g., the picker corresponding to the JSON object in line 7 of **Filled Attribute Trigger Template**)**.** In an embodiment, translator 114 determines the selected picker is a first argument of the NumberTrends substep based on the response received from developer application 108.

In embodiments, activator 104 generates subsequent form questions based on the grammar definition framework of constructors, steps, substeps, and pickers within a template.

In step 1104, a second argument of a second subset of the plurality of unordered substeps is determined based on the first form language response or a second form language response. For instance, depending on the implementation, translator 114 determines additional arguments to pass in respective subsets based on the same or different responses received from developer application 108. For instance, with respect to **Filled Attribute Trigger Template,** suppose translator 114 causes a form question to be presented in UI 110 requesting selection of an occurrence of the detected trend corresponding to the substep shown in line 8 of **Filled Attribute Trigger Template.** In an example, this selection is received in the same response as the selection of the NumberTrends substep. Alternatively, it is received as a separate (e.g., subsequent) response. Subsequent to (or as part of) this response, a form question related to the picker corresponding to the JSON object in line 9 of **Filled Attribute Trigger Template** is provided to computing device 102 in a similar manner as the non-limiting example described with respect to step 1102.

In step 1106, a first placeholder of the first step corresponding to the first substep is replaced with the first argument and a second placeholder of the first step corresponding to the second substep is replaced with the second argument, resulting in a filled version of the first step. For example, translator 114 generates lines 2-9 of **Filled Attribute Trigger Template** by replacing a first portion of the attribute trigger template with the first argument determined in step 1102 and replacing a second portion of the attribute trigger template with the second argument determined in step 1104. In an embodiment, translator 114 utilizes grammar framework 128 to convert received responses into corresponding lines of the filled template. In an embodiment, translator 114 recursively descends the structure of the template and translates each filled step into an expression and chains the expressions. For instance, FIG. 11B shows an example of recursive translation of the ScalarSelectStep (translation 1110) and ScalarDetectStep (translation 1112). FIG. 11B also shows the subsequent building of the ScalarDetectStep's expression (translation 1114) by inspecting filled substeps in set of substeps.

In step 1108, a mapping specification that maps code patterns to the first and second substeps is utilized to translate the filled version into the first query expression. For instance, translator 114 utilizes a mapping specification of grammar framework 128 to translate the filled version of lines 2-9 (and the rest of the filled template) into a query expression. In this example, the mapping specification maps code patterns to substeps of **Filled Attribute Trigger Template.** By converting templates using a mapping specification, such embodiments of translator 114 are able to leverage code patterns with variables to translate form language. Furthermore, translator 114 in a further embodiment can validate portions of the query expression as the filled template is translated into a query expression.

In the **Filled Attribute Trigger Template** example, a picker is represented as a JSON object. The JSON object captures values returned by the picker. The JSON objects in the example have a *kind* field that maintains the name of the picker used to create that object. The remaining fields correspond to the pickers' output parameters.

### V. Example Constraint Enforcement Embodiments

As described herein, embodiments of the present disclosure cause form questions to be presented in a UI, wherein the form question corresponds to a grammar-based definition. In some embodiments, form generator 112 operates to cause a constraint to be placed on a response to a form question. For instance, FIG. 12 shows an example flowchart of a process for enforcing a constraint on a first form question, in accordance with an embodiment. Form generator 112 of FIG. 2 operates according to flowchart 1200, in an embodiment. Note that not all steps of flowchart 1200 need be performed in all embodiments. Further structural and operational embodiments will be apparent to persons skilled in the relevant art(s) based on the following description of FIG. 12 with respect to FIG. 2.

Flowchart 1200 comprises step 1202, which is a substep of , in an embodiment. In step 1202, the UI is caused to enforce a constraint on the first form response, the constraint specified by the first form question and based on the grammar-based definition. For example, form generator 112 in an example embodiment causes developer application 108 and/or UI 110 to enforce constraints specified by form question 206 and/or form question 214. Example constraints include, but are not limited to, a format of a response (e.g., an alphanumeric format, a numeric format, a format with symbols, a format without symbols, an alphabet format, a float numeric format, an integer numeric format, and/or the like), a minimum number of characters, a maximum number of characters, a minimum number of selections, a maximum number of selections, forbidden words or phrases, a limitation on a numeric (e.g., a number within a predetermined range), a syntax constraint (e.g., a syntax of an e-mail, a syntax of a phone number, a syntax of a number within a range, a syntax of a currency, a syntax of a form language sentence or phrase, and/or the like), and/or any other type of constraint to be enforced on a response. In embodiments, grammar framework 128 comprises definitions that map the constraints to questions or data. In an embodiment, if a response is selected or entered that does not satisfy the constraints, UI 110 presents an error and a request for a new response. In accordance with another embodiment, UI 110 prevents selection or entrance of a response that does not satisfy the constraint (e.g., prevent selection of more than a maximum number of options, prevent input of non-numerical input in a numeric-only response, and/or the like). By causing the UI or developer application to enforce constraints, form generator 112 reduces a likelihood that a form question has to be repeated or a form response leads to an error in query expression generation, thereby improving operation of the system and reducing compute resources.

### VI. Example UI Embodiments

As described herein, embodiments of the present disclosure cause declarative form questions to be presented in a UI of a computing device (e.g., UI 100). UIs can be configured in various ways, in embodiments. For example, FIG. 13 shows an example UI 1300, in accordance with an embodiment. In an embodiment, UI 1300 is an example of UI 110. In an embodiment, UI 1300 represents a window displayed in UI 110. In an embodiment, UI 1300 is a UI of an application for developing computer programs and/or models (e.g., developer application 108). As shown in FIG. 13, UI 1300 displays a question prompt "What would you like to create?" In an embodiment, the displayed prompt is a form language prompt corresponding to a first form question received from activator 104 of FIG. 1. As shown in FIG. 13, UI 1300 also shows a selectable dropdown menu. In an embodiment, a user can interact with the dropdown menu to select a response to the question prompt. In an embodiment, responsive to user selection, the selected response is provided to activator 104 along with form context as a first response.

UI 1300 of FIG. 13 shows an example UI with a dropdown menu; however, other types of form questions can allow or utilize other types of responses. For instance, FIG. 14 shows an example UI 1400, in accordance with another embodiment. UI 1400 is an example of UI 110. As shown in FIG. 14, UI 1400 displays a question prompt "What condition(s) would you like to monitor?" In an embodiment, this question prompt is a follow-up prompt to the question prompt of FIG. 13. As shown in FIG. 14, UI 1400 displays a checkbox form with selectable options. Depending on the implementation, the form allows for selection of one or multiple options.

In some embodiments, a UI enables a freeform/text-based response. For instance, FIG. 15 shows an example UI 1500, in accordance with another embodiment. UI 1500 is an example of UI 110. As shown in FIG. 15, UI 1500 displays a question prompt "What are the trigger conditions for humidity of the package?" In an embodiment, this question prompt is a follow-up prompt to the question prompt of FIG. 14. As shown in FIG. 15, UI 1500 displays a textbox allowing a user to interact therewith in order to provide a text-based response to the prompt. For instance, as shown in FIG. 15, suppose a user provides the response "When humidity increases by 10% for more than five minutes." In this example, activator 104, subsequent to receiving the response, fills in a corresponding template passing humidity increasing as a number trend argument, 10% as an offset argument of the number trend, and an occurrence duration of five minutes as an argument.

### VII. Example Computer System Implementation

Embodiments of translation of form language into functional language described herein are implemented in hardware, or hardware combined with one or both of software and/or firmware. For example activator 104, developer application 108, UI 110, form generator 112, translator 114, action handler 118, query engine 120, condition monitor 124, UI 1300, UI 1400, UI 1500, and/or the components described therein, the steps of flowcharts 300A, 300B, 300C, 400, 500, 600, 700, 800, 900, 1000, 1100A, and/or 1200, are each implemented as computer program code/instructions configured to be executed in one or more processors and stored in a computer readable storage medium. Alternatively, computing device 102, activator 104, developer application 108, UI 110, form generator 112, translator 114, action handler 118, query engine 120, condition monitor 124, monitored device 126, UI 1300, UI 1400, UI 1500, and/or the components described therein, the steps of flowcharts 300A, 300B, 300C, 400, 500, 600, 700, 800, 900, 1000, 1100A, and/or 1200, are implemented in one or more SoCs (system on chip). An SoC includes an integrated circuit chip that includes one or more of a processor (e.g., a central processing unit (CPU), microcontroller, microprocessor, digital signal processor (DSP), etc.), memory, one or more communication interfaces, and/or further circuits, and optionally executes received program code and/or include embedded firmware to perform functions.

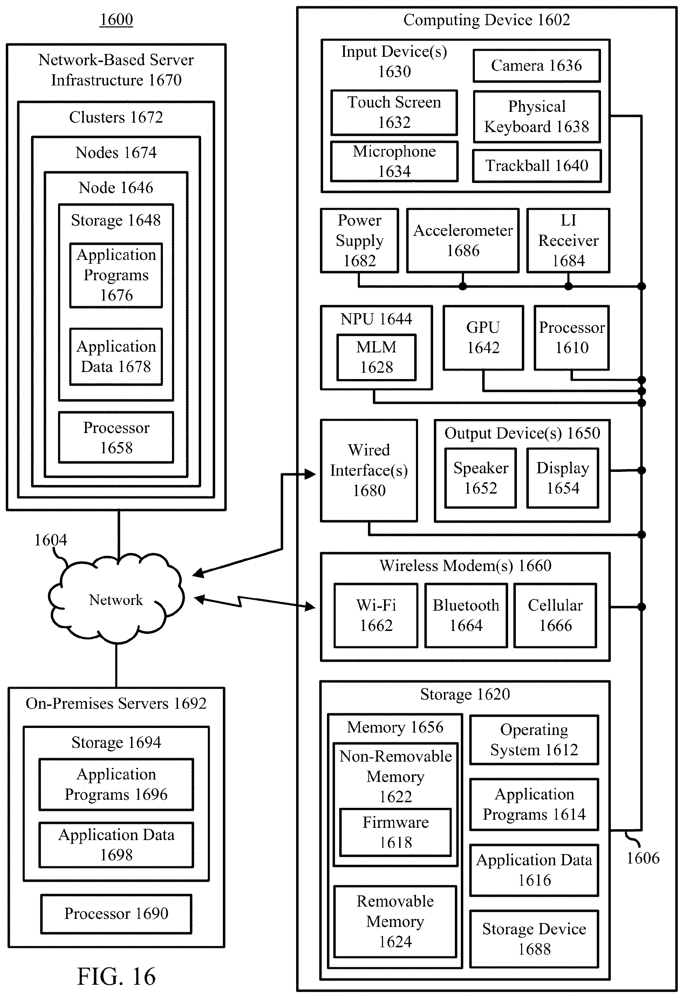

Embodiments disclosed herein can be implemented in one or more computing devices that are mobile (a mobile device) and/or stationary (a stationary device) and include any combination of the features of such mobile and stationary computing devices. Examples of computing devices in which embodiments are implementable are described as follows with respect to FIG. 16. FIG. 16 shows a block diagram of an exemplary computing environment 1600 that includes a computing device 1602. Computing device 1602 is an example of computing device 102, activator 104, condition monitor 124, and/or monitored device 126, which each include one or more of the components of computing device 1602. In some embodiments, computing device 1602 is communicatively coupled with devices (not shown in FIG. 16) external to computing environment 1600 via network 1604. Network 1604 comprises one or more networks such as local area networks (LANs), wide area networks (WANs), enterprise networks, the Internet, etc. In examples, network 1604 includes one or more wired and/or wireless portions. In some examples, network 1604 additionally or alternatively includes a cellular network for cellular communications. Computing device 1602 is described in detail as follows.

Computing device 1602 can be any of a variety of types of computing devices. Examples of computing device 1602 include a mobile computing device such as a handheld computer (e.g., a personal digital assistant (PDA)), a laptop computer, a tablet computer, a hybrid device, a notebook computer, a netbook, a mobile phone (e.g., a cell phone, a smart phone, etc.), a wearable computing device (e.g., a head-mounted augmented reality and/or virtual reality device including smart glasses), or other type of mobile computing device. In an alternative example, computing device 1602 is a stationary computing device such as a desktop computer, a personal computer (PC), a stationary server device, a minicomputer, a mainframe, a supercomputer, etc.

As shown in FIG. 16, computing device 1602 includes a variety of hardware and software components, including a processor 1610, a storage 1620, a graphics processing unit (GPU) 1642, a neural processing unit (NPU) 1644, one or more input devices 1630, one or more output devices 1650, one or more wireless modems 1660, one or more wired interfaces 1680, a power supply 1682, a location information (LI) receiver 1684, and an accelerometer 1686. Storage 1620 includes memory 1656, which includes non-removable memory 1622 and removable memory 1624, and a storage device 1688. Storage 1620 also stores an operating system 1612, application programs 1614, and application data 1616. Wireless modem(s) 1660 include a Wi-Fi modem 1662, a Bluetooth modem 1664, and a cellular modem 1666. Output device(s) 1650 includes a speaker 1652 and a display 1654. Input device(s) 1630 includes a touch screen 1632, a microphone 1634, a camera 1636, a physical keyboard 1638, and a trackball 1640. Not all components of computing device 1602 shown in FIG. 16 are present in all embodiments, additional components not shown may be present, and in a particular embodiment any combination of the components are present. In examples, components of computing device 1602 are mounted to a circuit card (e.g., a motherboard) of computing device 1602, integrated in a housing of computing device 1602, or otherwise included in computing device 1602. The components of computing device 1602 are described as follows.

In embodiments, a single processor 1610 (e.g., central processing unit (CPU), microcontroller, a microprocessor, signal processor, ASIC (application specific integrated circuit), and/or other physical hardware processor circuit) or multiple processors 1610 are present in computing device 1602 for performing such tasks as program execution, signal coding, data processing, input/output processing, power control, and/or other functions. In examples, processor 1610 is a single-core or multi-core processor, and each processor core is single-threaded or multithreaded (to provide multiple threads of execution concurrently). Processor 1610 is configured to execute program code stored in a computer readable medium, such as program code of operating system 1612 and application programs 1614 stored in storage 1620. The program code is structured to cause processor 1610 to perform operations, including the processes/methods disclosed herein. Operating system 1612 controls the allocation and usage of the components of computing device 1602 and provides support for one or more application programs 1614 (also referred to as "applications" or "apps"). In examples, application programs 1614 include common computing applications (e.g., e-mail applications, calendars, contact managers, web browsers, messaging applications), further computing applications (e.g., word processing applications, mapping applications, media player applications, productivity suite applications), one or more machine learning (ML) models, as well as applications related to the embodiments disclosed elsewhere herein. In examples, processor(s) 1610 includes one or more general processors (e.g., CPUs) configured with or coupled to one or more hardware accelerators, such as one or more NPUs 1644 and/or one or more GPUs 1642.

Any component in computing device 1602 can communicate with any other component according to function, although not all connections are shown for ease of illustration. For instance, as shown in FIG. 16, bus 1606 is a multiple signal line communication medium (e.g., conductive traces in silicon, metal traces along a motherboard, wires, etc.) present to communicatively couple processor 1610 to various other components of computing device 1602, although in other embodiments, an alternative bus, further buses, and/or one or more individual signal lines is/are present to communicatively couple components. Bus 1606 represents one or more of any of several types of bus structures, including a memory bus or memory controller, a peripheral bus, an accelerated graphics port, and a processor or local bus using any of a variety of bus architectures.

Storage 1620 is physical storage that includes one or both of memory 1656 and storage device 1688, which store operating system 1612, application programs 1614, and application data 1616 according to any distribution. Non-removable memory 1622 includes one or more of RAM (random access memory), ROM (read only memory), flash memory, a solid-state drive (SSD), a hard disk drive (e.g., a disk drive for reading from and writing to a hard disk), and/or other physical memory device type. In examples, non-removable memory 1622 includes main memory and is separate from or fabricated in a same integrated circuit as processor 1610. As shown in FIG. 16, non-removable memory 1622 stores firmware 1618 that is present to provide low-level control of hardware. Examples of firmware 1618 include BIOS (Basic Input/Output System, such as on personal computers) and boot firmware (e.g., on smart phones). In examples, removable memory 1624 is inserted into a receptacle of or is otherwise coupled to computing device 1602 and can be removed by a user from computing device 1602. Removable memory 1624 can include any suitable removable memory device type, including an SD (Secure Digital) card, a Subscriber Identity Module (SIM) card, which is well known in GSM (Global System for Mobile Communications) communication systems, and/or other removable physical memory device type. In examples, one or more storage device 1688 are present that are internal and/or external to a housing of computing device 1602 and are or are not removable. Examples of storage device 1688 include a hard disk drive, an SSD, a thumb drive (e.g., a USB (Universal Serial Bus) flash drive), or other physical storage device.

One or more programs are stored in storage 1620. Such programs include operating system 1612, one or more application programs 1614, and other program modules and program data. Examples of such application programs include computer program logic (e.g., computer program code/instructions) for implementing activator 104, developer application 108, UI 110, form generator 112, translator 114, action handler 118, query engine 120, condition monitor 124, UI 1300, UI 1400, UI 1500, and/or the components described therein, the steps of flowcharts 3300A, 300B, 300C, 400, 500, 600, 700, 800, 900, 1000, 1100A, and/or 1200.

Storage 1620 also stores data used and/or generated by operating system 1612 and application programs 1614 as application data 1616. Examples of application data 1616 include web pages, text, images, tables, sound files, video data, and other data. In examples, application data 1616 is sent to and/or received from one or more network servers or other devices via one or more wired or wireless networks. Storage 1620 can be used to store further data including a subscriber identifier, such as an International Mobile Subscriber Identity (IMSI), and an equipment identifier, such as an International Mobile Equipment Identifier (IMEI). Such identifiers can be transmitted to a network server to identify users and equipment.

In examples, a user enters commands and information into computing device 1602 through one or more input devices 1630 and receives information from computing device 1602 through one or more output devices 1650. Input device(s) 1630 includes one or more touch screen 1632, microphone 1634, camera 1636, physical keyboard 1638 and/or trackball 1640 and output device(s) 1650 includes one or more of speaker 1652 and display 1654. Each input device(s) 1630 and output device(s) 1650 are integral to computing device 1602 (e.g., built into a housing of computing device 1602) or are external to computing device 1602 (e.g., communicatively coupled wired or wirelessly to computing device 1602 via wired interface(s) 1680 and/or wireless modem(s) 1660). Further input devices 1630 (not shown) can include a Natural UI (NUI), a pointing device (computer mouse), a joystick, a video game controller, a scanner, a touch pad, a stylus pen, a voice recognition system to receive voice input, a gesture recognition system to receive gesture input, or the like. Other possible output devices (not shown) can include piezoelectric or other haptic output devices. Some devices can serve more than one input/output function. For instance, display 1654 displays information, as well as operating as touch screen 1632 by receiving user commands and/or other information (e.g., by touch, finger gestures, virtual keyboard, etc.) as a UI. Any number of each type of input device(s) 1630 and output device(s) 1650 are present, including multiple microphones 1634, multiple cameras 1636, multiple speakers 1652, and/or multiple displays 1654.

In embodiments where GPU 1642 is present, GPU 1642 includes hardware (e.g., one or more integrated circuit chips that implement one or more of processing cores, multiprocessors, compute units, etc.) configured to accelerate computer graphics (two-dimensional (2D) and/or three-dimensional (3D)), perform image processing, and/or execute further parallel processing applications (e.g., training of neural networks, etc.). Examples of GPU 1642 perform calculations related to 3D computer graphics, include 2D acceleration and framebuffer capabilities, accelerate memory-intensive work of texture mapping and rendering polygons, accelerate geometric calculations such as the rotation and translation of vertices into different coordinate systems, support programmable shaders that manipulate vertices and textures, perform oversampling and interpolation techniques to reduce aliasing, and/or support very high-precision color spaces.

In examples, NPU 1644 (also referred to as an "artificial intelligence (AI) accelerator" or "deep learning processor (DLP)") is a processor or processing unit configured to accelerate artificial intelligence and machine learning applications, such as execution of machine learning (ML) model (MLM) 1628. In an example, NPU 1644 is configured for a data-driven parallel computing and is highly efficient at processing massive multimedia data such as videos and images and processing data for neural networks. NPU 1644 is configured for efficient handling of AI-related tasks, such as speech recognition, background blurring in video calls, photo or video editing processes like object detection, etc.

In embodiments disclosed herein that implement ML models, NPU 1644 can be utilized to execute such ML models, of which MLM 1628 is an example. For instance, where applicable, MLM 1628 is a generative AI model that generates content that is complex, coherent, and/or original. For instance, a generative AI model can create sophisticated sentences, lists, ranges, tables of data, images, essays, and/or the like. An example of a generative AI model is a language model. A language model is a model that estimates the probability of a token or sequence of tokens occurring in a longer sequence of tokens. In this example, a "token" is an atomic unit that the model is training on and making predictions on. Examples of a token include, but are not limited to, a word, a character (e.g., an alphanumeric character, a blank space, a symbol, etc.), a sub-word (e.g., a root word, a prefix, or a suffix). In other types of models (e.g., image based models) a token may represent another kind of atomic unit (e.g., a subset of an image). Examples of language models applicable to embodiments herein include large language models (LLMs) (e.g., BLOOM, LLAMAv2, KOSMOS-2, and/or the like), text-to-image AI image generation systems (e.g., DALL-E 2, Imagen, Midjourney, and/or the like), text-to-video AI generation systems (e.g., Imagen Video, CogVideo, and/or the like), etc. A large language model (LLM) is a language model that has a high number of model parameters. In examples, an LLM has millions, billions, trillions, or even greater numbers of model parameters. Model parameters of an LLM are the weights and biases the model learns during training. Some implementations of LLMs are transformer-based LLMs (e.g., the family of generative pre-trained transformer (GPT) models). A transformer is a neural network architecture that relies on self-attention mechanisms to transform a sequence of input embeddings into a sequence of output embeddings (e.g., without relying on convolutions or recurrent neural networks).

In further examples, NPU 1644 is used to train MLM 1628. To train MLM 1628, training data includes input features (attributes) and their corresponding output labels/target values (e.g., for supervised learning) is collected. A training algorithm is a computational procedure that is used so that MLM 1628 learns from the training data. Parameters/weights are internal settings of MLM 1628 that are adjusted during training by the training algorithm to reduce a difference between predictions by MLM 1628 and actual outcomes (e.g., output labels). In some examples, MLM 1628 is set with initial values for the parameters/weights. A loss function measures a dissimilarity between predictions by MLM 1628 and the target values, and the parameters/weights of MLM 1628 are adjusted to minimize the loss function. The parameters/weights are iteratively adjusted by an optimization technique, such as gradient descent. In this manner, MLM 1628 is generated through training by NPU 1644 to be used to generate inferences based on received input feature sets for particular applications. MLM 1628 is generated as a computer program or other type of algorithm configured to generate an output (e.g., a classification, a prediction/inference) based on received input features, and is stored in the form of a file or other data structure.

In examples, such training of MLM 1628 by NPU 1644 is supervised or unsupervised. According to supervised learning, input objects (e.g., a vector of predictor variables) and a desired output value (e.g., a human-labeled supervisory signal) train MLM 1628. The training data is processed, building a function that maps new data on expected output values. Example algorithms usable by NPU 1644 to perform supervised training of MLM 1628 in some implementations include support-vector machines, linear regression, logistic regression, Naive Bayes, linear discriminant analysis, decision trees, K-nearest neighbor algorithm, neural networks, and similarity learning.

In an example of supervised learning where MLM 1628 is an LLM, MLM 1628 can be trained by exposing the LLM to (e.g., large amounts of) text (e.g., predetermined datasets, books, articles, text-based conversations, webpages, transcriptions, forum entries, and/or any other form of text and/or combinations thereof). In examples, training data is provided from a database, from the Internet, from a system, and/or the like. Furthermore, an LLM can be fine-tuned using Reinforcement Learning with Human Feedback (RLHF), where the LLM is provided with the same input twice and provides two different outputs and a user ranks which output is preferred. In this example, the user's ranking is utilized to improve the model. Further still, in example embodiments, an LLM is trained to perform in various styles, e.g., as a completion model (a model that is provided a few words or tokens and generates words or tokens to follow the input), as a conversation model (a model that provides an answer or other type of response to a conversation-style prompt), as a combination of a completion and conversation model, or as another type of LLM model.

According to unsupervised learning, MLM 1628 is trained to learn patterns from unlabeled data. For instance, in embodiments where MLM 1628 implements unsupervised learning techniques, MLM 1628 identifies one or more classifications or clusters to which an input belongs. During a training phase of MLM 1628 according to unsupervised learning, MLM 1628 tries to mimic the provided training data and uses the error in its mimicked output to correct itself (i.e., correct weights and biases). In further examples, NPU 1644 perform unsupervised training of MLM 1628 according to one or more alternative techniques, such as Hopfield learning rule, Boltzmann learning rule, Contrastive Divergence, Wake Sleep, Variational Inference, Maximum Likelihood, Maximum A Posteriori, Gibbs Sampling, and backpropagating reconstruction errors or hidden state reparameterizations.

Note that NPU 1644 need not necessarily be present in all ML model embodiments. In embodiments where ML models are present, any one or more of processor 1610, GPU 1642, and/or NPU 1644 can be present to train and/or execute MLM 1628.

One or more wireless modems 1660 can be coupled to antenna(s) (not shown) of computing device 1602 and can support two-way communications between processor 1610 and devices external to computing device 1602 through network 1604, as would be understood to persons skilled in the relevant art(s). Wireless modem 1660 is shown generically and can include a cellular modem 1666 for communicating with one or more cellular networks, such as a GSM network for data and voice communications within a single cellular network, between cellular networks, or between the mobile device and a public switched telephone network (PSTN). In examples, wireless modem 1660 also or alternatively includes other radio-based modem types, such as a Bluetooth modem 1664 (also referred to as a "Bluetooth device") and/or Wi-Fi modem 1662 (also referred to as an "wireless adaptor"). Wi-Fi modem 1662 is configured to communicate with an access point or other remote Wi-Fi-capable device according to one or more of the wireless network protocols based on the IEEE (Institute of Electrical and Electronics Engineers) 802.11 family of standards, commonly used for local area networking of devices and Internet access. Bluetooth modem 1664 is configured to communicate with another Bluetooth-capable device according to the Bluetooth short-range wireless technology standard(s) such as IEEE 802.15.1 and/or managed by the Bluetooth Special Interest Group (SIG).

Computing device 1602 can further include power supply 1682, LI receiver 1684, accelerometer 1686, and/or one or more wired interfaces 1680. Example wired interfaces 1680 include a USB port, IEEE 1694 (FireWire) port, a RS-232 port, an HDMI (High-Definition Multimedia Interface) port (e.g., for connection to an external display), a DisplayPort port (e.g., for connection to an external display), an audio port, and/or an Ethernet port, the purposes and functions of each of which are well known to persons skilled in the relevant art(s). Wired interface(s) 1680 of computing device 1602 provide for wired connections between computing device 1602 and network 1604, or between computing device 1602 and one or more devices/peripherals when such devices/peripherals are external to computing device 1602 (e.g., a pointing device, display 1654, speaker 1652, camera 1636, physical keyboard 1638, etc.). Power supply 1682 is configured to supply power to each of the components of computing device 1602 and receives power from a battery internal to computing device 1602, and/or from a power cord plugged into a power port of computing device 1602 (e.g., a USB port, an A/C power port). LI receiver 1684 is useable for location determination of computing device 1602 and in examples includes a satellite navigation receiver such as a Global Positioning System (GPS) receiver and/or includes other type of location determiner configured to determine location of computing device 1602 based on received information (e.g., using cell tower triangulation, etc.). Accelerometer 1686, when present, is configured to determine an orientation of computing device 1602.

Note that the illustrated components of computing device 1602 are not required or all-inclusive, and fewer or greater numbers of components can be present as would be recognized by one skilled in the art. In examples, computing device 1602 includes one or more of a gyroscope, barometer, proximity sensor, ambient light sensor, digital compass, etc. In an example, processor 1610 and memory 1656 are co-located in a same semiconductor device package, such as being included together in an integrated circuit chip, FPGA, or system-on-chip (SOC), optionally along with further components of computing device 1602.

In embodiments, computing device 1602 is configured to implement any of the above-described features of flowcharts herein. Computer program logic for performing any of the operations, steps, and/or functions described herein is stored in storage 1620 and executed by processor 1610.

In some embodiments, server infrastructure 1670 is present in computing environment 1600 and is communicatively coupled with computing device 1602 via network 1604. Server infrastructure 1670, when present, is a network-accessible server set (e.g., a cloud-based environment or platform). As shown in FIG. 16, server infrastructure 1670 includes clusters 1672. Each of clusters 1672 comprises a group of one or more compute nodes and/or a group of one or more storage nodes. For example, as shown in FIG. 16, cluster 1672 includes nodes 1674. Each of nodes 1674 are accessible via network 1604 (e.g., in a "cloud-based" embodiment) to build, deploy, and manage applications and services. In examples, any of nodes 1674 is a storage node that comprises a plurality of physical storage disks, SSDs, and/or other physical storage devices that are accessible via network 1604 and are configured to store data associated with the applications and services managed by nodes 1674.

Each of nodes 1674, as a compute node, comprises one or more server computers, server systems, and/or computing devices. For instance, a node 1674 in accordance with an embodiment includes one or more of the components of computing device 1602 disclosed herein. Each of nodes 1674 is configured to execute one or more software applications (or "applications") and/or services and/or manage hardware resources (e.g., processors, memory, etc.), which are utilized by users (e.g., customers) of the network-accessible server set. In examples, as shown in FIG. 16, nodes 1674 includes a node 1646 that includes storage 1648 and/or one or more of a processor 1658 (e.g., similar to processor 1610, GPU 1642, and/or NPU 1644 of computing device 1602). Storage 1648 stores application programs 1676 and application data 1678. Processor(s) 1658 operate application programs 1676 which access and/or generate related application data 1678. In an implementation, nodes such as node 1646 of nodes 1674 operate or comprise one or more virtual machines, with each virtual machine emulating a system architecture (e.g., an operating system), in an isolated manner, upon which applications such as application programs 1676 are executed.

In embodiments, one or more of clusters 1672 are located/co-located (e.g., housed in one or more nearby buildings with associated components such as backup power supplies, redundant data communications, environmental controls, etc.) to form a datacenter, or are arranged in other manners. Accordingly, in an embodiment, one or more of clusters 1672 are included in a datacenter in a distributed collection of datacenters. In embodiments, exemplary computing environment 1600 comprises part of a cloud-based platform.

In an embodiment, computing device 1602 accesses application programs 1676 for execution in any manner, such as by a client application and/or a browser at computing device 1602.

In an example, for purposes of network (e.g., cloud) backup and data security, computing device 1602 additionally and/or alternatively synchronizes copies of application programs 1614 and/or application data 1616 to be stored at network-based server infrastructure 1670 as application programs 1676 and/or application data 1678. In examples, operating system 1612 and/or application programs 1614 include a file hosting service client configured to synchronize applications and/or data stored in storage 1620 at network-based server infrastructure 1670.

In some embodiments, on-premises servers 1692 are present in computing environment 1600 and are communicatively coupled with computing device 1602 via network 1604. On-premises servers 1692, when present, are hosted within an organization's infrastructure and, in many cases, physically onsite of a facility of that organization. On-premises servers 1692 are controlled, administered, and maintained by IT (Information Technology) personnel of the organization or an IT partner to the organization. Application data 1698 can be shared by on-premises servers 1692 between computing devices of the organization, including computing device 1602 (when part of an organization) through a local network of the organization, and/or through further networks accessible to the organization (including the Internet). Furthermore, in examples, on-premises servers 1692 serve applications such as application programs 1696 to the computing devices of the organization, including computing device 1602. Accordingly, in examples, on-premises servers 1692 include storage 1694 (which includes one or more physical storage devices such as storage disks and/or SSDs) for storage of application programs 1696 and application data 1698 and include a processor 1690 (e.g., similar to processor 1610, GPU 1642, and/or NPU 1644 of computing device 1602) for execution of application programs 1696. In some embodiments, multiple processors 1690 are present for execution of application programs 1696 and/or for other purposes. In further examples, computing device 1602 is configured to synchronize copies of application programs 1614 and/or application data 1616 for spill storage at on-premises servers 1692 as application programs 1696 and/or application data 1698.

Embodiments described herein may be implemented in one or more computing device 1602, network-based server infrastructure 1670, and on-premises servers 1692. For example, in some embodiments, computing device 1602 is used to implement systems, clients, or devices, or components/subcomponents thereof, disclosed elsewhere herein. In other embodiments, a combination of computing device 1602, network-based server infrastructure 1670, and/or on-premises servers 1692 is used to implement the systems, clients, or devices, or components/subcomponents thereof, disclosed elsewhere herein.

As used herein, the terms "computer program medium," "computer-readable medium," "computer-readable storage medium," and "computer-readable storage device," etc., are used to refer to physical hardware media. Examples of such physical hardware media include any hard disk, optical disk, SSD, other physical hardware media such as RAMs, ROMs, flash memory, digital video disks, zip disks, MEMs (microelectronic machine) memory, nanotechnology-based storage devices, and further types of physical/tangible hardware storage media of storage 1620. Such computer-readable media and/or storage media are distinguished from and non-overlapping with communication media, propagating signals, and signals per se. Stated differently, "computer program medium," "computer-readable medium," "computer-readable storage medium," and "computer-readable storage device" do not encompass communication media, propagating signals, and signals per se. Communication media embodies computer-readable instructions, data structures, program modules or other data in a modulated data signal such as a carrier wave. The term "modulated data signal" means a signal that has one or more of its characteristics set or changed in such a manner as to encode information in the signal. By way of example, and not limitation, communication media includes wireless media such as acoustic, RF, infrared, and other wireless media, as well as wired media. Embodiments are also directed to such communication media that are separate and non-overlapping with embodiments directed to computer-readable storage media.

As noted above, computer programs and modules (including application programs 1614) are stored in storage 1620. Such computer programs can also be received via wired interface(s) 1660 and/or wireless modem(s) 1660 over network 1604. Such computer programs, when executed or loaded by an application, enable computing device 1602 to implement features of embodiments discussed herein. Accordingly, such computer programs represent controllers of the computing device 1602.

Embodiments are also directed to computer program products comprising computer code or instructions stored on any computer-readable medium or computer-readable storage medium. Such computer program products include the physical storage of storage 1620 as well as further physical storage types.

### VIII. Additional Example Embodiments

A method is described herein. The method comprises: determining a template instance comprising a first grammar-based definition defining a first portion of the template instance and an association between the first portion of the template instance and a first function of a service; causing a first form question to be presented in a UI of the client computing device, the first form question corresponding to the grammar-based definition; receiving, from the client computing device, a first response comprising a first form language response and a first form context corresponding to the first grammar-based definition; determining, based on the first form context, to translate the first form language response in accordance with the association between the first portion of the template instance and the first function; translating the first form language response in accordance with the association between the first portion of the template instance and the first function, resulting in a first query expression; and causing the service to execute first query expression.

In a further embodiment of the foregoing method, said determining a template instance further comprises: receiving a selection of the template instance from a client computing device.

In a further embodiment of the foregoing method, said determining a template instance further comprises: causing a plurality of template options to be presented in the UI, the plurality of template options comprising an option corresponding to the template instance.

In a further embodiment of the foregoing method, said determining a template instance further comprises: receiving a request to generate the first query expression from an application executing on the client computing device; and determining the template instance based at least on an application type of the application.

In a further embodiment of the foregoing method, wherein the service is a query engine and said causing the service to execute the first query expression comprises:
utilizing the query engine to execute the first query expression with respect to a database.

In a further embodiment of the foregoing method, the first form question specifies a constraint based on the first grammar-based definition, and said causing the first form question to be presented in the UI comprises: causing the UI to enforce the constraint on the first form response.

In a further embodiment of the foregoing method, the first form question is a declarative question requesting input corresponding to an argument of the first portion of the template instance.

In a further embodiment of the foregoing method, wherein the first grammar-based definition further defines an expression graph format that specifies a parameter of the function. The template instance comprises a variable mapped to the parameter. Said translating the first form language response comprises: translating the first form language response into an expression graph in accordance with the expression graph format by defining the parameter based at least on a portion of the first form language response corresponding to the variable; and traversing the expression graph to generate the first query expression.

In a further embodiment of the foregoing method, the first form context specifies:
a type of question prompt of the first form question; a second form question the first form question is dependent on; a type of model activity associated with the first form question;
an argument of the first portion of the template instance; a constructor type of a constructor of the first portion of the template instance; or a model to be modified by the first query expression.

In a further embodiment of the foregoing method, the first form question comprises:
a first question prompt for a modeling activity defining data to be modeled, and a second question prompt for a modeling rule defining a condition to be measured with respect to the data; and the first response further comprises a second form language response corresponding to the second question prompt. Wherein the first form language response corresponds to the first question prompt.

In a further embodiment of the foregoing method, said determining to translate the first form language response further comprises: determining, based on the first form context, to translate the second form language response in accordance with the association between the first portion of the template instance and the function; and said translating the first form language response comprises: translating the first form language query response and the second form language query response in accordance with the association between the first portion of the template instance and the first function, resulting in the query expression.

In a further embodiment of the foregoing method, the method further comprises:
causing, based at least on the first form language response, a second form question to be presented in the UI; and receiving a second response comprising a second form language response and a second form context.

In a further embodiment of the foregoing method, the second form question corresponds to at least one of: the first grammar-based definition; or a second grammar-based definition defining a second portion of the template instance and an association between the second portion of the template instance and a second function of the service.

In a further embodiment of the foregoing method, said translating the first form language query response comprises: translating the first form language query response and the second form language query response in accordance with the association between the first portion of the template instance and the first function.

In a further embodiment of the foregoing method, the method further comprises:
translating the second form language query response in accordance with the association between the second portion of the template instance and the second function, resulting in a second query expression.

In a further embodiment of the foregoing method, the method further comprises:
causing the second query expression to be executed.

In a further embodiment of the foregoing method, the method further comprises:
generating a query plan comprising the first query expression and the second query expression.

In a further embodiment of the foregoing method, said causing the service to execute the first query expression comprises: causing the service to execute the query plan.

In a further embodiment of the foregoing method, the template instance comprises a sequence of steps, wherein a first step in the sequence of steps comprises the first portion of the template instance.

In a further embodiment of the foregoing method, the sequence of steps comprises a second step and the second step accepts an output of the first step as an argument thereof.

In a further embodiment of the foregoing method, the first step comprises a plurality of unordered substeps.

In a further embodiment of the foregoing method, a first substep of the plurality of unordered substeps comprises a record structure comprising a kind tag and a set of key/value pairs.

In a further embodiment of the foregoing method, said translating the first form language response comprises: determining a first argument of the first substep based at least on the first form language response; determining a second argument of a second substep of the plurality of unordered substeps based at least on the first form language response; replacing a first placeholder of the first step corresponding to the first substep with the first argument and a second placeholder of the first step corresponding to the second substep with the second argument, resulting in a filled version of the first step; utilizing a mapping specification that maps code patterns to the plurality of unordered substeps to translate the filled version into the first query expression.

In a further embodiment of the foregoing method, the method comprises: enabling a library to be imported into a computer program under development or a model under development; and based at least on the importing, enabling options in a form to be selected within the computer program or model under development to cause any of the foregoing methods to be performed. The library includes a form generator and a translator.

A system is described herein. The system configured to perform any of the foregoing methods.

A computing device associated with a user account is described herein. The computing device configured to perform any of the foregoing methods.

A computer readable storage medium is described herein. The computer readable storage medium comprising programming instructions encoded thereon. The programming instructions are structured to cause a processor to perform any of the foregoing methods.

### IX. Conclusion

References in the specification to "one embodiment," "an embodiment," "an example embodiment," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

In the discussion, unless otherwise stated, adjectives modifying a condition or relationship characteristic of a feature or features of an implementation of the disclosure, should be understood to mean that the condition or characteristic is defined to within tolerances that are acceptable for operation of the implementation for an application for which it is intended. Furthermore, if the performance of an operation is described herein as being "in response to" one or more factors, it is to be understood that the one or more factors may be regarded as a sole contributing factor for causing the operation to occur or a contributing factor along with one or more additional factors for causing the operation to occur, and that the operation may occur at any time upon or after establishment of the one or more factors. Still further, where "based on" is used to indicate an effect being a result of an indicated cause, it is to be understood that the effect is not required to only result from the indicated cause, but that any number of possible additional causes may also contribute to the effect. Thus, as used herein, the term "based on" should be understood to be equivalent to the term "based at least on."

Numerous example embodiments have been described above. Any section/subsection headings provided herein are not intended to be limiting. Embodiments are described throughout this document, and any type of embodiment may be included under any section/subsection. Furthermore, embodiments disclosed in any section/subsection may be combined with any other embodiments described in the same section/subsection and/or a different section/subsection in any manner.

Furthermore, example embodiments have been described above with respect to one or more running examples. Such running examples describe one or more particular implementations of the example embodiments; however, embodiments described herein are not limited to these particular implementations.

Moreover, according to the described embodiments and techniques, any components of systems, applications, computing devices, activators, storages, query engines, condition monitors, monitored devices, databases, UIs, and their functions may be caused to be activated for operation/performance thereof based on other operations, functions, actions, and/or the like, including initialization, completion, and/or performance of the operations, functions, actions, and/or the like.

In some example embodiments, one or more of the operations of the flowcharts described herein may not be performed. Moreover, operations in addition to or in lieu of the operations of the flowcharts described herein may be performed. Further, in some example embodiments, one or more of the operations of the flowcharts described herein may be performed out of order, in an alternate sequence, or partially (or completely) concurrently with each other or with other operations.

The embodiments described herein and/or any further systems, sub-systems, devices and/or components disclosed herein may be implemented in hardware (e.g., hardware logic/electrical circuitry), or any combination of hardware with software (computer program code configured to be executed in one or more processors or processing devices) and/or firmware.

While various embodiments have been described above, it should be understood that they have been presented by way of example only, and not limitation. It will be apparent to persons skilled in the relevant art that various changes in form and detail can be made therein without departing from the spirit and scope of the embodiments. Thus, the breadth and scope of the embodiments should not be limited by any of the above-described example embodiments, but should be defined only in accordance with the following claims and their equivalents.

## Claims

1. A system comprising:
a processor; and
a memory that stores program code structured to cause the processor to:
receive a selection of a template instance from a client computing device, the template instance comprising a grammar-based definition defining a portion of the template instance and an association between the portion of the template instance and a function of a service,
cause a first form question to be presented in a user interface (UI) of the client computing device, the first form question corresponding to the grammar-based definition,
receive, from the client computing device, a first response comprising a first form language response and a first form context corresponding to the grammar-based definition,
automatically determine, based on the first form context, to translate the first form language response in accordance with the association between the portion of the template instance and the function,
translate the first form language response in accordance with the association between the portion of the template instance and the function, resulting in a query expression, and
cause the service to execute the query expression.

2. The system of claim 1, at least one of:
wherein the first form question specifies a constraint based on the grammar-based definition, and to cause the first form question to be presented in the UI, the program code is further structured to cause the processor to:
cause the UI to enforce the constraint on the first form language response; and
wherein:
the grammar-based definition further defines an expression graph format that specifies a parameter of the function;
the template instance comprises a variable mapped to the parameter; and
to translate the first form language response, the program code is further structured to cause the processor to:
translate the first form language response into an expression graph in accordance with the expression graph format by defining the parameter based at least on a portion of the first form language response corresponding to the variable, and
traversing the expression graph to generate the query expression.

3. The system of claim 1 or 2, wherein the template instance comprises a sequence of steps comprising:
a first step comprising the portion of the template instance; and
a second step accepting an output of the first step as an argument thereof.

4. The system of claim 3, wherein the first step comprises a first substep and a second substep, and to translate the first form language response, the program code is further structured to cause the processor circuit to:
determine a first argument of the first substep based at least on the first form language response;
determine a second argument of the second substep based at least on the first form language response;
replace a first placeholder of the first step corresponding to the first substep with the first argument and a second placeholder of the first step corresponding to the second substep with the second argument, resulting in a filled version of the first step; and
utilize a mapping specification that maps code patterns to the first and second substeps to translate the filled version into the query expression.

5. The system of one of claims 1 to 4, wherein:
the first form question comprises:
a first question prompt for a modeling activity defining data to be modeled, and
a second question prompt for a modeling rule defining a condition to be measured with respect to the data; and
the first response further comprises a second form language response corresponding to the second question prompt,
wherein the first form language response corresponds to the first question prompt.

6. The system of claim 5, wherein:
to automatically determine to translate the first form language response, the program code is further structured to cause the processor to:
automatically determine, based on the first form context, to translate the second form language response in accordance with the association between the portion of the template instance and the function, and
to translate the first form language response, the program code is further structured to cause the processor to:
translate the first form language response and the second form language response in accordance with the association between the portion of the template instance and the function, resulting in the query expression.

7. The system of one of claims 1 to 6, wherein the program code is further structured to cause the processor to:
cause, based at least on the first form language response, a second form question to be presented in the UI, the second form question corresponding to the grammar-based definition;
receive a second response comprising a second form language response and a second form context corresponding to the grammar-based definition; and
automatically determine, based on the second form context, to translate the second form language response in accordance with the association between the portion of the template instance and the function;
translate the first form language response and the second form language response in accordance with the association between the portion of the template instance and the function, resulting in the query expression.

8. A method comprising:
determining a template instance comprising a first grammar-based definition defining a first portion of the template instance and an association between the first portion of the template instance and a first function of a service;
causing a first form question to be presented in a UI of a client computing device, the first form question corresponding to the grammar-based definition;
receiving, from the client computing device, a first response comprising a first form language response and a first form context, the first form context describing a relationship between the first form language response and the first form question;
determining, based on the first form context, to translate the first form language response in accordance with the association between the first portion of the template instance and the first function;
translating the first form language response in accordance with the association between the first portion of the template instance and the first function, resulting in a first query expression; and
causing the service to execute the first query expression.

9. The method of claim 8, at least one of:
wherein said determining the template instance comprises:
causing a plurality of template options to be presented in the UI, the plurality of template options comprising an option corresponding to the template instance; and
receiving, from the client computing device, a selection of the option corresponding to the template instance;
wherein said determining the template instance comprises:
receiving a request to generate the first query expression from an application executing on the client computing device; and
determining the template instance based at least on an application type of the application;
wherein the first form question specifies a constraint based on the first grammar-based definition, and said causing the first form question to be presented in the UI comprises:
causing the UI to enforce the constraint on the first form language response;
wherein:
the grammar-based definition further defines an expression graph format specifying a parameter of the function;
the template instance comprises a variable mapped to the parameter; and
said translating the first form language response comprises:
translating the first form response into an expression graph in accordance with the expression graph format by defining the parameter based at least on a portion of the first form language response corresponding to the variable, and
traversing the expression graph to generate the first query expression; and
further comprising:
causing, based at least on the first form language response, a second form question to be presented in the UI, the second form question corresponding to a second grammar-based definition defining a second portion of the template instance and an association between the second portion of the template instance and a second function of the service;
receiving a second response comprising a second form language response and a second form context, the second form context describing a relationship between the second form language response and the second form question;
determining, based on the second form context, to translate the second form language response in accordance with the association between the second portion of the template instance and the second function;
translating the second form language response in accordance with the association between the second portion of the template instance and the second function, resulting in a second query expression; and
generating a query plan comprising the first query expression and the second query expression.

10. The method of claim 8 or 9, wherein the template instance comprises a sequence of steps comprising:
a first step comprising the first portion of the template instance; and
a second step accepting an output of the first step as an argument thereof.

11. The method of claim 10, wherein the first step comprises a first substep and a second substep, and said translating the first form language response comprises:
determining a first argument of the first substep based at least on the first form language response;
determining a second argument of the second substep based at least on the first form language response;
replacing a first placeholder of the first step corresponding to the first substep with the first argument and a second placeholder of the first step corresponding to the second substep with the second argument, resulting in a filled version of the first step; and
utilizing a mapping specification that maps code patterns to the first and second substeps to translate the filled version into the first query expression.

12. The method of one of claims 8 to 11, wherein:
the first form question comprises:
a first question prompt for a modeling activity defining data to be modeled, and
a second question prompt for a modeling rule defining a condition to be measured with respect to the data; and
the first response further comprises a second form language response corresponding to the second question prompt,
wherein the first form language response corresponds to the first question prompt.

13. The method of claim 12, wherein:
said determining to translate the first form language response comprises:
determining, based on the first form context, to translate the second form language response in accordance with the association between the first portion of the template instance and the first function, and
said translating the first form language response comprises:
translating the first form response and the second form response in accordance with the association between the first portion of the template instance and the first function, resulting in the first query expression.

14. A computer-readable storage medium having programming instructions encoded thereon, the programming instructions structured to cause a processor to perform a method comprising:
determining a template instance comprising a grammar-based definition defining a portion of the template instance and an association between the portion of the template instance and a function of a service;
causing a form question to be presented in a UI of a client computing device, the form question corresponding to the grammar-based definition;
receiving, from the client computing device, a response comprising a form language response and a form context, the form context corresponding to the grammar-based definition;
determining, based on the form context, to translate the form language response in accordance with the association between the portion of the template instance and the function;
translating the form language response in accordance with the association between the portion of the template instance and the function, resulting in a query expression; and causing the service to execute the query expression.

15. The computer-readable storage medium of claim 14, wherein said determining the template instance comprises:
receiving a request to generate the query expression from an application executing on the client computing device; and
determining the template instance based at least on an application type of the application.
